(19)

Europäisches
Patentamt

European
Patent Office

Office européen
des brevets

(11) **EP 4 439 995 A1**

(12) **EUROPEAN PATENT APPLICATION**
published in accordance with Art. 153(4) EPC

(43) Date of publication:
**02.10.2024 Bulletin 2024/40**

(21) Application number: **22909680.5**

(22) Date of filing: **29.11.2022**

(51) International Patent Classification (IPC):
**H04B 7/06** (2006.01)

(52) Cooperative Patent Classification (CPC):
**H04B 7/06; H04B 7/08; H04B 7/185**

(86) International application number:
**PCT/CN2022/135098**

(87) International publication number:
**WO 2023/116365 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2021 CN 202111567786**

(71) Applicant: **Huawei Technologies Co., Ltd.
Shenzhen, Guangdong 518129 (CN)**

(72) Inventors:
• **WANG, Xiaolu
Shenzhen, Guangdong 518129 (CN)**

• **LUO, Hejia
Shenzhen, Guangdong 518129 (CN)**
• **WANG, Jun
Shenzhen, Guangdong 518129 (CN)**
• **WANG, Yu
Shenzhen, Guangdong 518129 (CN)**
• **LI, Rong
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **SATELLITE COMMUNICATION METHOD AND APPARATUS**

(57) This application provides a satellite communication method and apparatus. The method includes: A second communication apparatus sends a configuration message. A first communication apparatus obtains the configuration message. The configuration message includes BH information corresponding to a first BWP. Therefore, the first communication apparatus performs communication based on the BH information corresponding to the first BWP, or the second communication apparatus performs communication based on the BH information corresponding to the first BWP. According to the method provided in this application, a beam hopping communication mechanism in satellite communication can be effectively improved.

First communication apparatus — Second communication apparatus

Configuration message, where the configuration message includes BH information corresponding to a first BWP — 401

The first communication apparatus performs communication based on the BH information corresponding to the first BWP — 402

Fifth message, where the fifth message includes BH information corresponding to a second BWP — 403

The first communication apparatus switches from the first BWP to the second BWP, and the first communication apparatus performs communication based on the BH information corresponding to the second BWP — 404

FIG. 4a

**EP 4 439 995 A1**

**Description**

This application claims priority to Chinese Patent Application No. 202111567786.1, filed with the China National Intellectual Property Administration on December 20, 2021 and entitled "SATELLITE COMMUNICATION METHOD AND APPARATUS", which is incorporated herein by reference in its entirety.

**TECHNICAL FIELD**

This application relates to the field of communication technologies, and in particular, to a satellite communication method and apparatus.

**BACKGROUND**

With the development of terrestrial communication, convenient data and voice services are provided for urban, suburban, and rural users. However, some sparsely populated or uninhabitable areas (for example, north and south poles, rainforests, mountainous areas, and oceans) are not covered with communication networks, and voice and data services cannot be provided for people living in or passing by these areas and transportation tools in or passing by these areas. In addition, non-terrestrial network (non-terrestrial networks, NTN) communication has characteristics of large coverage and flexible networking. For example, non-terrestrial network communication includes satellite communication, high-altitude platform communication, and air-to-ground (air to ground, ATG) communication. If terrestrial and non-terrestrial networks are combined, seamless coverage of communication services can be provided for more areas. Therefore, a current research focus is a future-oriented space-air-ground integrated communication network.

When the non-terrestrial network communication is compared with the terrestrial communication, satellite power is limited and a propagation loss is large in a satellite communication network. To improve a link budget and a signal-to-noise ratio of a terminal device, a satellite uses a large-scale antenna array to generate a formed beam with a larger gain, to overcome the large propagation loss. If the satellite transmits such beam, coverage of a single beam is reduced, and a quantity of beam positions is increased in coverage of the satellite. Hardware resources on the satellite are limited. A quantity of beams that are supported to be simultaneously transmitted is limited. For example, one satellite can simultaneously transmit eight beams, for example, simultaneously transmit signals covering eight beam positions (only as an example). In this case, the quantity of beams that are simultaneously transmitted by the satellite is far less than the quantity of beam positions in the coverage of the satellite, and the coverage of the satellite cannot be simultaneously covered. A time-division beam multiplexing manner needs to be used to provide services for terminal devices on different beams of the satellite. This manner is also referred to as beam hopping (beam-hopping, BH).

When services are provided for a terminal device in a beam hopping manner, how to provide a communication service for the terminal device needs to be urgently resolved.

**SUMMARY**

This application provides a satellite communication method and apparatus, to effectively improve a beam hopping communication mechanism in satellite communication and provide a communication service for a terminal device.

According to a first aspect, an embodiment of this application provides a satellite communication method. The method includes:

A first communication apparatus obtains a configuration message. The configuration message includes beam hopping BH information corresponding to a first bandwidth part (bandwidth part, BWP). The first communication apparatus performs communication based on the BH information corresponding to the first BWP.

It may be understood that the BWP shown in this embodiment of this application is referred to as a partial bandwidth, or may be referred to as a bandwidth part. This is not limited in this embodiment of this application. It may be understood that, that the first communication apparatus obtains the configuration message in this embodiment of this application may be further understood as that the first communication apparatus receives the configuration message, or the first communication apparatus receives the configuration message from a second communication apparatus.

In this embodiment of this application, when a service is provided for the first communication apparatus in a beam hopping manner, the configuration message includes the BH information corresponding to the first BWP, so that the first communication apparatus can communicate with the second communication apparatus based on the BH information. In other words, according to the method provided in this embodiment of this application, a beam hopping communication mechanism in a satellite communication system is effectively improved, so that the first communication apparatus and the second communication apparatus can properly communicate with each other.

In a possible implementation, the BH information includes at least one of: a BH dwell time, a BH start offset,

2

or a BH cycle periodicity.

In this embodiment of this application, the BH information includes the foregoing parameters. In this way, the first communication apparatus can obtain, based on the BH information, a dwell start time (which may also be referred to as an illumination start time) and a dwell time (which may also be referred to as an illumination time or illumination duration) of a beam in an area in which the first communication apparatus is located. Therefore, the first communication apparatus can effectively communicate with the second communication apparatus based on the BH information.

In a possible implementation, the BH information includes at least one of: a BH dwell time, a BH start offset, a BH cycle periodicity, or a start offset difference.

In a possible implementation, the BH information includes at least one of: uplink BH information or downlink BH information.

In this embodiment of this application, the BH information includes at least one of: the uplink BH information or the downlink BH information. In this way, the first communication apparatus can effectively learn of a dwell start time and a dwell time of an uplink beam in the area in which the first communication apparatus is located, and a dwell start time and a dwell time of a downlink beam in the area in which the first communication apparatus is located. Therefore, the first communication apparatus can effectively communicate with the second communication apparatus based on the BH information.

In a possible implementation, the BH information includes: a BH dwell time, a BH start offset, a BH cycle periodicity, and a start offset difference.

In this embodiment of this application, the BH information includes the start offset difference. In this way, the first communication apparatus can learn of a downlink BH start offset or a downlink BH start offset based on the BH start offset included in the BH information. Therefore, the first communication apparatus can effectively learn of the uplink BH information and the downlink BH information based on the included start offset difference, thereby reducing signaling overheads.

In a possible implementation, the BH information includes at least one of: an uplink BH dwell time or a downlink BH dwell time. That the first communication apparatus performs communication based on the BH information corresponding to the first BWP includes at least one of the following: The first communication apparatus sends a first message to the second communication apparatus based on the uplink BH dwell time corresponding to the first BWP. The first communication apparatus receives a second message from the second communication apparatus based on the downlink BH dwell time corresponding to the first BWP.

In this embodiment of this application, the first communication apparatus communicates with the second communication apparatus based on the uplink BH dwell time or the downlink BH dwell time corresponding to the first BWP, thereby effectively improving a beam hopping-based communication mechanism of the first communication apparatus and the second communication apparatus.

In a possible implementation, the method further includes: The first communication apparatus sends a third message to the second communication apparatus based on the uplink BH dwell time corresponding to the first BWP. An end time of the second message is in a first time unit. If a second time unit is in the uplink BH dwell time, the second time unit is a sending time unit of the third message; or if the second time unit is not in the uplink BH dwell time, a sending time unit of the third message is in a third time unit in an uplink BH dwell time after the second time unit. The second time unit is $n+K_{delay1}+\Delta$. Herein, n represents an index of the first time unit, $K_{delay1}$ is an uplink scheduling delay, and $\Delta$ is an adjustment amount.

A relationship between the first time unit and the second time unit shown in this embodiment of this application may also be understood as follows: The second time unit is later than the first time unit, and a time unit difference between the first time unit and the second time unit is related to $K_{delay1}+\Delta$.

In a possible implementation, $K_{delay1}=Koffset+K_2$.

In a possible implementation, the method further includes: The first communication apparatus receives a fourth message from the second communication apparatus based on the downlink BH dwell time corresponding to the first BWP, and sends a feedback message of the fourth message to the second communication apparatus based on the uplink BH dwell time corresponding to the first BWP. An end time of the fourth message is in a fourth time unit. If a fifth time unit is in the uplink BH dwell time, the fifth time unit is a sending time of the feedback message; or if the fifth time unit is not in the uplink BH dwell time, a sending time unit of the feedback message is in a sixth time unit in an uplink BH dwell time after the fifth time unit. The fifth time unit is $m+K_{delay2}$. Herein, m represents an index of the fourth time unit, and $K_{delay2}$ is an uplink scheduling delay.

A relationship between the fourth time unit and the fifth time unit shown in this embodiment of this application may also be understood as follows: The fifth time unit is later than the fourth time unit, and a time unit difference between the fourth time unit and the fifth time unit is related to $K_{delay2}$.

In the method provided in this embodiment of this application, at least one of the sending time unit of the third message or the sending time unit of the feedback message is determined, to effectively ensure that the first communication apparatus can send an uplink signal in an appropriate time unit, thereby further improving a beam hopping-based random access mechanism of the first communication apparatus and the second communication apparatus.

In a possible implementation, $K_{delay2}=Koffset+K_1$.

In a possible implementation, the third time unit is determined based on the uplink BH dwell time corresponding to the first BWP and an uplink BH cycle periodicity corresponding to the first BWP; or the sixth time unit is determined based on the uplink BH dwell time corresponding to the first BWP and an uplink BH cycle periodicity corresponding to the first BWP.

In a possible implementation, the third time unit satisfies the following formula:

$$x=[BH\_on\_duration\_UL*(Time\_length\_x/(BH\_cycle\_UL- BH\_on\_duration\_UL))/slot\_length].$$

Herein, x represents the third time unit, Time_length_x represents a time length occupied by $K_2+\Delta+Koffset-1$ slot lengths in a non-dwell time before the uplink BH dwell time in which the third message is sent, slot_length represents a unit of time, ⌊⌋ represents rounding down, BH_on_duration_UL represents the uplink BH dwell time, and BH_cycle_UL represents the uplink BH cycle periodicity.

In a possible implementation, the sixth time unit satisfies the following formula:

$$y=[BH\_on\_duration\_UL*(Time\_length\_y/(BH\_cycle\_UL- BH\_on\_duration\_UL))/slot\_length].$$

Herein, y represents the sixth time unit, Time_length_y represents a time length occupied by $K_1+Koffset-1$ slot lengths in a non-dwell time before the uplink BH dwell time in which the feedback message is sent, slot_length represents a unit of time, ⌊⌋ represents rounding down, BH_on_duration_UL represents the uplink BH dwell time, and BH_cycle_UL represents the uplink BH cycle periodicity.

It may be understood that the first time unit and the fourth time unit shown in this embodiment of this application may be alternatively understood as downlink time units, and the second time unit, the third time unit, the fifth time unit, and the sixth time unit may be alternatively understood as uplink time units.

In a possible implementation, the method further includes: When the first communication apparatus establishes a radio resource control RRC connection, the first communication apparatus receives a fifth message from the second communication apparatus. The fifth message includes BH information corresponding to a second BWP. The first communication apparatus switches from the first BWP to the second BWP, and performs communication based on the BH information corresponding to the second BWP.

In a possible implementation, the second message includes the BH information corresponding to the second BWP. After the first communication apparatus receives the second message from the second communication apparatus based on the downlink BH dwell time corresponding to the first BWP, the method further includes:

The first communication apparatus switches from the first BWP to the second BWP, and sends the third message to the second communication apparatus based on the uplink BH dwell time corresponding to the second BWP; receives the fourth message from the second communication apparatus based on the downlink BH dwell time corresponding to the second BWP; and sends the feedback message of the fourth message to the second communication apparatus based on the uplink BH dwell time corresponding to the second BWP.

It may be understood that for specific descriptions of the third message, the fourth message, and the feedback message, reference may be made to the foregoing descriptions. Details are not described herein again.

In a possible implementation, the second message further includes information about the second BWP.

In a possible implementation, the BH information corresponding to the first BWP and the BH information corresponding to the second BWP are different in at least one parameter; or the BH information corresponding to the first BWP is the same as the BH information corresponding to the second BWP.

It may be understood that when the first communication apparatus performs BWP switching in a random access process, the first communication apparatus may further perform BWP switching after the first communication apparatus enters an RRC connected mode. Details are not enumerated herein.

In a possible implementation, the configuration message includes the BH information corresponding to the first BWP and the BH information corresponding to the second BWP.

In this embodiment of this application, the first communication apparatus may switch from the first BWP to the second BWP after sending the first message; the first communication apparatus may switch from the first BWP to the second BWP after receiving the second message; or the like. A BWP switching time of the first communication apparatus is not limited in this embodiment of this application. It may be understood that a sequence of using the BH information corresponding to the first BWP and the BH information corresponding to the second BWP may be agreed in a protocol, or may be indicated by the second communication apparatus to the first communication apparatus, or the like.

In a possible implementation, the BH information corresponding to the second BWP includes at least one of:

a variation of the BH dwell time, a variation of the BH start offset, and a variation of the BH cycle periodicity.

Optionally, the BH information corresponding to the second BWP includes at least one of: a variation of the uplink BH dwell time, a variation of the uplink BH start offset, and a variation of the uplink BH cycle periodicity. Optionally, the BH information corresponding to the second BWP includes at least one of: a variation of the downlink BH dwell time, a variation of the downlink BH start offset, and a variation of the downlink BH cycle periodicity. Optionally, the BH information corresponding to the second BWP may include only the variation of the uplink BH information, or may include only the variation of the downlink BH information. For example, the variation of the uplink BH information or the variation of the downlink BH information is agreed in a protocol or a standard. This is not limited in this embodiment of this application.

According to a second aspect, an embodiment of this application provides a satellite communication method. The method includes:

A second communication apparatus sends a configuration message. The configuration message includes beam hopping BH information corresponding to a first BWP. The second communication apparatus performs communication based on the BH information corresponding to the first BWP.

In a possible implementation, the BH information includes at least one of: a BH dwell time, a BH start offset, or a BH cycle periodicity.

In a possible implementation, the BH information includes at least one of: a BH dwell time, a BH start offset, a BH cycle periodicity, or a start offset difference.

In a possible implementation, the BH information includes at least one of: uplink BH information or downlink BH information.

In a possible implementation, the BH information includes: a BH dwell time, a BH start offset, a BH cycle periodicity, and a start offset difference.

In a possible implementation, the BH information includes at least one of: an uplink BH dwell time or a downlink BH dwell time. That the second communication apparatus performs communication based on the BH information corresponding to the first BWP includes at least one of the following: The second communication apparatus receives a first message from a first communication apparatus based on the uplink BH dwell time corresponding to the first BWP. The second communication apparatus sends a second message to the first communication apparatus based on the downlink BH dwell time corresponding to the first BWP.

In a possible implementation, the method further includes: The second communication apparatus receives a third message from the first communication apparatus based on the uplink BH dwell time corresponding to the first BWP. An end time of the second message is in a first time unit. If a second time unit is in the uplink BH dwell time, the second time unit is a sending time unit of the third message; or if the second time unit is not in the uplink BH dwell time, a sending time unit of the third message is in a third time unit in an uplink BH dwell time after the second time unit. The second time unit is $n+K_{delay1}+\Delta$. Herein, n represents an index of the first time unit, $K_{delay1}$ is an uplink scheduling delay, and $\Delta$ is an adjustment amount.

In a possible implementation, the method further includes: The second communication apparatus sends a fourth message to the first communication apparatus based on the downlink BH dwell time corresponding to the first BWP, and receives a feedback message from the first communication apparatus based on the uplink BH dwell time corresponding to the first BWP. An end time of the fourth message is in a fourth time unit. If a fifth time unit is in the uplink BH dwell time, the fifth time unit is a sending time of the feedback message; or if the fifth time unit is not in the uplink BH dwell time, a sending time unit of the feedback message is in a sixth time unit in an uplink BH dwell time after the fifth time unit. The fifth time unit is $m+K_{delay2}$. Herein, m represents an index of the fourth time unit, and $K_{delay2}$ is an uplink scheduling delay.

In a possible implementation, the third time unit is determined based on the uplink BH dwell time corresponding to the first BWP and an uplink BH cycle periodicity corresponding to the first BWP; or the sixth time unit is determined based on the uplink BH dwell time corresponding to the first BWP and an uplink BH cycle periodicity corresponding to the first BWP.

In a possible implementation, the third time unit satisfies the following formula:

$$x=[BH\_on\_duration\_UL*(Time\_length\_x/(BH\_cycle\_UL- BH\_on\_duration\_UL))/slot\_length].$$

Herein, x represents the third time unit, Time_length_x represents a time length occupied by $K_2+\Delta+Koffset-1$ slot lengths in a non-dwell time before the uplink BH dwell time in which the third message is sent, slot_length represents a unit of time, ⌊⌋ represents rounding down, BH_on_duration_UL represents the uplink BH dwell time, and BH_cycle_UL represents the uplink BH cycle periodicity.

In a possible implementation, the sixth time unit satisfies the following formula:

$$y=[BH\_on\_duration\_UL*(Time\_length\_y/(BH\_cycle\_UL- BH\_on\_duration\_UL))/slot\_length].$$

Herein, y represents the sixth time unit, Time_length_y represents a time length occupied by $K_1$+Koffset-1 slot lengths in a non-dwell time before the uplink BH dwell time in which the feedback message is sent, slot_length represents a unit of time, ⌊⌋ represents rounding down, BH_on_duration_UL represents the uplink BH dwell time, and BH_cycle_UL represents the uplink BH cycle periodicity.

In a possible implementation, the method further includes: When the first communication apparatus establishes a radio resource control RRC connection, the second communication apparatus sends a fifth message to the first communication apparatus. The fifth message includes BH information corresponding to a second BWP. The second communication apparatus performs communication based on the BH information corresponding to the second BWP.

In a possible implementation, the second message includes the BH information corresponding to the second BWP. After the second communication apparatus sends the second message to the first communication apparatus based on the downlink BH dwell time corresponding to the first BWP, the method further includes: The second communication apparatus receives a third message from the first communication apparatus based on the uplink BH dwell time corresponding to the second BWP; sends a fourth message to the first communication apparatus based on the downlink BH dwell time corresponding to the second BWP; and receives a feedback message from the first communication apparatus based on the uplink BH dwell time corresponding to the second BWP.

In a possible implementation, the second message further includes information about the second BWP.

In a possible implementation, the BH information corresponding to the first BWP and the BH information corresponding to the second BWP are different in at least one parameter; or the BH information corresponding to the first BWP is the same as the BH information corresponding to the second BWP.

In a possible implementation, the configuration message includes the BH information corresponding to the first BWP and the BH information corresponding to the second BWP.

In a possible implementation, the BH information corresponding to the second BWP includes at least one of: a variation of the BH dwell time, a variation of the BH start offset, and a variation of the BH cycle periodicity.

Optionally, the BH information corresponding to the second BWP includes at least one of: a variation of the uplink BH dwell time, a variation of the uplink BH start offset, and a variation of the uplink BH cycle periodicity. Optionally, the BH information corresponding to the second BWP includes at least one of: a variation of the downlink BH dwell time, a variation of the downlink BH start offset, and a variation of the downlink BH cycle periodicity. Optionally, the BH information corresponding to the second BWP may include only the variation of the uplink BH information, or may include only the variation of the downlink BH information. For example, the variation of the uplink BH information or the variation of the downlink BH information is agreed in a protocol or a standard. This is not limited in this embodiment of this application.

According to a third aspect, an embodiment of this application provides a communication apparatus, configured to perform the method in the first aspect or any possible implementation of the first aspect. The communication apparatus includes units configured to perform the method in the first aspect or any possible implementation of the first aspect.

According to a fourth aspect, an embodiment of this application provides a communication apparatus, configured to perform the method in the second aspect or any possible implementation of the second aspect. The communication apparatus includes units configured to perform the method in the second aspect or any possible implementation of the second aspect.

In the third aspect or the fourth aspect, the communication apparatus may include a transceiver unit and a processing unit.

According to a fifth aspect, an embodiment of this application provides a communication apparatus. The communication apparatus includes a processor, configured to perform the method in the first aspect or any possible implementation of the first aspect. Alternatively, the processor is configured to execute a program stored in a memory. When the program is executed, the method in the first aspect or any possible implementation of the first aspect is performed.

In a possible implementation, the memory is located outside the communication apparatus.

In a possible implementation, the memory is located inside the communication apparatus.

In this embodiment of this application, the processor and the memory may be alternatively integrated into one component. In other words, the processor and the memory may be alternatively integrated together.

In a possible implementation, the communication apparatus further includes a transceiver. The transceiver is configured to receive a signal or send a signal.

According to a sixth aspect, an embodiment of this application provides a communication apparatus. The communication apparatus includes a processor, configured to perform the method in the second aspect or any possible implementation of the second aspect. Alternatively, the processor is configured to execute a program stored in a memory. When the program is executed, the method in the second aspect or any possible implementation of the second aspect is performed.

In a possible implementation, the memory is located outside the communication apparatus.

In a possible implementation, the memory is located inside the communication apparatus.

In this embodiment of this application, the processor and the memory may be alternatively integrated into one component. In other words, the processor and the memory may be alternatively integrated together.

In a possible implementation, the communication apparatus further includes a transceiver. The transceiver is configured to receive a signal or send a signal.

According to a seventh aspect, an embodiment of this application provides a communication apparatus. The communication apparatus includes a logic circuit and an interface. The logic circuit is coupled to the interface. The interface is configured to input a configuration message. The configuration message includes beam hopping BH information corresponding to a first BWP. The logic circuit is configured to perform communication based on the BH information corresponding to the first BWP.

It may be understood that for specific descriptions of the seventh aspect, reference may be made to the first aspect. Details are not described herein again.

According to an eighth aspect, an embodiment of this application provides a communication apparatus. The communication apparatus includes a logic circuit and an interface. The logic circuit is coupled to the interface. The interface is configured to output a configuration message. The configuration message includes beam hopping BH information corresponding to a first BWP. The logic circuit is configured to perform communication based on the BH information corresponding to the first BWP.

It may be understood that for specific descriptions of the eighth aspect, reference may be made to the second aspect. Details are not described herein again.

According to a ninth aspect, an embodiment of this application provides a computer-readable storage medium. The computer-readable storage medium is configured to store a computer program. When the computer program runs on a computer, the method in the first aspect or any possible implementation of the first aspect is performed.

According to a tenth aspect, an embodiment of this application provides a computer-readable storage medium. The computer-readable storage medium is configured to store a computer program. When the computer program runs on a computer, the method in the second aspect or any possible implementation of the second aspect is performed.

According to an eleventh aspect, an embodiment of this application provides a computer program product. The computer program product includes a computer program or computer code. When the computer program product runs on a computer, the method in the first aspect or any possible implementation of the first aspect is performed.

According to a twelfth aspect, an embodiment of this application provides a computer program product. The computer program product includes a computer program or computer code. When the computer program product runs on a computer, the method in the second aspect or any possible implementation of the second aspect is performed.

According to a thirteenth aspect, an embodiment of this application provides a computer program. When the computer program runs on a computer, the method in the first aspect or any possible implementation of the first aspect is performed.

According to a fourteenth aspect, an embodiment of this application provides a computer program. When the computer program runs on a computer, the method in the second aspect or any possible implementation of the second aspect is performed.

According to a fifteenth aspect, an embodiment of this application provides a wireless communication system. The wireless communication system includes a first communication apparatus and a second communication apparatus. The first communication apparatus is configured to perform the method in the first aspect or any possible implementation of the first aspect. The second communication apparatus is configured to perform the method in the second aspect or any possible implementation of the second aspect.

For technical effects achieved in the second aspect to the ninth aspect, refer to the technical effects of the first aspect or beneficial effects in the following method embodiments. Details are not described herein again.

## BRIEF DESCRIPTION OF DRAWINGS

FIG. 1 is a schematic diagram of a non-terrestrial network (non-terrestrial network, NTN) communication system according to an embodiment of this application;
FIG. 2 is a schematic diagram of a non-terrestrial network (non-terrestrial network, NTN) communication system according to an embodiment of this application;
FIG. 3 is a schematic diagram of a scenario of coverage of a satellite according to an embodiment of this application;
FIG. 4a is a schematic flowchart of a satellite communication method according to an embodiment of this application;
FIG. 4b is a schematic flowchart of a random access method in a satellite communication method according to an embodiment of this application;
FIG. 5a is a schematic diagram of a correspondence between a BWP and BH information according to an embodiment of this application;

FIG. 5b is a schematic diagram of parameters of BH information according to an embodiment of this application;

FIG. 6a is a schematic flowchart of a satellite communication method according to an embodiment of this application;

FIG. 6b is a schematic diagram of configuration of BH information according to an embodiment of this application;

FIG. 7a is a schematic diagram in which UE determines a dwell time of a beam according to an embodiment of this application;

FIG. 7b is a schematic diagram in which UE determines a frame boundary according to an embodiment of this application;

FIG. 7c is a schematic diagram of parameters of BH information according to an embodiment of this application;

FIG. 8a is a schematic flowchart of a random access method in a satellite communication method according to an embodiment of this application;

FIG. 8b is a schematic diagram of a relationship between BH information and time according to an embodiment of this application;

FIG. 9a is a schematic diagram of parameters of BH information according to an embodiment of this application;

FIG. 9b is a schematic diagram in which UE determines a dwell time of a beam according to an embodiment of this application;

FIG. 9c is a schematic diagram of a relationship between BH information and time according to an embodiment of this application;

FIG. 10a and FIG. 10b each are a schematic diagram of BWP switching in an access process according to an embodiment of this application;

FIG. 11a is a schematic diagram of dynamic scheduling BH information according to an embodiment of this application;

FIG. 11b is a schematic diagram of BH information superposition according to an embodiment of this application; and

FIG. 12 to FIG. 14 each are a schematic diagram of a structure of a communication apparatus according to an embodiment of this application.

## DESCRIPTION OF EMBODIMENTS

To make the objectives, technical solutions, and advantages of this application clearer, the following further describes this application with reference to the accompanying drawings.

In the specification, claims, or accompanying drawings of this application, the terms "first", "second", and the like are intended only to distinguish between different objects but do not indicate a particular order. In addition, the terms "include", "comprise", and any variant thereof are intended to cover a non-exclusive inclusion. For example, a process, a method, a system, a product, or a device that includes a series of steps or units is not limited to the enumerated steps or units, but optionally further includes other unenumerated steps or units, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various locations in this specification may not necessarily mean a same embodiment, and is not an independent or optional embodiment exclusive from another embodiment. It is explicitly and implicitly understood by a person skilled in the art that embodiments described in this specification may be combined with another embodiment.

In this application, "at least one (item)" means one or more, "a plurality of" means two or more, "at least two (items)" means two or three or more, and "and/or" is used to describe an association relationship between associated objects and indicate that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following (items)" or a similar expression thereof means any combination of these items. For example, at least one of a, b, or c may represent: a, b, c, "a and b", "a and c", "b and c", or "a, b, and c".

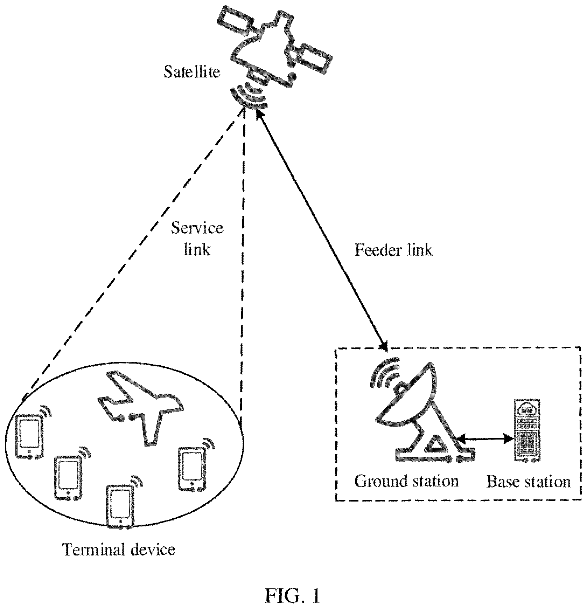

A method provided in embodiments of this application may be applied to a non-terrestrial network (non-terrestrial network, NTN) communication system. As shown in FIG. 1, the communication system includes a terminal device, a satellite (which may also be referred to as a satellite base station), and a ground station (which may also be referred to as a gateway or a gateway) (gateway).

The terminal device in embodiments of this application is an apparatus with wireless receiving and sending functions. The terminal device may communicate with an access network device (which may also be referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including indoor, outdoor, handheld, or vehicle-mounted; or may be deployed on water (for example, on a ship). In a possible implementation, the terminal device may be a handheld device, a vehicle-mounted device, a wearable device, a sensor, a terminal in the Internet of things, a terminal in the Internet of vehicles, an uncrewed aerial vehicle, a 5th generation (5th generation, 5G) network, a terminal device in any form in a future network, or the like that has a wireless communication function. This is not limited in this embodiment of this application.

It may be understood that the terminal devices shown in embodiments of this application may further communicate with each other in a device-to-device (device-to-device, D2D) manner or a machine-to-machine (machine-to-machine, M2M) manner.

It may be understood that the terminal device shown in embodiments of this application may be alternatively a device in the Internet of things (internet of things, IoT) or the like. The IoT network may include, for example, the Internet of vehicles. Communication manners in an Internet of vehicles system are collectively referred to as vehicle-to-everything (vehicle to X, V2X, X can stand for everything). For example, V2X may include: vehicle-to-vehicle (vehicle to vehicle, V2V) communication, vehicle-to-infrastructure (vehicle to infrastructure, V2I) communication, vehicle-to-pedestrian (vehicle to vehicle, V2P) communication, vehicle-to-network (vehicle to network, V2N) communication, or the like.

The satellite in embodiments of this application can provide a wireless access service for the terminal device, schedule a radio resource for the accessed terminal device, and provide a reliable wireless transmission protocol, a reliable data encryption protocol, and the like. The satellite may be a base station that uses an artificial earth satellite, a high-altitude flight vehicle, and the like for wireless communication, for example, an evolved nodeB (evolutional NodeB, eNB) and a next generation nodeB (next generation nodeB, gNB). Alternatively, the satellite may be used as a relay of these base stations to transparently transmit radio signals of these base stations to the terminal device. In this case, the ground station may be considered as a wireless communication base station. Therefore, in embodiments of this application, in some embodiments, for example, in a satellite regenerative (regenerative) scenario, the network device may be the satellite base station shown in FIG. 1. In some other embodiments, for example, in a satellite transparent (transparent) transmission scenario, the network device may be the ground station shown in FIG. 1. It may be understood that, in systems of different radio access technologies, names of devices having functions of the network device may be different, and are not enumerated in this application.

For example, when the satellite works in a transparent transmission mode, the satellite has a relay forwarding function. The ground station has functions of the base station or some functions of the base station. In this case, the ground station may be considered as a base station. Alternatively, the base station and the ground station may be separately deployed. In this case, a delay of a feeder link includes two parts: a delay from the satellite to the ground station and a delay from the ground station to the base station. For ease of description, the transparent transmission mode shown in the following is described by using an example in which the ground station and the base station are located together or close to each other. When the ground station is far away from the base station, the delay of the feeder link is a sum of the delay from the satellite to the ground station and the delay from the ground station to the base station. It may be understood that FIG. 1 shows an example in which the ground station and the base station are separately deployed. This should not be understood as a limitation on this embodiment of this application. When the satellite works in a regenerative mode, the satellite has a data processing capability, and functions of the base station or some functions of the base station. In this case, the satellite may be considered as a base station.

Optionally, the satellite may be a geostationary earth orbit (geostationary earth orbit, GEO) satellite, a medium earth orbit (medium earth orbit, MEO) satellite or a low earth orbit (low earth orbit, LEO) satellite of a non-geostationary earth orbit (none-geostationary earth orbit, NGEO), a high-altitude platform station (high altitude platform station, HAPS), or the like. A specific type of the satellite is not limited in this application.

The ground station in embodiments of this application may be configured to connect the satellite to a core network. For example, when the satellite serves as a wireless communication base station, the ground station may transparently transmit signaling between the satellite and the core network. Alternatively, the ground station may serve as a wireless communication base station, and the satellite may transparently communicate signaling between the terminal device and the ground station. For example, during communication, the ground station may send signaling from the core network to the satellite through the feeder link (or referred to as a feedback link) (feeder link), and the satellite sends the signaling to the terminal device through a service link (service link) between the satellite and the terminal device. Correspondingly, the terminal device may also send signaling to the satellite through the service link, and the satellite sends the signaling to the core network through the ground station.

It may be understood that FIG. 1 shows only one satellite and one ground station. In actual use, an architecture including a plurality of satellites and/or a plurality of ground stations may be used as required. Each satellite may provide services for one or more terminal devices. Each satellite may correspond to one or more ground stations. Each ground station may correspond to one or more satellites. This is not specifically limited in this application.

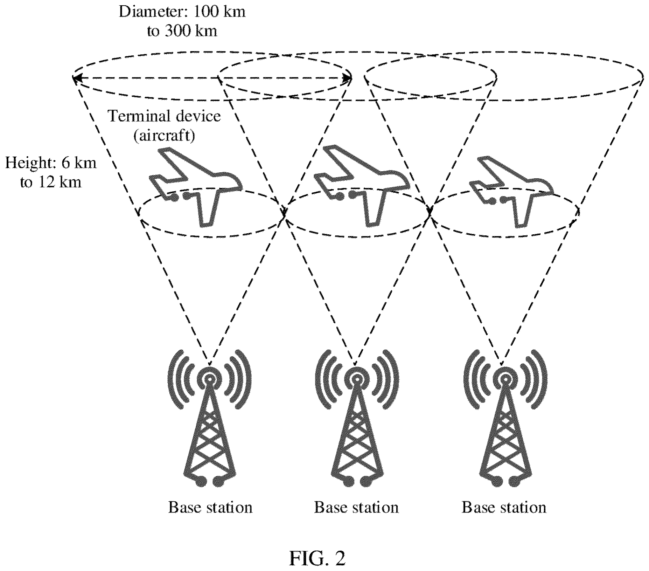

Optionally, the method provided in embodiments of this application may be further applied to an air-to-ground (air to ground, ATG) scenario shown in FIG. 2. The network device includes a ground base station. The terminal device includes a high-altitude aircraft, an on-board handheld terminal, and the like. It may be understood that FIG. 2 shows merely an example in which a height between the base station and the terminal device ranges from 6 km to 12 km and a coverage diameter of the base station ranges from 100 km to 300 km. This should not be understood as a limitation on this embodiment of this application.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that, as the network architecture evolves and a new service scenario emerges, the technical solutions provided in embodiments of this application are also applicable to a similar technical problem.

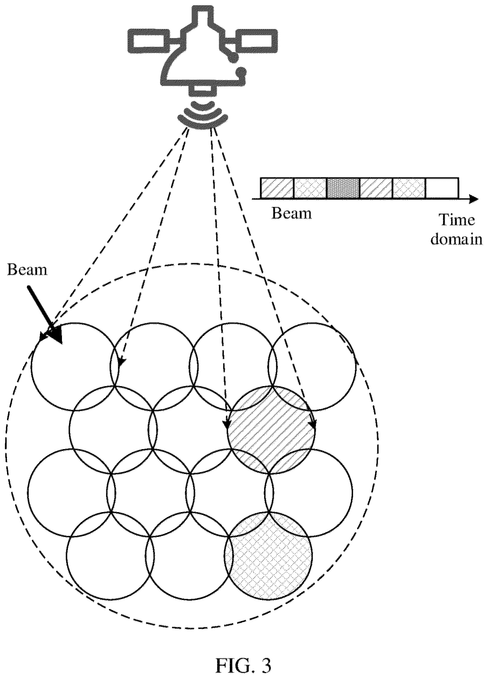

FIG. 3 is a schematic diagram of a scenario of coverage of a satellite according to an embodiment of this application. As shown in FIG. 3, a beam transmitted by a satellite illuminates different beam positions in different time periods, that is, provides services for different beam positions in a time division multiplexing manner. This may be described as a process in which the beam sequentially scans the beam positions. In other words, a quantity of beams that are simultaneously transmitted by the satellite is far less than a quantity of beam positions in coverage of the satellite, and the coverage of the satellite cannot be simultaneously covered. A time-division beam multiplexing manner needs to be used to provide services for UE on different beams of the satellite. This manner is also referred to as beam hopping (beam-hopping, BH). For example, the beam position may be understood as follows: The coverage of the satellite is divided by using coverage of a single beam as a unit, and coverage of each beam is referred to as the beam position. As shown in FIG. 3, black circles in FIG. 3 represent beam positions, and all beam positions form the coverage of the satellite. For example, if an orbit height is 1150 km and a coverage diameter of a single beam is about 26 km, coverage of one satellite can cover about 700 beam positions. Therefore, when the satellite provides services for UE in a beam hopping manner, a related communication mechanism for beam hopping needs to be improved.

In view of this, embodiments of this application provide a satellite communication method and apparatus, to effectively improve a communication mechanism of a first communication apparatus and a second communication apparatus. When a service is provided for the first communication apparatus in a beam hopping manner, the first communication apparatus and the second communication apparatus can appropriately communicate with each other by using the method provided in embodiments of this application.

It may be understood that, when beam hopping is compared with discontinuous reception (discontinuous reception, DRX) similar to beam hopping, discontinuous reception is designed for energy saving and power saving for the UE, and beam hopping is designed for effectively improving communication between the first communication apparatus and the second communication apparatus. Therefore, beam hopping is quite different from discontinuous reception, and discontinuous reception cannot be applied to beam hopping. Specifically, there may be the following differences: 1. Beam hopping exists in an initial access phase of the first communication apparatus, and DRX can be enabled only after the UE accesses a system. In other words, a start time of beam hopping is different from a start time of DRX. 2. Beam hopping can support a case in which at least one configuration of a time domain resource (for example, time) or a frequency domain resource (for example, a frequency or a frequency band) is included. For example, a frequency domain resource update case includes any one or more of the following: switching a frequency domain resource to reduce interference from an adjacent beam, switching a frequency domain resource during dynamic scheduling of a frequency resource (for example, an increase or a decrease of a quantity of traffic beams), switching a frequency domain resource when a plurality of beams collaboratively serve a same beam position, and the like (for example, at least one of the following manners about BWP switching or BH information switching). However, DRX supports only configuration of a time domain resource. 3. DRX can be used to constrain downlink signals, while beam hopping can be used for both uplink and downlink signals. 4. A difference between an active state and an idle state in DRX is whether a physical downlink control channel (physical downlink control channel, PDCCH) is monitored. A difference between two working states of beam hopping is whether there is beam illumination, that is, there is no signal and there is a signal (when there is no signal, there is no broadcast signal). Therefore, a working state of DRX varies greatly from a working state of beam hopping. It is infeasible to directly apply DRX to beam hopping to ensure communication between the first communication apparatus and the second communication apparatus. Therefore, in embodiments of this application, a satellite communication method is redesigned. In this way, in a beam hopping scenario, a communication mechanism of the first communication apparatus and the second communication apparatus can be effectively improved.

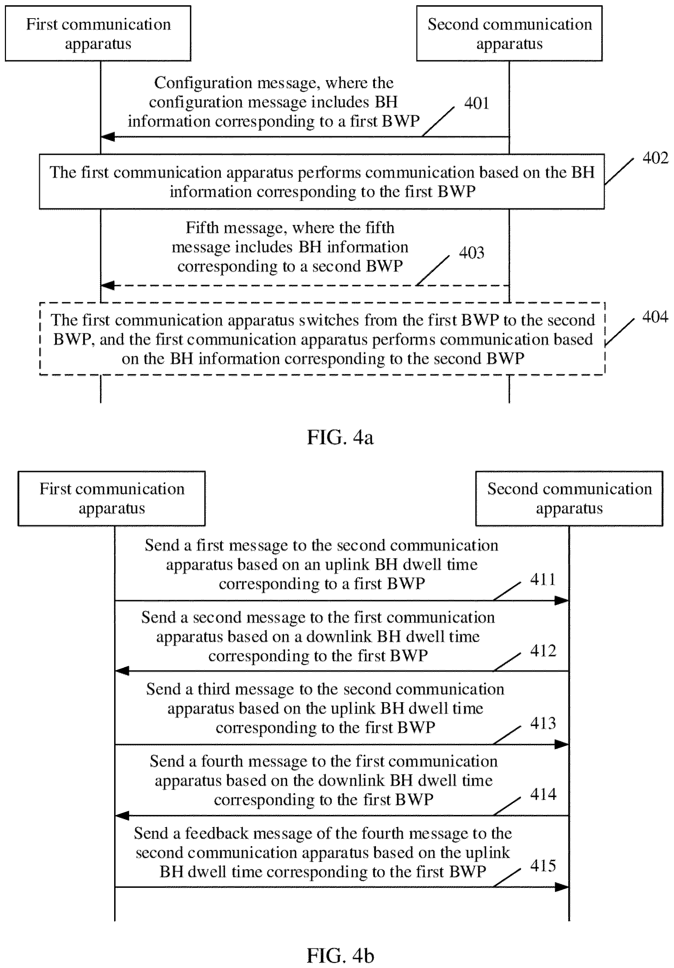

FIG. 4a is a schematic flowchart of a satellite communication method according to an embodiment of this application. The satellite communication method may be applied to a first communication apparatus and a second communication apparatus. For example, the first communication apparatus may include the terminal device shown in FIG. 1, and the second communication apparatus may include the network device shown in FIG. 1 (for example, including the satellite or the ground station). For another example, the first communication apparatus may include a chip in the terminal device, and the second communication apparatus may include a chip in the network device. Specific forms of the first communication apparatus and the second communication apparatus are not limited in this embodiment of this application. As shown in FIG. 4a, the method includes the following steps.

401: The second communication apparatus sends a configuration message. The configuration message includes BH information corresponding to a first BWP. Correspondingly, the first communication apparatus obtains the configuration message.

It may be understood that, that the first communication apparatus obtains the configuration message may be further understood as that the first communication apparatus receives the configuration message, or the first communication apparatus receives the configuration message from the second communication apparatus.

The BH information may indicate a time (which may also be understood as duration) in which a beam is illuminated in an area in which the first communication apparatus is located, or indicate a time at which no beam is illuminated in an area in which the first communication apparatus is located. Therefore, the first communication apparatus can communicate with the second communication apparatus based on the BH information. For example, the BH information includes at least one of: a BH dwell time, a BH start offset, or a BH cycle periodicity. The BH dwell time may indicate a beam illumination time length, and may also be referred to as a beam dwell time length. For example, the BH dwell time may indicate a continuous time length. Coverage of a beam in the BH dwell time includes the first communication apparatus (which may also indicate that the beam can illuminate the first communication apparatus). The BH start offset indicates a start offset of the BH cycle periodicity. The BH start offset may be used for determining a start time of the BH cycle periodicity. The BH cycle periodicity indicates a beam hopping periodicity. For example, the satellite may implement a beam hopping cycle based on duration indicated by the BH cycle periodicity.

For example, the BH cycle periodicity and the BH start offset may indicate a start system frame number (system frame number, SFN) and a start system subframe number (system subframe number, SSFN) of beam hopping. In other words, the start SFN and the start SSFN may be the start SFN and the start SSFN of the BH cycle periodicity. Optionally, a value of the SFN may be a cycle from 0 to 1023, and a value of the SSFN may be a cycle from 0 to 9. It may be understood that the values of the SFN and the SSFN shown herein are merely examples. With evolution of standards and technologies, the values of the SFN and the SSFN may also change.

For example, the BH cycle periodicity and the BH start offset may satisfy: [(SFN*10)+SSFN]mod(BH_cycle)=BH_Start_Offset. Herein, SFN represents a system frame number, SSFN represents a system subframe number, mod represents a modulo operation, BH_cycle represents the BH cycle periodicity, and BH_Start_Offset represents the BH start offset. The SFN and the SSFN may be determined in the foregoing operation manner based on the BH cycle periodicity and the BH start offset in the BH information. In other words, the start system frame number and the start system subframe number of the BH cycle periodicity are determined based on the SFN and the SSFN. It may be understood that the SFN and the SSFN that are determined in the foregoing operation manner may include a plurality of combinations. For example, the SFN may take a plurality of values determined from 0 to 1023. For example, BH_Start_Offset=0, and BH_cycle=320 ms. In the foregoing operation manner, the following may be obtained: A start system subframe number of a beam position scanning periodicity (which may also be referred to as a beam hopping periodicity or a scanning periodicity for short) satisfies: SFN0 SSFN0, SFN32 SSFN0, SFN64 SSFN0, SFN96 SSFN0, ..., and the like. For another example, BH_Start_Offset=0, and BH_cycle=40 ms. In the foregoing operation manner, the following may be obtained: A start system subframe number of a beam position scanning periodicity satisfies: SFN0 SSFN0, SFN4 SSFN0, SFN8 SSFN0, SFN12 SSFN0, ..., and the like. It may be understood that this embodiment of this application is shown by using an example in which one frame includes ten subframes and a unit of time of one subframe is 1 ms. This should not be understood as a limitation on this embodiment of this application.

It should be noted that the foregoing descriptions about the BH dwell time, the BH start offset, and the BH cycle periodicity are also applicable to an uplink BH dwell time, an uplink BH start offset, and an uplink BH cycle periodicity that are included in uplink BH information, and a downlink BH dwell time, a downlink BH start offset, and a downlink BH cycle periodicity that are included in downlink BH information below. Therefore, when the BH information includes the uplink BH information or the downlink BH information, for descriptions of the uplink BH information and the downlink BH information, refer to the foregoing descriptions of the BH information. Details are not described below again. For example, the downlink BH cycle periodicity and the downlink BH start offset may satisfy: [(SFN*10)+SSFN]mod(BH_cycle_DL)=BH_Start_Offset_DL. Herein, SFN represents a system frame number, SSFN represents a system subframe number, mod represents a modulo operation, BH_cycle_DL represents the downlink BH cycle periodicity, and BH_Start_Offset_DL represents the downlink BH start offset. For another example, the uplink BH cycle periodicity and the downlink BH start offset may satisfy:
[(SFN*10)+SSFN]mod(BH_cycle_DL)=BH_Start_Offset_UL. Herein, SFN represents a system frame number, SSFN represents a system subframe number, mod represents a modulo operation, BH_cycle_UL represents the downlink BH cycle periodicity, and BH_Start_Offset_UL represents the downlink BH start offset.

In a possible implementation, the BH information includes: a BH dwell time, a BH start offset, and a BH cycle periodicity. In this case, because the uplink BH information and the downlink BH information are not distinguished in the BH information, information in the uplink BH information is the same as corresponding information in the downlink BH information by default. For example, the uplink BH dwell time is the same as the downlink BH dwell time, the uplink B cycle periodicity is the same as the downlink BH cycle periodicity, and the uplink BH start offset is the same as the downlink BH start offset. In this implementation, signaling overheads can be effectively reduced.

In another possible implementation, the BH information includes: a BH dwell time, a BH start offset, a BH cycle periodicity, and a start offset difference. Optionally, the BH information does not include information for indicating uplink or downlink. Instead, a standard stipulates that the BH dwell time is the downlink BH dwell time, the BH start offset is the downlink BH start offset, and the BH cycle periodicity is the downlink BH cycle periodicity. Alternatively, the first communication apparatus and the second communication apparatus negotiate in advance that the BH dwell time is the downlink BH dwell time, the BH start offset is the downlink BH start offset, and the BH cycle periodicity is the downlink BH cycle periodicity. Therefore, the first communication apparatus may determine the uplink BH start offset, the uplink BH dwell time (the uplink BH dwell time is the same as the downlink BH dwell time), and the uplink BH cycle periodicity (the uplink BH cycle periodicity is the same as the downlink BH cycle periodicity) based on the start offset difference included in the BH information. It may be understood that, the foregoing description is provided by using an example in which the BH information indicates the downlink BH information. The BH information indicating the uplink BH information also falls within the protection scope of embodiments of this application. This is not enumerated herein. Optionally, the BH information may include information for indicating uplink or downlink. Details are not described herein again. In this implementation, when the uplink BH information is different from the downlink BH information, the uplink BH information and the downlink BH information can be indicated, and signaling overheads can be reduced.

In still another possible implementation, the BH information includes the uplink BH information and the downlink BH information. The uplink BH information includes the uplink BH dwell time, the uplink BH start offset, and the uplink BH cycle periodicity. The downlink BH information includes the downlink BH dwell time, the downlink BH start offset, and the downlink BH cycle periodicity. In other words, the BH information may also explicitly include the uplink BH information and the downlink BH information. It is easy to implement this implementation. In this way, the first communication apparatus can clearly learn of the uplink BH information and the downlink BH information. It may be understood that in this implementation, the uplink BH information and the downlink BH information may be the same or may be different. This is not limited in this embodiment of this application.

In still another possible implementation, the BH information includes at least one of: a variation of the BH dwell time, a variation of the BH start offset, and a variation of the BH cycle periodicity. For example, when the BH information included in the configuration message in step 401 is not sent by the second communication apparatus to the first communication apparatus for the first time, the BH information may further include a variation. For example, the BH information may include the variation of the BH dwell time. In this case, the first communication apparatus may learn, based on the BH information, that the BH dwell time needs to be updated, and the BH start offset and the BH cycle periodicity are the same as those in BH information sent by the second communication apparatus in a previous time. Other parameters have a similar case, and are not enumerated herein. It may be understood that this embodiment of this application is also applicable to the uplink BH information and the downlink BH information. For example, the BH information includes at least one of: a variation of the uplink BH dwell time, a variation of the uplink BH start offset, and a variation of the uplink BH cycle periodicity. Optionally, BH information corresponding to a second BWP includes at least one of: a variation of the downlink BH dwell time, a variation of the downlink BH start offset, and a variation of the downlink BH cycle periodicity. Optionally, the BH information may include only the variation of the uplink BH information, or may include only the variation of the downlink BH information. For example, the variation of the uplink BH information or the variation of the downlink BH information is agreed on in a protocol or a standard. This is not limited in this embodiment of this application. Optionally, the BH information may further include both the variation of the uplink BH information and the variation of the downlink BH information. This is not enumerated herein.

It should be noted that, for the second communication apparatus, because the satellite cannot simultaneously cover coverage of the satellite, a service needs to be provided to the first communication apparatus in coverage of different beams in a beam hopping manner. Therefore, for the second communication apparatus, the BH information may be expressed in the beam hopping manner. Because the first communication apparatus needs to communicate a signal (for example, receive a downlink signal and/or send an uplink signal) in the coverage of the beam, for the first communication apparatus, the BH information may be further expressed in the following manner: the beam dwell time (equivalent to the foregoing BH dwell time), the beam start offset (equivalent to the foregoing BH start offset), and the beam cycle periodicity (equivalent to the foregoing BH cycle periodicity). It may be understood that, for descriptions of beams, reference may be made to descriptions of BH. Details are not described herein again. For brevity, the method provided in embodiments of this application is described below by using the BH information as an example. However, a name of the BH information shown in embodiments of this application should not be understood as a limitation on embodiments of this application.

In a possible implementation, the configuration message further includes information about the first BWP. For example, the information about the first BWP includes a location and a bandwidth (locationAndBandwidth), a subcarrier spacing (subcarrier spacing, SCS) (which may also be referred to as a subcarrier bandwidth), and a cyclic prefix (cyclic prefix, CP). The location and the bandwidth may indicate a frequency-domain start location and a bandwidth of the first BWP, the SCS may indicate an SCS used when the first BWP is used, and the CP may indicate a CP length or a CP type. Therefore, the second communication apparatus may indicate, to the first communication apparatus by using the first BWP information, the BWP corresponding to the BH information included in the configuration message.

In another possible implementation, the first BWP information and the BH information may be included in different messages. For example, the first communication apparatus may further receive the information about the first BWP from the second communication apparatus. In other words, the first communication apparatus may determine, based on the configuration message and the information about the first BWP that are received by the first communication apparatus, the BWP corresponding to the BH information.

It may be understood that related descriptions of step 401 are also applicable to the following embodiments.

402: The first communication apparatus performs communication based on the BH information corresponding to the first BWP.

Optionally, step 402 may be further understood as follows: The second communication apparatus performs communication based on the BH information corresponding to the first BWP, or the first communication apparatus communicates with the second communication apparatus based on the BH information corresponding to the first BWP, or the second communication apparatus communicates with the first communication apparatus based on the BH information corresponding to the first BWP.

The configuration message provided in this embodiment of this application may be implemented in the following manners:

First, the configuration message is a broadcast message or a multicast message.

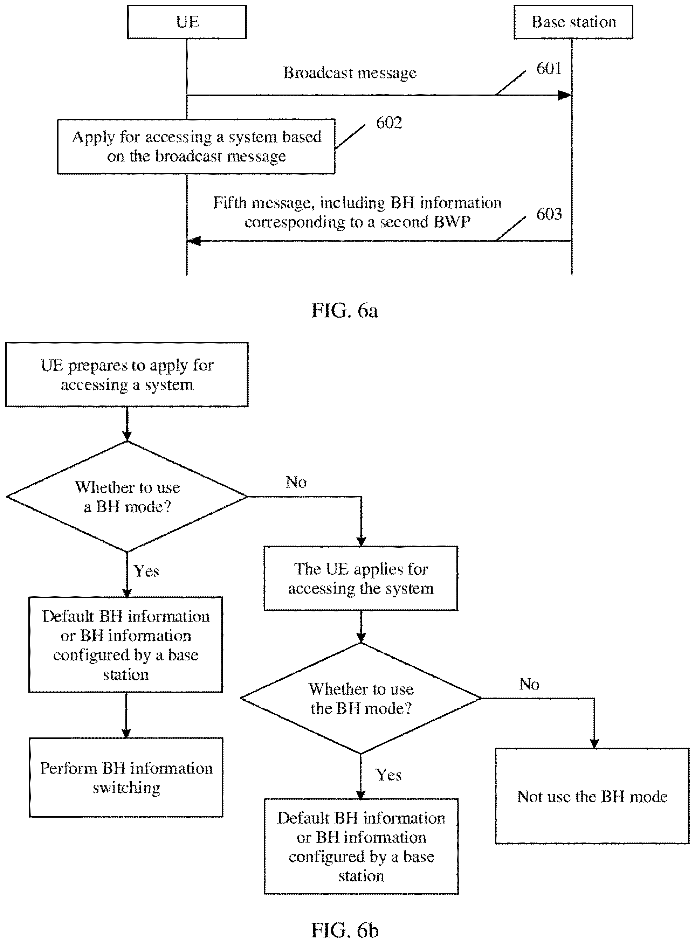

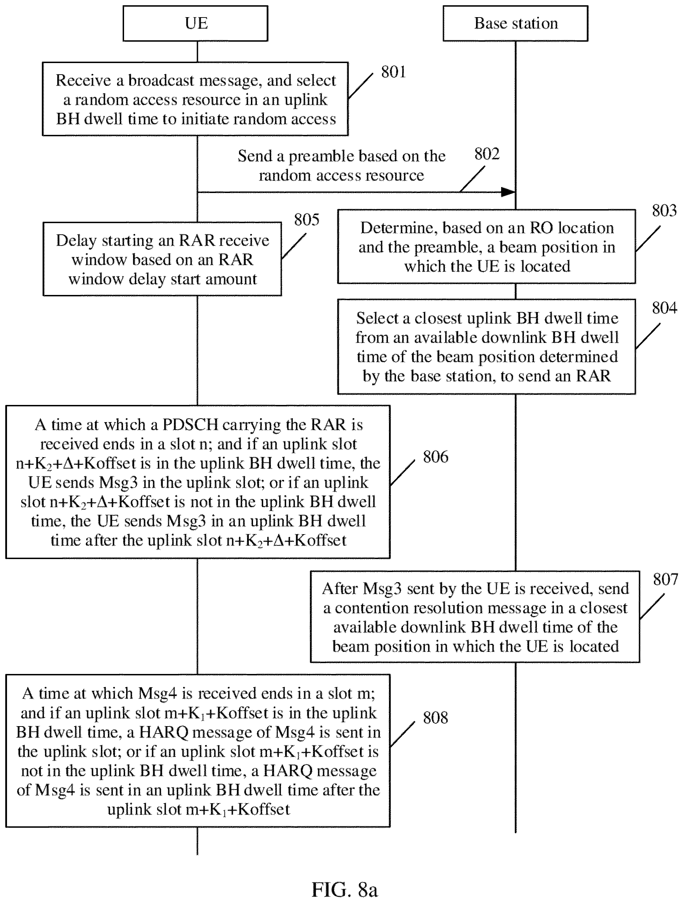

For example, when the first communication apparatus receives the configuration message, the first communication apparatus may initiate random access. In this case, step 402 may be understood as follows: The first communication apparatus performs random access to the second communication apparatus based on the BH information corresponding to the first BWP. The first BWP may be understood as an initial BWP (initial BWP), and the second BWP shown below may be understood as a first active BWP. It may be understood that for descriptions of random access, reference may be made to a first message and a second message shown in FIG. 4b; or for descriptions of random access, reference may be made to a first message, a second message, a third message, and a fourth message shown in FIG. 4b. For this implementation, refer to step 601 and step 602 in FIG. 6a, or refer to related descriptions in FIG. 8a.

It may be understood that the first communication apparatus may also obtain the configuration message in a broadcast or multicast manner after the RRC connection is established. Multicast shown in this embodiment of this application may be understood as a group divided in a unit of a cell or a beam.

Second, the configuration message is a unicast message.

When the configuration message is the unicast message, that the first communication apparatus communicates with the second communication apparatus shown in step 402 may be understood as that the first communication apparatus communicates with the second communication apparatus based on the BH information corresponding to the first BWP after the RRC connection is established. For example, the first communication apparatus sends the first message to the second communication apparatus based on the uplink BH dwell time corresponding to the first BWP. Correspondingly, the second communication apparatus receives the first message based on the uplink BH dwell time corresponding to the first BWP. For another example, the second communication apparatus sends the second message to the first communication apparatus based on the downlink BH dwell time corresponding to the first BWP, and the first communication apparatus receives the second message based on the downlink BH dwell time corresponding to the first BWP. For example, the first message may be a PUSCH message or a PUCCH message, and the second message may be a PDSCH message or a PDCCH message. It may be understood that for this implementation, reference may be made to step 603 in FIG. 6a. It may be understood that the first message to a fifth message shown in this embodiment of this application may be understood as messages not in a random access process. In this case, the satellite communication method shown in this embodiment of this application may include the first message and the second message, or include the first message to a third message, or include the first message to a fourth message, or include the first message to the fifth message. This is not limited in this embodiment of this application.

In a possible implementation, the method shown in FIG. 4a further includes the following steps:

403: The second communication apparatus sends the fifth message to the first communication apparatus. The fifth message includes the BH information corresponding to the second BWP. Correspondingly, the first communication apparatus receives the fifth message from the second communication apparatus.

404: The first communication apparatus switches from the first BWP to the second BWP, and the first communication apparatus performs communication based on the BH information corresponding to the second BWP. Alternatively, the second communication apparatus performs communication based on the BH information corresponding to the second BWP.

In a possible implementation, step 403 may be understood as that the first communication apparatus needs to perform BWP switching based on the fifth message, that is, switch from the first BWP to the second BWP. In this implementation, the first BWP is not the initial BWP. Then, after switching to the second BWP, the first communication apparatus communicates with the second communication apparatus based on the second BWP. For example, a reason for BWP switching performed by the first communication apparatus may include at least one of the following: a service requirement of the first communication apparatus (a large bandwidth is required or energy saving is required), or adjustment of inter-beam bandwidth allocation based on a distribution change of the first communication apparatus in a beam (for example, a quantity of first communication apparatuses in coverage of a beam increases, and a quantity of first communication apparatuses in coverage of another beam decreases). It may be understood that the BWP switching reasons shown herein are merely examples, and should not be understood as a limitation on this embodiment of this application.

In another possible implementation, when step 402 is understood as that the first communication apparatus performs random access to the second communication apparatus (that is, the first communication apparatus needs to initiate random access), step 403 may be replaced with the following process in which the second communication apparatus sends the fifth message to the first communication apparatus when the first communication apparatus establishes the RRC connection, where the second message includes the BH information corresponding to the second BWP. Correspondingly, the first communication apparatus receives the fifth message from the second communication apparatus. In this implementation, the first BWP is the initial BWP, and the second BWP may include the first active BWP (first active BWP). Then, after switching to the first active BWP, the first communication apparatus communicates with the second communication apparatus based on the first active BWP.

In this embodiment of this application, when a service is provided for the first communication apparatus in a beam hopping manner, the configuration message includes the BH information, so that the first communication apparatus can communicate with the second communication apparatus based on the BH information. In other words, according to the method provided in this embodiment of this application, a beam hopping communication mechanism in a satellite communication system is effectively improved, so that the first communication apparatus and the second communication apparatus can properly communicate with each other.

FIG. 4b is a schematic flowchart of a random access method in a satellite communication method according to an embodiment of this application. As shown in FIG. 4b, the method includes the following steps.

411: A first communication apparatus sends a first message to a second communication apparatus based on an uplink BH dwell time corresponding to a first BWP. Correspondingly, the second communication apparatus receives the first message based on the uplink BH dwell time corresponding to the first BWP.

412: The second communication apparatus sends a second message to the first communication apparatus based on a downlink BH dwell time corresponding to the first BWP. Correspondingly, the first communication apparatus receives the second message based on the downlink BH dwell time corresponding to the first BWP.

In a possible implementation, the first message may include a preamble (preamble) in four-step random access. The preamble may also be referred to as a message 1 (Msg1 for short). The second message may include a random access response (random access response, RAR) in four-step random access. The RAR may also be referred to as a message 2 (Msg2 for short). In this case, the method shown in FIG. 4b may further include step 413 to step 415 shown below. It may be understood that for the first message and the second message shown in this embodiment of this application, reference may be made to FIG. 8a below.

In another possible implementation, the first message may include a message A (MsgA for short) in two-step random access, and the second message may include a message B (MsgB) in two-step random access. In this case, the method shown in FIG. 4b may further include: The first communication apparatus sends a feedback message of the second message to the second communication apparatus based on the downlink BH dwell time corresponding to the first BWP. Correspondingly, the second communication apparatus receives the feedback message based on the downlink BH dwell time corresponding to the first BWP. It may be understood that for descriptions of MsgA in two-step random access, reference may be made to descriptions of Msg1 (for example, in FIG. 8a) in embodiments of this application; for descriptions of MsgB in two-step random access, reference may be made to descriptions of Msg2 (for example, in FIG. 8a) in embodiments of this application; and for descriptions of a feedback message of MsgB in two-step random access, reference may be made to descriptions of a feedback message of Msg4 (for example, in FIG. 8a) in embodiments of this application. Details are not described below again.

In a possible implementation, the method shown in FIG. 4b further includes the following steps:

413: The first communication apparatus sends a third message to the second communication apparatus based on the uplink BH dwell time corresponding to the first BWP. Correspondingly, the second communication apparatus receives the third message based on the uplink BH dwell time corresponding to the first BWP.

An end time of the second message is in a first time unit. If the second time unit is located in the uplink BH dwell time, the second time unit is a sending time unit of the third message. If the second time unit is not in the uplink BH dwell time, a sending time unit of the third message is in a third time unit in an uplink BH dwell time after the second time unit. Optionally, the second time unit is $n+K_{delay1}+\Delta$. Herein, n represents an index of the first time unit, $K_{delay1}$ is an uplink scheduling delay, and $\Delta$ is an adjustment amount. Optionally, $K_{delay1}$ may be the uplink scheduling delay configured by a base station, or may be calculated by UE according to an agreement. This is not limited in this embodiment of this application. For example, $K_{delay1}$ may be further determined based on $K_2$ and Koffset. For example, $K_{delay1}$=Koff-

set+$K_2$. Herein, $K_2$ may be an uplink scheduling delay configured by the base station, and Koffset may be an uplink scheduling delay configured by the base station or determined by the UE according to an agreement. This is not limited herein. Optionally, the second time unit is defined in a standard, defined in a protocol, or configured by the second communication apparatus.

The first time unit, the second time unit, and the third time unit in this embodiment of this application may be in a unit of a slot (slot), a unit of a millisecond (ms), a unit of a subframe, a unit of a frame, or the like. This is not limited in this embodiment of this application. When the units are different, the foregoing parameters such as $K_{delay1}$, $K_2$, $\Delta$, and Koffset may also be converted, for example, converted into corresponding units. For example, if the first time unit, the second time unit, and the third time unit are in the unit of a slot (slot), $K_{delay1}$, $K_2$, $\Delta$, and Koffset are also in the unit of a slot. For another example, if the first time unit, the second time unit, and the third time unit are in the unit of a subframe, $K_{delay1}$, $K_2$, $\Delta$, and Koffset are also in the unit of a subframe. For ease of description, the first time unit, the second time unit, and the third time unit shown below are described in the unit of a slot (slot). However, this should not be understood as a limitation on this embodiment of this application. It may be understood that for specific descriptions of the first time unit, the second time unit, and the third time unit, reference may be made to FIG. 8a. Details are not described herein.

Optionally, the third time unit is determined based on the uplink BH dwell time corresponding to the first BWP and an uplink BH cycle periodicity corresponding to the first BWP. In this implementation, different first communication apparatuses in coverage of a same beam can evenly send third messages. It may be understood that for specific descriptions of this implementation, reference may be made to FIG. 8a.

Certainly, the third time unit may be alternatively defined in a standard. For example, the third time unit may be an $x^{th}$ slot in the uplink BH dwell time, for example, x is equal to 1 or 2. Optionally, the third time unit may be alternatively preset by the second communication apparatus, or the like. This is not limited in this embodiment of this application.

414: The second communication apparatus sends a fourth message to the first communication apparatus based on the downlink BH dwell time corresponding to the first BWP. Correspondingly, the first communication apparatus receives the fourth message based on the downlink BH dwell time corresponding to the first BWP.

415: The first communication apparatus sends a feedback message of the fourth message to the second communication apparatus based on the uplink BH dwell time corresponding to the first BWP. Correspondingly, the second communication apparatus receives the feedback message based on the downlink BH dwell time corresponding to the first BWP.

An end time of the fourth message is in a fourth time unit. If a fifth time unit is in the uplink BH dwell time, the fifth time unit is a sending time of the feedback message. If the fifth time unit is not in the uplink BH dwell time, a sending time unit of the feedback message is in a sixth time unit in an uplink BH dwell time after the fifth time unit. Optionally, the fifth time unit is $m+K_{delay2}$. Herein, m represents an index of the fourth time unit, and $K_{delay2}$ is an uplink scheduling delay. Optionally, $K_{delay2}$ may be the uplink scheduling delay configured by a base station, or may be calculated by UE according to an agreement. This is not limited in this embodiment of this application. For example, $K_{delay2}$ may be further determined based on $K_1$ and Koffset. For example, $K_{delay2}$=Koffset+$K_1$. Herein, $K_1$ may be an uplink scheduling delay configured by the base station, and Koffset may be an uplink scheduling delay configured by the base station or determined by the UE according to an agreement. This is not limited herein. Optionally, the fifth time unit is defined in a standard, defined in a protocol, or configured by the second communication apparatus.

Optionally, the sixth time unit is determined based on the uplink BH dwell time corresponding to the first BWP and an uplink BH cycle periodicity corresponding to the first BWP.

It may be understood that for descriptions of the fourth time unit, the fifth time unit, and the sixth time unit, reference may be made to the foregoing descriptions of the first time unit, the second time unit, and the third time unit. Details are not described herein again. For ease of description, the first time unit to the sixth time unit shown below are described in the unit of a slot (slot). However, this should not be understood as a limitation on this embodiment of this application.

According to the random access method based on satellite communication provided in this embodiment of this application, it can be effectively ensured that the first communication apparatus sends an uplink signal (for example, the first message or the third message) in the uplink BH dwell time and receives a downlink signal in the downlink BH dwell time. In a beam hopping scenario, a random access mechanism of the first communication apparatus and the second communication apparatus are effectively improved.

The following describes the satellite communication method provided in this embodiment of this application with reference to a specific example.

Before a specific example is described, the following describes in detail expression manners of parameters in embodiments of this application. It may be understood that the following expression manners are merely examples, and should not be understood as a limitation on embodiments of this application.

For example, a downlink BH dwell time is represented by BH_on_duration_DL below, a downlink BH start offset is represented by BH_Start_Offset_DL below, a downlink BH cycle periodicity is represented by BH_cycle_DL below, an uplink BH dwell time is represented by BH_on_duration_UL below, an uplink BH start offset is represented by BH_Start_Offset_UL below, and the uplink BH cycle periodicity is represented by BH_cycle_UL below.

It may be understood that, when corresponding information in uplink BH information is the same as that in downlink BH information, for example, a BH dwell time is represented by BH_on_duration below, a BH start offset is represented by BH_Start_Offset below, and a BH cycle periodicity is represented by BH_cycle below.

For example, when BH information is expressed by using a variation, for example, a variation of the downlink BH dwell time is represented by ΔBH_on_duration_DL below, a variation of the downlink BH start offset is represented by ΔBH_Start_Offset_DL below, a variation of the downlink BH cycle periodicity is represented by ABH_cycle_DL below, a variation of the uplink BH dwell time is represented by ABH_on_duration_UL below, a variation of the uplink BH start offset is represented by ABH_Start_Offset_UL below, and a variation of the uplink BH cycle periodicity is represented by ABH_cycle_UL.

It may be understood that, when a variation of the corresponding information in the uplink BH information is the same as that in the downlink BH information, for example, a variation of the BH dwell time is represented by ABH_on_duration below, a variation of the BH start offset is represented by ΔBH Start_Offset_ below, and a variation of the BH cycle periodicity is represented by ΔBH_cycle below.

For example, when the BH information is expressed by using a start offset difference, for example, the start offset difference is represented by BH_DL_UL_offset below.

For ease of description, the method provided in embodiments of this application is described below by using an example in which a first communication apparatus includes UE and a second communication apparatus includes a base station. It may be understood that the network device shown in FIG. 1 is shown below by using a name of a base station as an example. The base station may include a satellite base station, a ground station, or the like. For descriptions of the base station, refer to the descriptions of the network device in FIG. 1. Details are not described herein again. For example, the method provided in embodiments of this application is described below by using an example in which a first message to a fourth message are messages in a random access process. However, this should not be understood as a limitation on this embodiment of this application.

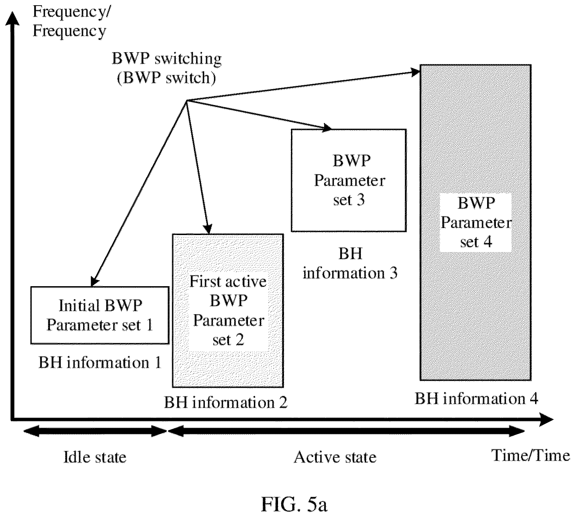

FIG. 5a is a schematic diagram of a correspondence between a BWP and BH information according to an embodiment of this application. In FIG. 5a, a horizontal coordinate may represent time (time), and a vertical coordinate may represent frequency (frequency). FIG. 5a shows examples of different phases of UE. To be specific, the satellite communication method shown in embodiments of this application may be applied to one or more of the following phases. The satellite communication method provided in embodiments of this application may be applied to a phase, for example, an initial access phase or an active phase. Alternatively, the satellite communication method provided in embodiments of this application may be applied to an initial access phase and an active access phase.

In the initial access phase, as shown in FIG. 5a, an initial BWP (initial BWP) is used by UE when initially accessing a system, and BH information used by the UE when initially accessing the system is BH information 1. The BH information 1 corresponds to the initial BWP. Optionally, because the initial BWP is configured at a cell level, the BH information (the BH information 1 shown in FIG. 5a) corresponding to the initial BWP may also be configured at a cell level. It may be understood that an initial access system shown in this embodiment of this application may be understood as that the UE has not established an RRC connection, or may be understood as an idle state shown in FIG. 5a.

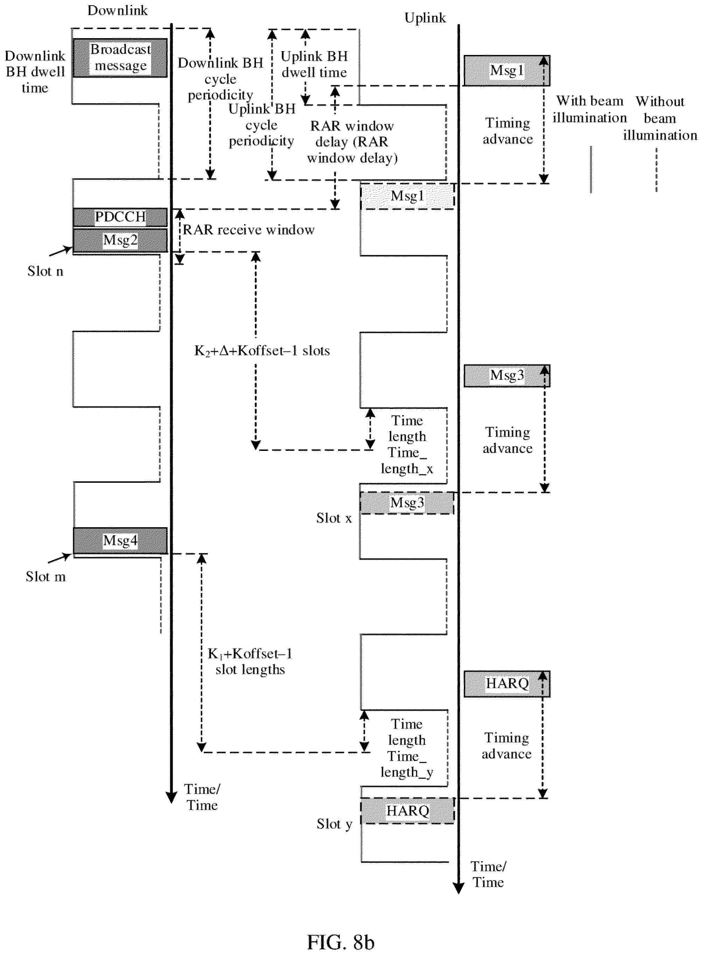

For example, in the initial access phase, the UE in the idle (idle) state may obtain a broadcast message through an initial BWP, to request to access the system. Optionally, when the UE is in the initial access phase, the base station may further send the broadcast message to the UE. The broadcast message indicates whether the UE uses a BH mode when using the initial BWP. If the BH mode is used, the UE may communicate a signal based on pre-agreed BH information or BH information configured by the base station. If the BH mode is not used, it indicates that the UE does not use a beam hopping mode. For example, there is constantly a beam illuminating in an area in which the UE is located. When the UE does not use the BH mode, it indicates that the base station may not send the BH information to the UE. It may be understood that descriptions of the initial access phase are merely examples. For related descriptions of the BH information in the initial access phase, refer to step 601 and step 602 shown below. Alternatively, for related descriptions of the BH information in the initial access phase, refer to FIG. 8a and/or FIG. 8b shown below. Details are not described herein.

In the active phase, when the UE accesses a system, or when the UE establishes an RRC connection, the UE may switch from the initial BWP to the first active BWP (first active BWP). For example, after the UE establishes the RRC connection, the base station may send RRC signaling to the UE. The RRC signaling includes information for indicating to switch to the first active BWP and/or BH information corresponding to the first active BWP. It may be understood that the RRC signaling shown herein is merely an example. For example, the base station may further send DCI to the UE. The DCI includes the information for indicating to switch to the first active BWP and/or the BH information corresponding to the first active BWP. It may be understood that for related descriptions of the BH information in the active phase, reference may also be made to step 603 and the like shown below.

As shown in FIG. 5a, the BH information corresponding to the first active BWP may include BH information 2. In other words, the BH information 2 corresponds to the first active BWP. When the UE switches from the initial BWP to the first active BWP, the UE may switch cell-level BH information used by the UE to UE-level or beam-level BH information (that is, switch from the BH information 1 to the BH information 2). Optionally, in a subsequent uplink communication process and/or a subsequent downlink communication process of the UE, the UE may further switch from the first active BWP to another UE-level or beam-level BWP (that is, perform BWP switching). As shown in FIG. 5a, BH information corresponding to a BWP (a parameter set 3 shown in FIG. 5a) is BH information 3. To be specific, when the UE switches from the first active BWP to the BWP (the parameter set 3 shown in FIG. 5a), the BH information used by the UE may be switched from the BH information 2 to the BH information 3. Optionally, the UE may further switch from the BH information 3 to the BH information 4, and the like. This is not enumerated in this embodiment of this application. It may be understood that the BH information 3 and/or the BH information 4 shown herein are/is merely examples. After the UE establishes the RRC connection, the BH information used by the UE may further include more different BH information, and the like. This is not enumerated herein. It may be understood that a parameter set 1 to a parameter set 4 shown in FIG. 5a are used to identify different BWPs. Specific content of the parameter set may include descriptions of BWP information (for example, a frequency domain location and a bandwidth, an SCS, and/or a CP). Details are not described herein again.

For example, after the UE accesses the system, for example, after the UE enters an RRC connected mode, the BH information used by the UE may be BH information configured by the base station, and the BH information used by the UE may correspond to the BWP used by the UE. For example, after the UE accesses the system, the base station may send a configuration message to the UE. The configuration message includes the BH information. Optionally, the base station may further send, to the UE, indication information indicating whether to use the BH mode. If the BH mode is used, the UE may receive a downlink signal and/or send an uplink signal based on the BH information configured by the base station. If the BH mode is not used, it indicates that the UE does not use the beam hopping mode. For example, beam illumination or no beam illumination may be implemented for the UE. When the UE does not use the BH mode, it indicates that the base station may not send the BH information to the UE.

It may be understood that the initial access phase may also be referred to as a phase in which the UE is in an idle state, and the active phase may also be referred to as a phase in which the UE is in an active state. It may be understood that identifiers 1 to 4 in the BH information 1, the BH information 2, the BH information 3, and the BH information 4 provided in this embodiment of this application are used to distinguish between different BH information. The identifiers 1 to 4 should not be understood as a limitation on this embodiment of this application. It should be noted that this embodiment of this application does not limit whether specific values of parameters included in the BH information 1 to the BH information 4 are the same. For descriptions of the BH information, refer to the foregoing descriptions. Details are not described herein again.

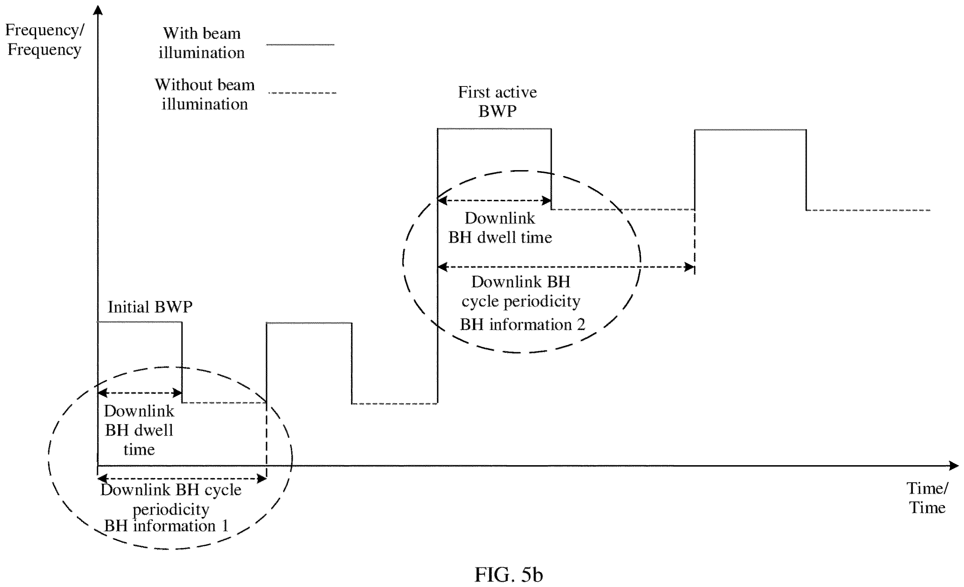

FIG. 5b is a schematic diagram of parameters of BH information according to an embodiment of this application. FIG. 5b shows an example in which the UE receives a downlink signal. As shown in FIG. 5b, a solid line part indicates that beam illumination is implemented for the UE (that is, the UE can receive a downlink signal), and a dashed line part indicates that no beam illumination is implemented for an area in which the UE is located (that is, the UE cannot receive a downlink signal). The BH information corresponding to the initial BWP is BH information 1 shown in FIG. 5b, and the BH information corresponding to the first active BWP is BH information 2 shown in FIG. 5b. Values of a downlink BH cycle periodicity in the BH information 1 and a downlink BH cycle periodicity in the BH information 2 shown in FIG. 5b are merely examples. This should not be understood as a limitation on this embodiment of this application. It may be understood that a relationship between a frequency of the initial BWP and a frequency of the first active BWP shown in FIG. 5b is merely an example. This should not be understood as a limitation on this embodiment of this application.

It may be understood that in this embodiment of this application, when the UE switches from the initial BWP to the first active BWP, for example, the BH information (the BH information 1 shown in FIG. 5b) corresponding to the initial BWP is different from the BH information (the BH information 2 shown in FIG. 5b) corresponding to the first active BWP. However, when the UE performs BWP switching, the BH information corresponding to the initial BWP may be the same as the BH information corresponding to the first active BWP.

It should be noted that the foregoing single phase may be one embodiment, or the foregoing two phases may be combined into one embodiment, or all the foregoing phases are combined into one embodiment, or the like. This is not limited in this embodiment of this application.

The initial access phase and the active phase are used as examples. The satellite communication method shown in embodiments of this application may be shown in FIG. 6a. FIG. 6a is a schematic flowchart of a satellite communication method according to an embodiment of this application. As shown in FIG. 6a, the satellite communication method includes the following steps.

601: A base station sends a broadcast message, and correspondingly, UE receives the broadcast message.

For example, the base station may send system information (system information, SIB) to the UE. The system information includes indication information and/or BH information. For example, the indication information may indicate whether the UE uses a BH mode, or the indication information indicates whether the BH mode is used for sending an uplink signal and/or receiving a downlink signal of the initial BWP. As shown in FIG. 6b, when the indication information indicates that the UE uses the BH mode, or when the BH mode is used for sending the uplink signal and/or receiving the downlink signal of the initial BWP, in an example, if the BH information does not include the BH information, or if the system information does not include the BH information, the UE may use pre-agreed BH information or default BH information. In another example, if the system information includes the BH information, the UE may use the BH information configured by the base station by using the SIB. FIG. 6b is a schematic diagram of configuration of BH information according to an embodiment of this application. Optionally, as shown in FIG. 6b, when indication information indicates that UE does not to use a BH mode, the UE does not use the BH mode, and in an access process of the UE or after the UE accesses a system, the base station may use the indication information to indicate the UE again whether to enable the BH mode. It may be understood that a sequence in which the UE prepares to apply for accessing the system and determines, based on the indication information, whether to use the BH mode shown in FIG. 6b is not limited in this embodiment of this application. BH information switching shown in FIG. 6b indicates BH information switching or BH information update, after the UE enters an RRC connection. It may be understood that, that the UE prepares to apply for accessing the system shown in FIG. 6b may be understood as that the UE prepares to apply for accessing the system after receiving a broadcast message, or may be understood as that the UE receives a broadcast message and makes preparation before sending Msg1.

Optionally, system information may not include the indication information, but indicates, based on whether the BH information is included, whether the UE uses the BH mode. If the system information does not include the BH information, the BH mode may be disabled by default; or if the system information includes the BH information, the UE may use BH information configured by a base station. In other words, the UE may determine, based on whether the broadcast message includes the BH information, whether the UE uses the BH mode. Optionally, the system information may not include the indication information, but indicates, based on whether the BH information is included, whether the UE uses the default BH information or the BH information configured by the base station. If the system information does not include the BH information, the UE may use the default BH information; or if the system information includes the BH information, the UE may use the BH information included in the BH information. In other words, the UE may determine, based on whether the BH information is included, the BH information used by the UE. It may be understood that the indication information and the BH information shown in this embodiment of this application may be included in one broadcast message, or may be included in different broadcast messages. This is not limited in this embodiment of this application.

It may be understood that the system information shown herein is merely an example. For example, the BH information shown in this embodiment of this application may be included in at least one of broadcast messages such as a system information block (system information block, SIB) 1, other system information (other system information, OSI), a master information block (master information block, MIB), remaining minimum system information (remaining minimum system information, RMSI), or a physical broadcast channel (physical broadcast channel, PBCH) message. The base station broadcasts or multicasts the broadcast message to the UE. The base station broadcasts or multicasts the BH information to the UE. In this way, the following case can be improved: Different resources are scheduled for different UE to send the BH information, thereby effectively reducing signaling overheads for resource scheduling and reducing system scheduling complexity. It may be understood that the descriptions of the broadcast message are also applicable to descriptions in which the base station configures the BH information for the UE after the UE establishes an RRC connection. Details are not described below.

For example, before applying for accessing the system, the UE may obtain, based on the SIB, whether to use the BH mode. For example, the SIB includes the BH mode (represented by BH_mode). The BH mode indicates whether to use the BH mode. For example, if BH_mode=0, it indicates that the BH mode is disabled (that is, the BH mode is not used); or if BH_mode=1, it indicates that the BH mode is enabled (that is, the BH mode is used). When BH_mode=1, it may further indicate that the BH mode may be enabled when the UE uses the initial BWP. If BH_mode=1 and the SIB does not include the BH information, the UE may use the default BH information or the pre-agreed BH information. The default BH information or the pre-agreed BH information may be agreed in a protocol or a standard, or may be negotiated by the base station and the UE. It may be understood that both the pre-agreed BH information and the default BH information may indicate BH information that can be used by the UE when the SIB does not include the BH information. However, when the BH information of the UE is not updated for a long time (for example, the base station does not indicate updated BH information to the UE for a long time), the BH information used by the UE may fall back to the default BH information.

For example, the default BH information may be as follows: BH_Start_Offset_DL=BH_Start_Offset_UL=0, BH_on_duration_DL=BH_on_duration_UL=2 ms, and BH_cycle_DL=BH_cycle_UL=320 ms. For example, the BH information included in the SIB may be as follows: BH_Start_Offset_DL=BH_Start_Offset_UL=0, BH_on_duration_DL=BH_on_duration_UL=2 ms, and BH_cycle_DL=BH_cycle_UL=80 ms. When downlink BH information and uplink BH information are configured by using a same message, the BH information may be quickly indicated to the UE by using a message. Optionally, when related parameter values included in the uplink BH information are the same as those in the downlink BH information, the SIB may include only the downlink BH information or the uplink BH information. Therefore, signaling overheads can be effectively reduced. For example, if the SIB includes the uplink BH information, the UE may learn of the downlink BH information based on the uplink BH information. Therefore, the UE can send an uplink signal based on the uplink BH information, and receive a downlink signal based on the downlink BH information. It may be understood that for descriptions of the BH information, reference may be made to FIG. 4a.

It may be understood that, because the initial BWP, scanning of an initial access beam, or a broadcast message is cell-level configuration (or an initial access beam may also be referred to as a broadcast beam), the BH information corresponding to the initial BWP may indicate a start location of a periodicity in which a broadcast beam scans all beam positions for an SSB. For example, an uplink BH start offset may indicate a start location of a beam scanning periodicity of an uplink beam. For another example, a downlink BH start offset may indicate a start location of a beam scanning periodicity of a downlink beam. For example, a cell-level start location may be obtained based on the BH information, for example, a start location of a periodicity of scanning a beam position 0, a beam position 1, ..., and a beam position 159 for the SSB. However, a dwell time of a broadcast beam sensed by the UE is different in each beam. Therefore, the UE needs to determine a specific periodicity characteristic of BH information of a broadcast beam in a beam position in which the UE is located, for example, a start time, an end time, and a periodicity characteristic of a dwell time of the broadcast beam in the beam position in which the UE is located. It may be understood that 0 to 159 shown herein are merely examples, and the beam position 0 to the beam position 159 may be understood as 160 beam positions in coverage of a satellite.

For example, in the initial access phase, BH_Start_Offset_DL=0, BH_on_duration_DL=2 ms, and BH_cycle_DL=320 ms. In this case, based on the foregoing BH information, a downlink BH cycle periodicity is 320 ms, and a dwell time of each beam is 2 ms. It indicates that a total of 160 beam positions need to be scanned in the coverage of the satellite. Start times of dwell times of broadcast beams in the 160 beam positions are obtained according to [(SFN*10)+SSFN]mod(BH_cycle_DL)=BH_Start_Offset_DL=0. For example, a start subframe number of the scanning periodicity of the 160 beam positions satisfies: SFN0 SSFN0, SFN32 SSFN0, SFN64 SSFN0, SFN96, SSFN0, ..., and the like. It may be understood that, in this embodiment of this application, frame numbers 0 to 1023 and subframe numbers 0 to 9 are shown as examples. This should not be understood as a limitation on this embodiment of this application.

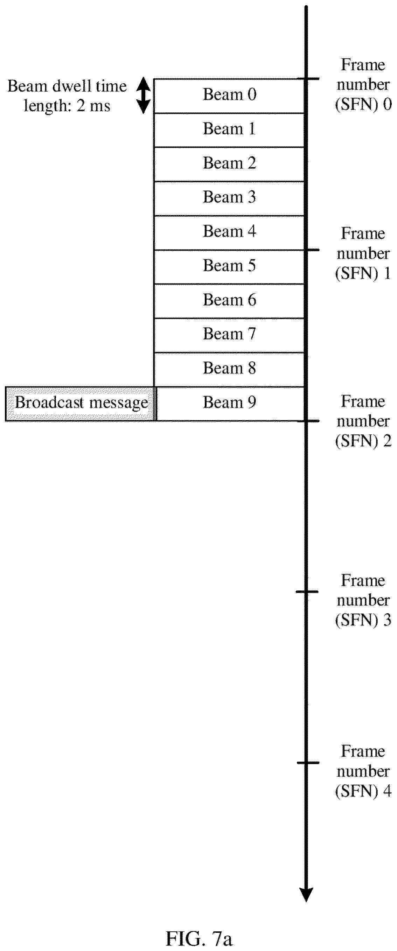

FIG. 7a is a schematic diagram in which UE determines a dwell time of a beam according to an embodiment of this application. As shown in FIG. 7a, the UE may determine, based on a time location of a detected broadcast message (for example, an SSB), a start time and an end time of a dwell time (for example, 2 ms) of beam illumination in beam coverage in which the UE is located, and periodically repeats the operation according to a downlink BH cycle periodicity. As shown in FIG. 7a, the UE detects an SSB in an illumination range of a beam 9 in SFN1, and may determine, based on a time location of the SSB, that a dwell time of the beam 9 is two final subframes of SFN1. Optionally, the UE may further periodically receive an SSB and/or another broadcast message in the illumination range of the beam 9 according to the downlink BH cycle periodicity such as 320 ms. It may be understood that identifiers 0 to 4 in SFN0 to SFN4 shown in FIG. 7a are used to distinguish between different SFNs, and identifiers 0 to 9 in a beam 0 to a beam 9 shown in FIG. 7a are used to distinguish between different beams. Therefore, different identifiers shown in this embodiment of this application should not be understood as a limitation on this embodiment of this application. The broadcast message in FIG. 7a indicates that a time domain length of the broadcast message is not limited in the two final subframes of SFN1. It may be understood that the broadcast message provided in this embodiment of this application may also be referred to as a broadcast signal. A specific name of the broadcast message is not limited in this embodiment of this application.

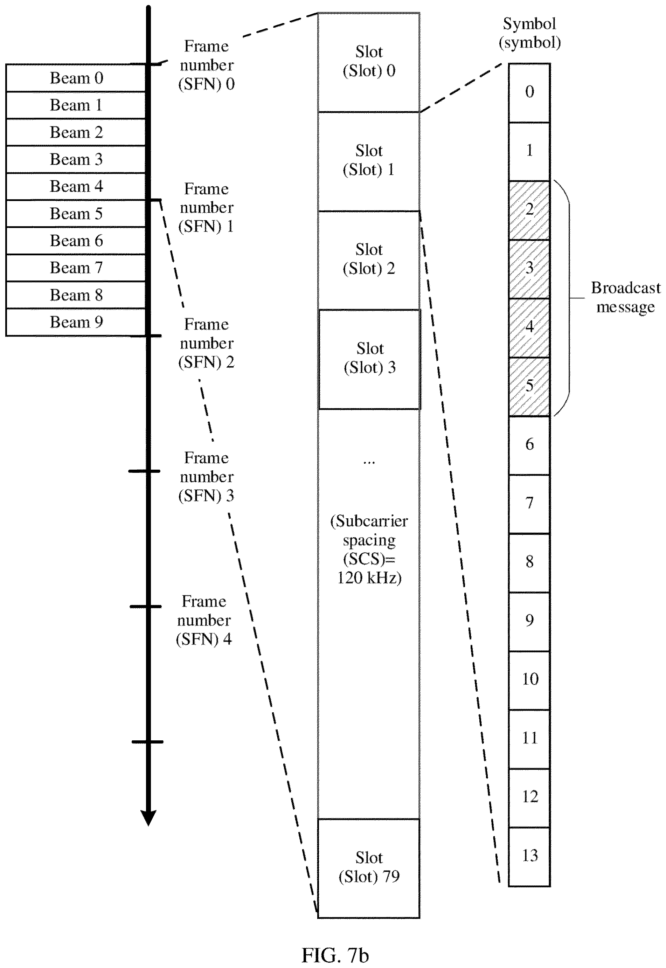

In this embodiment of this application, because the UE needs to determine, based on the time location of the SSB, a dwell time of illumination of a downlink beam. Therefore, the UE further needs to learn of a slot number (slot number) of the SSB, to determine a frame boundary and frame timing. Therefore, the UE may determine a start time and an end time of illumination of the downlink beam based on a slot number of the SSB, a downlink BH cycle periodicity, and a dwell time of downlink BH. FIG. 7b is a schematic diagram in which UE determines a frame boundary according to an embodiment of this application. As shown in FIG. 7b, it is assumed that an SSB occupies four orthogonal frequency division multiplexing (orthogonal frequency division multiplexing, OFDM) symbols, and the four OFDM symbols occupied by the SSB are a third OFDM symbol to a sixth OFDM symbol in one slot. For example, when a carrier frequency is greater than or equal to 6 GHz, an SSB index (for example, a bit length is 3 bits) in a PBCH may indicate three high-order bits of an SSB index, and 3 bits carried in a demodulation reference signal (demodulation reference signal, DMRS) sequence in the PBCH indicate three low-order bits of the SSB index. In addition, with reference to 1 bit indicated in a half frame in a MIB, 7 bits in total indicate a slot number in one frame length. For example, when a subcarrier spacing is 120 kHz, one frame includes 80 slots. Therefore, the base station may indicate, to the UE, a slot number of the SSB. In this way, the UE can determine a downlink frame boundary and frame timing based on the slot number of the SSB, and determine a start time and an end time of beam illumination with reference to the BH information. It may be understood that the 80 slots included in one frame shown in this embodiment of this application are shown by using an example in which the subcarrier spacing is 120 kHz. This should not be understood as a limitation on this embodiment of this application.

602: The UE applies for accessing the system based on the broadcast message.

For example, the broadcast message may include random access configuration information, so that the UE can prepare to apply for accessing the system based on the random access configuration information. For example, a related procedure in which the UE applies for accessing the system may include four-step random access, two-step random access, or the like. For descriptions of a related procedure of four-step random access, refer to FIG. 8a shown below.

It may be understood that a sequence in which the UE determines to apply for accessing the system and the UE determines whether to use the BH mode is not limited in this embodiment of this application. A sequence in which the UE determines to apply for accessing the system and the UE determines the BH mode used by the UE is not limited.

603: After the UE accesses the system, the base station sends a fifth message to the UE, and correspondingly, the UE receives the fifth message. The fifth message includes BH information corresponding to a second BWP.

For example, the fifth message includes information about the second BWP and/or the BH information. For example, after the UE successfully accesses the system through a random access process and establishes the RRC connection, the base station may send the fifth message to the UE. The fifth message may include at least one of: information indicating BWP switching, the information about the second BWP, or the BH information. For example, $BH\_Start\_Offset\_DL=BH\_Start\_Offset\_UL=0$, $BH\_on\_duration\_DL=BH\_on\_duration\_UL=10$ ms, and $BH\_cycle\_DL=BH\_cycle\_UL=40$ ms. For another example, $BH\_Start\_Offset=0$, $BH\_on\_duration\_=10$ ms, and $BH\_cycle\_=40$ ms. It may be understood that, that uplink BH information is the same as downlink BH information is shown as an example. This should not be understood as a limitation on this embodiment of this application.

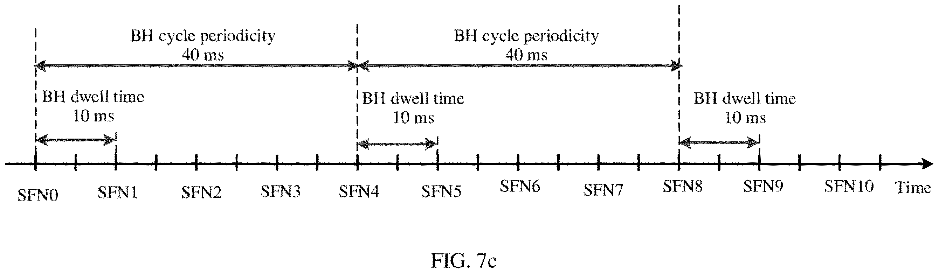

FIG. 7c is a schematic diagram of parameters of BH information according to an embodiment of this application. As shown in FIG. 7c, downlink is used as an example. Based on the foregoing BH information and $[(SFN*10)+SSFN]mod(BH\_cycle\_DL)=BH\_Start\_Offset\_DL=0$, it may be obtained that a start subframe number of the downlink BH cycle periodicity satisfies: SFN0 SSFN0, SFN4 SSFN0, SFN8 SSFN0, SFN12 SSFN0, ..., and the like. It may be learned from the foregoing BH information that a beam in an area in which the UE is located scans back according to a periodicity of 40 ms, and a length of a dwell time of a downlink beam is 10 ms. Therefore, a start location of the dwell period of the downlink beam is a start location of each periodicity of 40 ms, and a start location that is of a beam hopping cycle periodicity and that is obtained according to $BH\_Start\_Offset\_DL=BH\_Start\_Offset\_UL=0$ is a start location of each four frames (a length of 40 ms). The dwell time of the downlink beam is 10 ms, to indicate that the UE can receive a downlink signal in the dwell time. Uplink has a similar case. Details are not described herein. It may be understood that, because the uplink BH information is the same as the downlink BH information, the uplink BH information and the downlink BH information are not distinguished in FIG. 7c. It may be understood that, because the uplink BH start offset is the same as the downlink BH start offset, it indicates that the UE can send an uplink signal and receive a downlink signal in the BH dwell time.

It may be understood that the fifth message may be carried in one or more of the following: RRC signaling, BWP signaling, downlink control information (downlink control information, DCI), group DCI, a media access control (media access control, MAC) control element (control element, CE) (MAC-CE), and a timing advance command (timing advance command, TAC). The RRC signaling shown above may include any one or more of: RRC setup (RRCsetup) signaling, RRC reconfiguration (RRCReconfiguration) signaling, or RRC resume (RRCResume) signaling. Alternatively, the fifth message is sent to the UE in a unicast or multicast manner along with data transmission, or the fifth message is carried on a separately allocated PDSCH. For example, the base station may indicate BWP information and/or BH information to the UE in a table manner. The base station sends the fifth message to the UE in a unicast manner or in a grouping manner, to flexibly control parameter values or parameter variations of each UE or each UE group. Different parameter values are configured for different UE at different locations, to achieve an objective of optimizing a system parameter and optimizing communication performance of the UE or communication performance of the system, thereby further providing higher flexibility. For example, the base station may configure different BH information for different UE based on different beam coverage in which different UE is located, to optimize a scheduling delay of each UE or each UE group and improve communication efficiency of the UE and the system. It may be understood that the configuration message may be alternatively sent through a broadcast message. This is not enumerated herein.

When the UE switches to a specific BWP, BH information corresponding to the BWP may be used. For example, when the UE performs BWP switching, the BH information may be reconfigured. It may be understood that when the UE performs BWP switching, reconfigured BH information may be the same as or different from BH information corresponding to a BWP before the UE performs BWP switching. This is not limited in this embodiment of this application.

For example, the fifth message may include the information about the second BWP and the BH information corresponding to the second BWP. In this case, the fifth message may be further understood as BWP information element (BWP information element) information. It may be understood that the following fifth message includes only the downlink BH information. In this case, the uplink BH information is the same as the downlink BH information by default. Optionally, the uplink BH information may be alternatively carried in the BWP information.

For example, content of the fifth message may be shown as follows:

```
BWP ::=                            SEQUENCE {
locationAndBandwidth               locationAndBandwidth,
subcarrierSpacing                  SubcarrierSpacing
cyclicPrefix                       ENUMERATED {extended} OPTIONAL
BH_on_duration_DL    ENUMERATED {ms1, ms2, ms3, ms4, ms5, ms6, ms8,
ms10, ms20, ms30, ms40, ms50, ms60, ms80, ms100, ms200, ms300, ms400, ms500, ms600,
ms800, ms1000, ms1200, ms1600, ms3200, ms6400, spare6, spare5, spare4, spare3, spare2,
spare1} OPTIONAL
BH_cycle_DL–BH_Start_Offset_DL     CHOICE {
ms10                               INTEGER(0..9),
ms20                               INTEGER(0..19),
ms32                               INTEGER(0..31),
ms40                               INTEGER(0..39),
ms60                               INTEGER(0..59),
ms64                               INTEGER(0..63),
ms70                               INTEGER(0..69),
ms80                               INTEGER(0..79),
ms128                              INTEGER(0..127),
ms160                              INTEGER(0..159),
ms256                              INTEGER(0..255),
ms320                              INTEGER(0..319),
ms512                              INTEGER(0..511),
ms640                              INTEGER(0..639),
ms1024                             INTEGER(0..1023),
ms1280                             INTEGER(0..1279),
ms2048                             INTEGER(0..2047),
ms2560                             INTEGER(0..2559),
ms5120                             INTEGER(0..5119),
ms10240                            INTEGER(0..10239)} OPTIONAL
}
```

Herein, locationAndBandwidth represents a frequency-domain start location and a bandwidth of the second BWP, subcarrierSpacing represents an SCS used by the second BWP, and cyclicPrefix represents a CP type. BH_on_duration_DL represents an illumination time length or a dwell time length of a downlink beam. For example, ms1 represents an illumination time length of 1 ms, and ms2 represents an illumination time length of 2 ms. By analogy, ms6400 represents an illumination time length of 6400 ms. It may be understood that identifiers 1 to 6400 in ms 1 to ms6400 shown herein indicate different illumination time lengths of downlink beams. In addition, spare6 to spare1 represent reserved illumination time lengths. It may be understood that identifiers 6 to 1 in spare6 to spare1 represent illumination time lengths that can be reserved. 1 to 6 shown herein are merely examples. This is not limited in this embodiment of this application. If necessary, spare6 to spare1 may represent other time lengths, or may be reserved for other purposes. BH_cycle_DL-BH_Start_Offset_DL includes two parameters: BH_cycle_DL and BH_Start_Offset_DL. BH_cycle_DL represents the downlink BH cycle periodicity, and BH_Start_Offset_DL represents the downlink BH start offset. For example, ms10 indicates that the downlink BH cycle periodicity is 10 ms, and integer{0..9} indicates that the downlink BH start offset may be any one of 0 ms to 9 ms; and ms20 indicates that the downlink BH cycle periodicity is 20 ms, and integer{0..19} indicates that the downlink BH start offset may be any one of 0 ms to 19 ms. By analogy, ms 10240 indicates that the downlink BH cycle periodicity is 10240, and integer{0.. 10239} indicates that the downlink BH start offset may be any one of 0 ms to 10239 ms. It may be understood that identifiers 10 to 10240 in ms10 to ms 10240 shown herein indicate different illumination time lengths of downlink beams. It may be understood that the downlink BH start offset may be a non-negative number. For example, a unit of the downlink BH start offset may be a subframe length or another unit of time. This is not limited in this embodiment of this application. It may be understood that the descriptions of the fifth message are also applicable to at least one of: the configuration message (for example, the configuration message shown in step 401 in FIG. 4a) or the broadcast message (for example, the broadcast message shown in step 601 in FIG. 6a and the broadcast message shown in step 801 in FIG. 8a) shown in embodiments of this application. For a message of configuring both information about a BWP and BH information, refer to the fifth message (including information about a BWP and BH information that are configured by using Msg2 below) provided in this embodiment of this application. This is not enumerated herein.

In another possible implementation, when the UE does not perform BWP switching, a parameter in the BH information may also be reconfigured or updated. For example, the base station may send a differential value to the UE by using an incremental update method. For example, the fifth message sent by the base station to the UE may include any one or more of the following: a variation of the downlink BH dwell time, a variation of the downlink BH start offset, a variation of the downlink BH cycle periodicity, a variation of the uplink BH dwell time, a variation of the uplink BH start offset, and a variation of the uplink BH cycle periodicity. Therefore, the UE may determine one or more of the following:

$$BH\_Start\_Offset\_DL=BH\_Start\_Offset\_DL\_old+\Delta BH\_Start\_Offset\_DL;$$
$$BH\_on\_duration\_DE=BH\_on\_duration\_DE\_old+\Delta BH\_on\_duration\_DE;$$
$$BH\_cycle\_DL=BH\_cycle\_DL\_old+\Delta BH\_cycle\_DE;$$
$$BH\_Start\_Offset\_UE=BH\_Start\_Offset\_UE\_old+\Delta BH\_Start\_Offset\_UE;$$
$$BH\_on\_duration\_UE=BH\_on\_duration\_UE\_old+\Delta BH\_on\_duration\_UE;$$
$$BH\_cycle\_UE=BH\_cycle\_UE\_old+\Delta BH\_cycle\_UE.$$

Herein, BH_Start_Offset_DL represents an updated downlink BH start offset, BH_Start_Offset_DL_old represents a downlink BH start offset before update, and $\Delta$BH_Start_Offset_DL represents the variation of the downlink BH start offset. BH_on_duration_DL represents an updated downlink BH dwell time, BH_on_duration_DL_old represents a downlink BH dwell time before update, and $\Delta$BH_on_duration_DL represents the variation of the downlink BH dwell time. BH_cycle_DL represents an updated downlink BH cycle periodicity, BH_cycle_DL_old represents a downlink BH cycle periodicity before update, and $\Delta$BH_cycle_DL represents the variation of the downlink BH cycle periodicity. BH_Start_Offset_UL represents an updated uplink BH start offset, BH_Start_Offset_UL_old represents an uplink BH start offset before update, and $\Delta$BH_Start_Offset_UL represents the variation of the uplink BH start offset. BH_on_duration_UL represents an updated uplink BH dwell time, BH_on_duration_UL_old represents an uplink BH dwell time before update, and $\Delta$BH_on_duration_UL represents the variation of the uplink BH dwell time. BH_cycle_UL represents an updated uplink BH cycle periodicity, BH_cycle_UL_old represents an uplink BH cycle periodicity before update, and $\Delta$BH_cycle_UL represents the variation of the uplink BH cycle periodicity.

Optionally, each variation shown above may have a positive/negative difference. Therefore, the UE can obtain an updated parameter value based on a parameter value before update (for example, according to an addition operation or a subtraction operation). Optionally, each variation shown above does not have a positive/negative difference. Therefore, the UE may obtain update in a pre-agreed manner, for example, according to an addition operation (or a subtraction operation) shown above. Optionally, in addition to a variation of one or more parameters in the BH information shown above, the configuration information may further include indication information indicating an addition operation or a subtraction operation. It may be understood that the foregoing manners are merely examples, and should not be understood as a limitation on embodiments of this application.

FIG. 8a is a schematic flowchart of a random access method in a satellite communication method according to an embodiment of this application. It may be understood that for specific descriptions of an example of the initial access phase shown in FIG. 5a and an example of step 602 shown in FIG. 6a, reference may be made to FIG. 8a. As shown in FIG. 8a, the method includes the following steps.

801: UE receives a broadcast message, and selects a random access resource in an uplink BH dwell time to initiate random access.

It may be understood that for descriptions of the broadcast message, reference may be made to the foregoing embodiments. Details are not described herein again. For example, the broadcast message includes BH information. The UE may select, based on the BH information, an available random access resource in the uplink BH dwell time to initiate random access.

802: The UE sends a preamble (preamble) based on the random access resource. Correspondingly, the base station receives the preamble.

Step 802 may be alternatively replaced with a process in which the UE sends a message 1 (which may also be referred to as Msg1) based on the random access resource. Correspondingly, the base station receives the message 1. It may be understood that the message 1 shown in this embodiment of this application and a message 2, a message 3, and a message 4 shown below may be understood as different messages. For descriptions of the message 1 to the message 4, refer to a related standard or protocol.

FIG. 8b is a schematic diagram of a relationship between uplink and downlink timing and BH information in an access process according to an embodiment of this application. As shown in FIG. 8b, the UE receives the broadcast message in a downlink BH dwell time. Optionally, the available random access resource determined by the UE is in the uplink BH dwell time, for example, Msg1 in a dashed line part shown in FIG. 8b. However, in consideration of timing advance, the base station may receive Msg1 in an agreed time. Therefore, the UE needs to send Msg1 at Msg1 in a solid line part. It may be understood that descriptions of the solid line part and the dashed line part are also applicable to Msg3 and a HARQ message described below. Details are not described again below. It may be understood that the available random access resource that is shown in this embodiment of this application and that is shown in the dashed line part shown in FIG. 8b is merely an example. For example, the available random access resource determined by the UE based on an actual situation of the UE may be in a previous uplink BH dwell time or a next BH dwell time of the uplink BH dwell time shown in FIG. 8b.

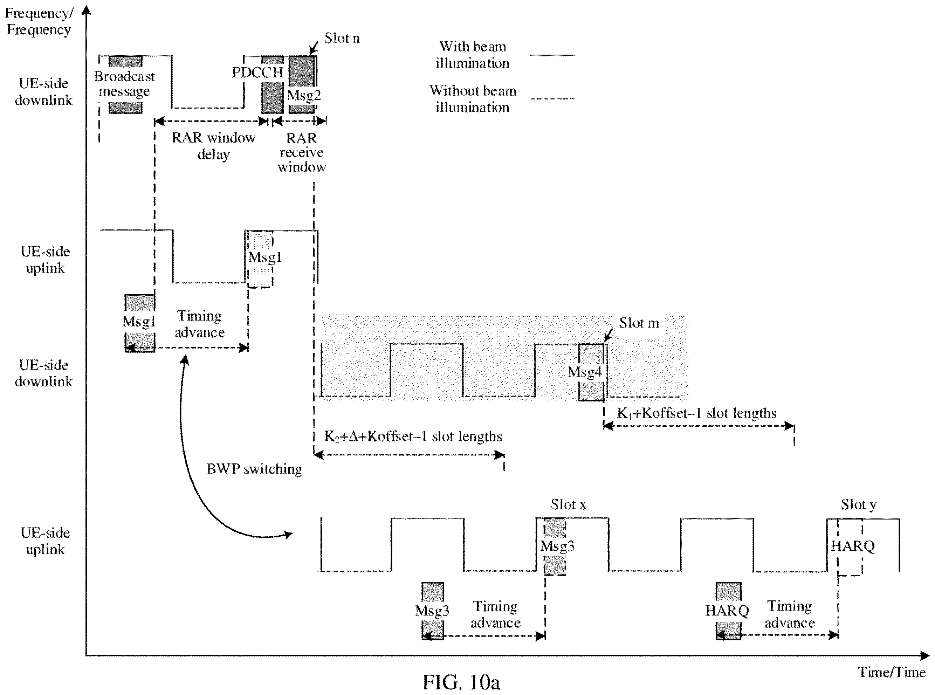

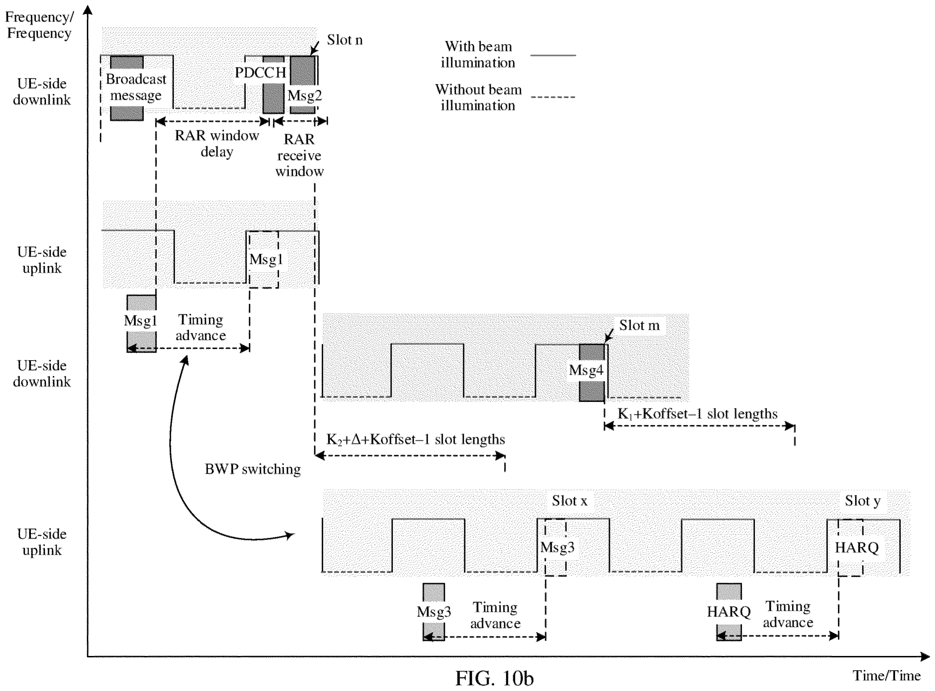

It may be understood that FIG. 8b is a schematic diagram of a relationship between uplink and downlink timing and BH information shown by using an example in which BH information is not updated. However, in an access process of the UE, the UE may perform BWP switching. The BH information may be alternatively reconfigured, updated, or the like, as shown in FIG. 10a or FIG. 10b below.

803: After receiving the preamble sent by the UE, the base station determines, based on a random access channel occasion (random access channel occasion, RO) location and the preamble, a beam position in which the UE is located.

For example, after receiving an SSB, the UE may determine an available RO (a time-frequency resource used for sending a preamble) and an available preamble based on an index number of the SSB. Therefore, after receiving the preamble, the base station may determine, based on the RO and the preamble, the index number of the SSB selected by the UE; and then determine, based on a beam position for broadcasting the SSB, the beam position in which the UE is located. It may be understood that a method for determining, based on the RO location and the preamble, the beam position in which the UE is located is merely an example.

804: The base station selects a closest uplink BH dwell time from an available downlink BH dwell time of the beam position determined by the base station, to send a RAR.

Step 804 may also be replaced with a process in which the base station selects the closest dwell time from the available downlink BH dwell time of the beam position determined by the base station, to send a message 2 (which may also be referred to as Msg2). It may be understood that the available BH dwell time (for example, including an available downlink BH dwell time and an available uplink B dwell time) shown in this embodiment of this application indicates that the UE may send an uplink signal or receive a downlink signal in the BH dwell time, or may be understood as a BH dwell time determined by the UE according to an actual situation.

805: After sending the preamble, the UE delays starting a RAR receive window based on a RAR window delay (RAR window delay) start amount.

In a satellite communication system, because a round-trip delay between the UE and the base station is relatively large, the UE cannot receive the RAR in time. Therefore, the UE may delay opening the RAR receive window. The RAR window delay start amount may be obtained based on configuration of the base station, or obtained based on an agreed calculation relationship, or determined based on a round-trip delay between the UE and the base station. This is not limited herein. It may be understood that a sequence of step 805, step 803, and step 804 is not limited in this embodiment of this application.

For example, the UE may start the RAR receive window based on one or more of the following:

The UE sends the preamble. After delaying is performed for a time length of the RAR window delay start amount, if a time at which a next PDCCH may appear is in the downlink BH dwell time, the RAR receive window is opened at the time at which the next PDCCH may appear.

The UE sends the preamble. After delaying is performed for a time length of the RAR window delay start amount, if a time at which a next PDCCH may appear is not in the downlink BH dwell time, the RAR receive window is opened at the time at which the next PDCCH may appear in the downlink BH dwell time after delaying for the time length of the RAR window delay start amount. PDCCH and PDSCH information corresponding to the RAR are received.

In other words, after the UE sends the preamble, the RAR receive window may be opened when the following three conditions are met: (1) delaying performed for the time length of the RAR window delay start amount; (2) in the available downlink BH dwell time; and (3) the time at which the next PDCCH may appear.

A start time of the RAR receive window is agreed. The UE sends the preamble. The RAR receive window is opened after X_RAR slots in a next available downlink BH dwell time after delaying for the time length of the RAR window delay start amount. Herein, X_RAR is a non-negative integer. A value of X_RAR may be agreed in a protocol, configured by the base station, or the like. This is not limited in this embodiment of this application. For another example, it is agreed that the RAR receive window is opened in a start location of a first possible PDCCH receive window in a next downlink BH dwell time after delaying for the time length of the RAR window start amount.

As shown in FIG. 8b, after the UE sends Msg1, starting of the RAR receive window may be delayed. In this way, the delayed started RAR receive window is in the downlink BH dwell time. Therefore, the UE may receive, in the downlink BH dwell time, a PDCCH corresponding to the RAR and a PDSCH carrying the RAR.

806: A time at which the UE receives the PDSCH carrying the RAR ends in a slot n. If an uplink slot $n+K_2+\Delta+Koffset$ is in the uplink BH dwell time, the UE sends a message 3 (which may also be referred to as Msg3) in the uplink slot (that is, $n+K_2+\Delta+Koffset$). If an uplink slot $n+K_2+\Delta+Koffset$ is not in the uplink BH dwell time, the UE sends Msg3 in an uplink BH dwell time after the uplink slot $n+K_2+\Delta+Koffset$.

For example, $K_2$ may be an uplink scheduling delay configured by the base station, $\Delta$ is an adjustment amount, the adjustment amount may be a value agreed in a protocol, and Koffset may be an uplink scheduling delay configured by the base station or determined by the UE according to an agreement. This is not limited herein. It may be understood that the downlink slot n shown in this embodiment of this application may be understood as the first time unit shown in FIG. 4b, the uplink slot $n+K_2+\Delta+Koffset$ may be understood as the second time unit shown in FIG. 4b, and a slot x shown below may be understood as the third time unit shown in FIG. 4b. It may be understood that for descriptions of $K_2$ and Koffset, reference may be made to a related standard or protocol. Details are not described herein. It may be understood that the slot n shown in this embodiment of this application indicates that a time at which the UE receives the PDSCH carrying the RAR ends in the slot whose index is n. A value of n is not limited in this embodiment of this application. For example, n may be determined based on the SCS used by the UE. For example, when the SCS is 120 kHz, indexes of slots may include 0, 1, 2, ..., and 79. Descriptions of n are also applicable to the method shown in FIG. 4b.

Optionally, that the UE sends Msg3 in the uplink BH dwell time after the uplink slot $n+K_2+\Delta+Koffset$ may include that the UE sends Msg3 in an available uplink BH dwell time after the uplink slot $n+K_2+\Delta+Koffset$, or the UE sends Msg3 in a first uplink BH dwell time after the uplink slot $n+K_2+\Delta+Koffset$, or the UE sends Msg3 in a second uplink BH dwell time after the uplink slot $n+K_2+\Delta+Koffset$. The UE may determine, according to an actual situation of the UE, the uplink BH dwell time including a sending time of Msg3.

For example, a slot in which the UE sends Msg3 may be a slot x in an uplink BH dwell time after the uplink slot $n+K_2+\Delta+Koffset$. Herein, x is a non-negative integer (for example, x=1). Optionally, the slot x may be determined based on the uplink BH dwell time and an uplink BH cycle periodicity. Optionally, x may satisfy:

$$x=\lfloor BH\_on\_duration\_UL*(Time\_length\_x/(BH\_cycle\_UL-BH\_on\_duration\_UL))/slot\_length \rfloor$$
.

Herein, Time_length_x represents a time length (a time length Time_length_x shown in FIG. 8b) occupied (which may also be understood as overlapped) by $K_2+\Delta+Koffset-1$ slot lengths in a non-dwell time (which may also be referred to as a non-dwell period) before the uplink BH dwell time in which Msg3 is sent, and slot_length represents a unit of time. The unit of time may be a granularity of one uplink slot length, one downlink slot length, 1 ms, 0.125 ms, or the like. $\lfloor \rfloor$ represents rounding down. Certainly, the foregoing expression manner of x may also be rounding up $\lceil \rceil$.

It may be understood that the slot x in the uplink BH dwell time indicates an $x^{th}$ slot in the uplink BH dwell time, or an $x^{th}$ slot in a frame in the uplink BH dwell time. It may be understood that the method is determining a same proportion in the dwell time by using a proportion of $K_2+\Delta+Koffset-1$ slot lengths in one non-dwell time as a reference and determining a time domain resource for sending an uplink signal. It may be understood that the $K_2+\Delta+Koffset-1$ slot lengths shown in this embodiment of this application are merely an example, and are time lengths shown by using an end slot of the RAR as a reference. If a start slot of the RAR is used as a reference, the $K_2+\Delta+Koffset-1$ slot lengths shown in this embodiment of this application may be alternatively replaced with $K_2+\Delta+Koffset$ slot lengths. Optionally, a value of x may also be agreed in a protocol, or may be sent by the base station to the UE, or the like.

Optionally, a slot number or a symbol number of uplink data in the uplink BH dwell time may be determined based on a slot number (slot number) or a symbol number (symbol number) of a downlink signal for scheduling uplink data in the downlink BH dwell time. For example, if scheduling information received by the UE ends in a slot n and/or a symbol n, the UE may send an uplink signal in the slot n and/or the symbol n in the uplink BH dwell time. For another example, if the downlink signal for scheduling the uplink data is in an $(X\_DL)^{th}$ slot and/or a $(Y\_DL)^{th}$ symbol in the downlink BH dwell time, the uplink data is sent in the $(X\_DL)^{th}$ slot and/or the $(Y\_DL)^{th}$ symbol in the uplink BH dwell time.

Optionally, a time domain resource for sending the uplink data may be determined after a delay based on a start time that is of a dwell time of an uplink beam and that corresponds to an overlapping time length Time_length_x (for example, a time length occupied in a non-dwell time before a next uplink BH dwell time) of $K_2+\Delta+Koffset-1$ slot lengths in one non-dwell time. For example, the uplink signal is sent in a next uplink slot after a start delay Time_length_x of a next available uplink beam dwell time. For example, the uplink signal is sent in a $\lceil Time\_length\_x/slot\_length\rceil^{th}$ slot, a $\lfloor Time\_length\_x/slot\_length\rfloor^{th}$ slot, a $(\lceil Time\_length\_x/slot\_length\rceil+1)^{th}$ slot, or a $(\lfloor Time\_length\_x/slot\_length\rfloor+1)^{th}$ slot in the uplink dwell time. Alternatively, a remaining time length obtained by subtracting an overlapping dwell time length from $K_2+\Delta+Koffset-1$ slot lengths is used as a delay in the dwell time of the uplink beam. The uplink signal is sent in a next uplink slot. For example, the uplink signal is sent in a

$$(\lceil((K_2+\Delta+Koffset-1)*DL\_slot-BH\_on\_duration\_UL)/slot\_length\rceil)^{th} \text{ slot, a}$$

$$(\lfloor((K_2+\Delta+Koffset-$$

$$1)*DL\_slot-BH\_on\_duration\_UL)/slot\_length\rfloor)^{th}$$

slot, a

$$(\lceil((K_2+\Delta+Koffset-1)*DL\_slot-$$

$$BH\_on\_duration\_UL)/slot\_length\rceil+1)^{th}$$

slot, or a

$$(\lfloor((K_2+\Delta+Koffset-1)*DL\_slot-$$

$$BH\_on\_duration\_UL)/slot\_length\rfloor+1)^{th}$$

slot in a next available uplink dwell time. Herein, DL_slot represents a slot length of a received downlink signal.

807: After receiving Msg3 sent by the UE, the base station sends a contention resolution message (which may also be referred to as Msg4) in a closest available downlink BH dwell time of the beam position in which the UE is located.

The base station sends Msg4 in the closest available downlink BH dwell time of the beam position in which the UE is located, so that the UE can receive Msg4 in the downlink BH dwell time of the UE. It may be understood that the closest downlink BH dwell time shown in this embodiment of this application may also be understood as an earliest downlink BH dwell time.

Optionally, if whether a beam in the downlink BH dwell time is a broadcast beam or another beam (that is, the base station does not explicitly indicate a dwell time broadcast beam or traffic beam to the UE) is not distinguished in the BH information sent by the base station to the UE, the UE may determine, based on whether an SSB is sent, whether the dwell period is a dwell period of a broadcast beam. For example, when the UE receives a downlink signal such as a RAR or Msg4, if a slot that is determined by the base station for sending the RAR or Msg4 is in a downlink BH dwell time of a broadcast beam, the base station may postpone the sending and send the downlink signal such as the RAR or Msg4 on a next another beam. In other words, it may be understood that the another beam shown in this embodiment of this application may include a traffic beam, an auxiliary broadcast beam, and the like. The traffic beam may be understood as a beam that provides a service for the UE after the UE accesses the system, or a beam other than a beam for sending a broadcast message in the initial access phase of the UE. The auxiliary broadcast beam shown in this embodiment of this application is relative to a primary broadcast beam. For example, if the UE receives the broadcast message, and then initiates random access based on the broadcast message, the beam corresponding to the broadcast message may be the primary broadcast beam.

It may be understood that the configuration information included in the broadcast message in step 801 may vary with beam services. For example, the broadcast message may include BH information corresponding to the broadcast beam and BH information corresponding to the traffic beam. Alternatively, the BH information of the broadcast beam is the same as the BH information of the traffic beam. Therefore, the broadcast message may include the BH information of the broadcast beam or the traffic beam.

Optionally, if the BH information of the broadcast beam and the BH information of the traffic beam are distinguished in the BH information sent by the base station to the UE, the UE needs to receive the downlink signal such as the RAR or Msg4 in a downlink BH dwell duration of a corresponding beam.

808: A time at which the UE receives Msg4 ends in a slot m. If an uplink slot $m+K_1+Koffset$ is in the uplink BH dwell time, the UE sends a HARQ message of Msg4 in the uplink slot (that is, $m+K_1+Koffset$). If an uplink slot $m+K_1+Koffset$ is not in the uplink BH dwell time, the UE sends a HARQ message of Msg4 in an uplink BH dwell time after the uplink slot $m+K_1+Koffset$.

For example, $K_1$ may be an uplink scheduling delay configured by the base station, and Koffset may be an uplink scheduling delay configured by the base station or calculated and determined by the UE according to an agreement. This is not limited herein. It may be understood that the downlink slot m shown in this embodiment of this application may be understood as the fourth time unit shown in FIG. 4b, the uplink slot $m+K_1+Koffset$ may be understood as the fifth time unit shown in FIG. 4b, and a slot y shown below may be understood as the sixth time unit shown in FIG. 4b. It may be understood that for descriptions of $K_1$ and Koffset, reference may be made to a related standard or protocol. Details are not described herein. It may be understood that the slot n shown in this embodiment of this application indicates that the time at which the UE receives Msg4 ends in a slot whose index is m. A value of m is not limited in this embodiment of this application. For example, m may be determined based on the SCS used by the UE. For example, when the SCS is 120 kHz, indexes of slots may include 0, 1, 2, ..., and 79. Descriptions of m are also applicable to the method shown in FIG. 4b.

Optionally, that the UE sends the HARQ message in the uplink BH dwell time after the uplink slot $m+K_1+Koffset$ may include that the UE sends the HARQ message in an available uplink BH dwell time after the uplink slot $m+K_1+Koffset$, or the UE sends the HARQ message in a first uplink BH dwell time after the uplink slot $m+K_1+Koffset$, or the UE sends the HARQ message in a second uplink BH dwell time after the uplink slot $m+K_1+Koffset$. The UE may determine, according to an actual situation of the UE, an uplink BH dwell time including a sending time of the HARQ message.

For example, a slot in which the UE sends the HARQ message may be the slot y in the uplink BH dwell time after the uplink slot $m+K_1+Koffset$. Herein, y is a non-negative integer (for example, y=1). Optionally, the slot y may be determined based on the uplink BH dwell time and the uplink BH cycle periodicity. Optionally, y may satisfy:

$$y=\lfloor BH\_on\_duration\_UL*(Time\_length\_y/(BH\_cycle\_UL-BH\_on\_duration\_UL))/slot\_length \rfloor$$

Herein, Time_length_y represents a time length (a time length Time_length_y shown in FIG. 8b) occupied (which may also be understood as overlapped) by Ki+Koffset-1 slot lengths in a non-dwell time before the uplink BH dwell time in which the HARQ message is sent, and slot_length represents a unit of time. The unit of time may be a granularity of one uplink slot length, one downlink slot length, 1 ms, 0.125 ms, or the like. Certainly, the foregoing expression manner of y may also be rounding up [].

It may be understood that the slot y in the uplink BH dwell time indicates a $y^{th}$ slot in the uplink BH dwell time, or a $y^{th}$ slot in a frame in the uplink BH dwell time. It may be understood that the method is determining the same proportion in the dwell time by using a proportion of the $K_1+Koffset-1$ slot lengths in one non-dwell time as a reference and determining a time domain resource for sending an uplink signal. It may be understood that the $K_1+Koffset-1$ slot lengths shown in this embodiment of this application are merely an example, and are time lengths shown by using an end slot of Msg4 as a reference. If a start slot of Msg4 is used as a reference, the $K_1+Koffset-1$ slot lengths shown in this embodiment of this application may be replaced with $K_1+Koffset$ slot lengths. Optionally, a value of Koffset may be agreed in a protocol, or may be sent by the base station to the UE, or the like. This is not limited in this embodiment of this application.

Optionally, the slot number or the symbol number of the uplink data in the uplink dwell time may be determined based on the slot number or the symbol number of the downlink signal for scheduling the uplink data in the downlink BH dwell time. For descriptions, refer to step 806. Details are not described herein again.

Optionally, the time domain resource for sending the uplink data may be determined after a delay based on a start time that is of a dwell time of an uplink beam and that corresponds to an overlapping time length Time_length_y (for example, a time length occupied in a non-dwell period before a next uplink BH dwell time) of $K_1$+Koffset-1 slot lengths in one non-dwell time. For example, the uplink signal is sent in a next uplink slot after a start delay Time_length_y of a next available uplink beam dwell time. For example, the uplink signal is sent in a $\lceil Time\_length\_y/slot\_length \rceil^{th}$ slot, a $\lfloor Time\_length\_y/slot\_length \rfloor^{th}$ slot, a $(\lceil Time\_length\_y/slot\_length \rceil + 1)^{th}$ slot, or a $(\lfloor Time\_length\_y/slot\_length \rfloor + 1)^{th}$ slot in the uplink dwell time. Alternatively, a remaining time length obtained by subtracting an overlapping dwell time length from the Ki+Koffset-1 slot lengths is used as a delay in the dwell time of the uplink beam. The uplink signal is sent in a next uplink slot. For example, as shown in FIG. 8b, the uplink signal is sent in a

$$(\lceil ((K_1+Koffset-1)*DL\_slot-BH\_on\_duration\_UL)/slot\_length \rceil)^{th}$$ slot, a

$$(\lfloor ((K_1+Koffset-1)*DL\_slot-BH\_on\_duration\_UL)/slot\_length \rfloor)^{th}$$ slot, a

$$(\lceil ((K_1+Koffset-1)*DL\_slot-BH\_on\_duration\_UL)/slot\_length \rceil + 1)^{th}$$

slot, or a

$$(\lfloor ((K_1+Koffset-1)*DL\_slot-BH\_on\_duration\_UL)/slot\_length \rfloor + 1)^{th}$$

slot in a dwell time. Herein, DL_slot represents a slot length of a received downlink signal.

It may be understood that FIG. 8a and FIG. 8b are shown by using an example of four-step random access. This embodiment of this application is also applicable to two-step random access. For example, the UE receives the broadcast message, and selects an available random access resource in the uplink BH dwell time based on the random access configuration information in the broadcast message. Then, the UE sends a message A (MsgA) based on a random access resource. Correspondingly, the base station receives the message A. After receiving the message A sent by the UE, the base station determines, based on the RO location and the message A, the beam position in which the UE is located. The base station selects an optimal uplink BH dwell time from an available downlink BH dwell time of the beam position determined by the base station, to send a message B (MsgB). After sending the message A, the UE delays starting the RAR receive window based on the RAR window delay (RAR window delay) start amount. For example, the UE determines, based on a timing relationship between the downlink BH dwell time and a message B receive window, a time for starting the message B receive window. It may be understood that for specific descriptions of two-step random access, for example, reference may be made to four-step random access shown in FIG. 8a and FIG. 8b. For example, for related descriptions of sending the message A by the UE, refer to step 801 and step 802 shown in FIG. 8a. For related descriptions of receiving the message B by the UE, refer to step 803 to step 805 shown in FIG. 8a. Details are not described herein again.

It should be noted that the descriptions of step 801 to step 808 shown in this embodiment of this application are also applicable to any one or more of the following:

(1) HARQ-ACK feedback; (2) PUSCH scheduling by using a RAR; (3) PUSCH scheduling by using DCI; (4) uplink aperiodic SRS signal scheduling by using DCI; and (5) CSI information scheduling by using DCI. A timing relationship between the scenario (1) and the scenario (2) has been described in step 808 and step 806. A timing relationship of the scenario (3) to the scenario (5) is similar to that of the scenario (1) and the scenario (2). A timing relationship of uplink/downlink signal scheduling may be determined with reference to the descriptions of the timing relationship in the foregoing step 801 to step 808. This is not enumerated herein.

In this embodiment of this application, with reference to beam hopping, receiving slots and/or sending slots of different messages in a random access process are redesigned, to effectively ensure that the UE receives a downlink signal in the downlink BH dwell time and sends an uplink signal in the uplink BH dwell time.

In some embodiments of this application, the uplink BH information and the downlink BH information may be the same. For example, the uplink BH start offset and the downlink BH start offset may be the same.

In some other embodiments of this application, the uplink BH start offset is different from the downlink BH start offset. For example, when the uplink BH cycle periodicity in the uplink BH information is the same as the downlink BH cycle periodicity in the downlink BH information, and/or when the uplink BH dwell time in the uplink BH information is the same as the downlink BH dwell time in the downlink BH information, to reduce signaling overheads, a start offset difference may be newly added to the BH information. The start offset difference may indicate a relationship between the uplink BH start offset and the downlink BH start offset. Alternatively, the start offset difference may indicate a time staggering relationship between the uplink BH start offset and the downlink BH start offset, or indicate a timing delay or a timing offset relationship between the uplink BH start offset and the downlink BH start offset. Therefore, the BH information may not include the uplink BH information. For example, the uplink BH information may be indicated based on the start offset difference, thereby effectively reducing signaling overheads. Certainly, the BH information may not include the downlink BH information. For example, the downlink BH information may be indicated based on the start offset difference.

For example, content of the start offset difference may be shown as follows:
BH_DL_UL_offset ENUMERATED {ms0, ms1, ms2, ms3, ms4, ms5, ms6, ms8, ms10, ms20, ms30, ms40, ms50, ms60, ms80, ms100, ms200, ms300, ms500, ms750, ms1280, ms1920, ms2560, spare9, spare8, spare7, spare6, spare5, spare4, spare3, spare2, spare 1 }.

Herein, BH_DL_UL_offset represents the start offset difference, ms0 represents that a difference between the uplink BH start offset and the downlink BH start offset is 0 (that is, the uplink BH start offset is the same as the downlink BH start offset), and ms1 represents that a difference between the uplink BH start offset and the downlink BH start offset is 1 ms. By analogy, ms2560 indicates that a difference between the uplink BH start offset and the downlink BH start offset is 2560 ms. It may be understood that identifiers 0 to 2560 in ms0 to ms2560 shown herein indicate different differences. Herein, spare1 to spare9 represent reserved start offset differences that can be used to expand an offset difference or indicate other purposes.

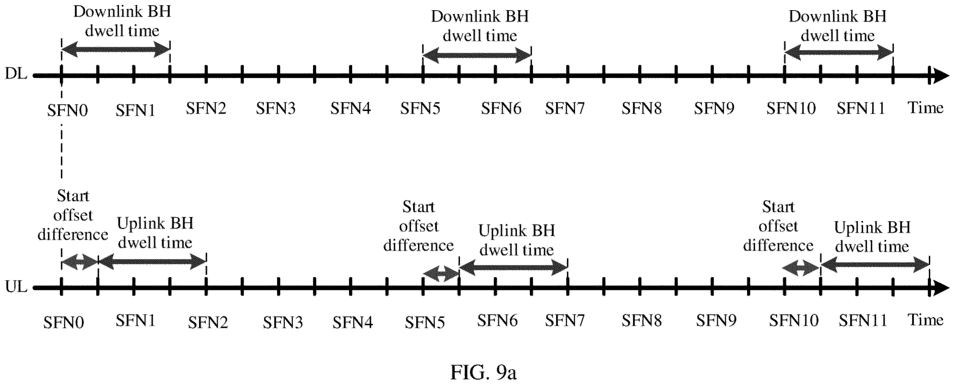

FIG. 9a is a schematic diagram of a start offset difference according to an embodiment of this application. As shown in FIG. 9a, an uplink BH start offset is delayed for a period of time relative to a downlink BH start offset. Alternatively, a relationship shown in FIG. 9a may be further understood as follows: an uplink BH cycle periodicity is delayed for a period of time (that is, BH_DL_UL_offset units of time) relative to a downlink BH cycle periodicity. In other words, a scanning periodicity and a dwell time of uplink BH are the same as those of downlink BH. A difference is that start times of all periodicities are different.

For example, the BH information shown in this embodiment of this application may include an uplink BH dwell time, the uplink BH cycle periodicity, a start offset difference, and the uplink BH start offset (that is, by default, the downlink BH dwell time is the same as the uplink BH dwell time, and/or the uplink BH cycle periodicity is the same as the downlink BH cycle periodicity); or include a downlink BH dwell time, the downlink BH cycle periodicity, a start offset difference, and the downlink BH start offset (that is, by default, the downlink BH dwell time is the same as the uplink BH dwell time, and/or the uplink BH cycle periodicity is the same as the downlink BH cycle periodicity).

For example, the uplink BH dwell time is the same as the downlink BH dwell time, and the uplink BH cycle periodicity is the same as the downlink BH cycle periodicity. It may be further understood that the BH information includes a BH dwell time (for example, represented by BH_on_duration), a BH cycle periodicity (BH_cycle), the start offset difference, and the uplink BH start offset; or a BH dwell time (for example, represented by BH_on_duration), a BH cycle periodicity (BH_cycle), the start offset difference, and the downlink BH start offset. For example, the BH information includes that BH_on_duration=4 ms, BH_cycle=800 ms, BH_DL_UL_offset=12 ms, and BH Start_Offset DL=0.

Scanning of an initial BWP or an initial access beam is small-cell configuration. Therefore, BH information corresponding to the initial BWP may indicate a start location of a periodicity in which a broadcast beam (for example, an SSB) scans all beam positions, a periodicity time length, and a dwell time length of each beam position. However, a start and an end of a dwell time of a broadcast beam sensed by the UE are different in each beam. Therefore, the UE needs to determine a specific periodicity characteristic of BH information of a broadcast beam in a beam position in which the UE is located, for example, a start time and an end time of a dwell time of the broadcast beam in the beam position in which the UE is located. For example, if the BH information includes BH_on_duration=4 ms and BH_cycle=800 ms, the base station needs to scan 200 beam positions. A start time of a scanning periodicity of the 200 beam positions is as follows: It may be obtained according to [(SFN*10)+SSFN]mod(BH_cycle)=BH_Start_Offset_DL=0 that a start subframe number of the scanning periodicity of the 200 beam positions satisfies: SFN0 SSFN0, SFN80 SSFN0, SFN160 SSFN0, SFN240 SSFN0, ..., and the like.

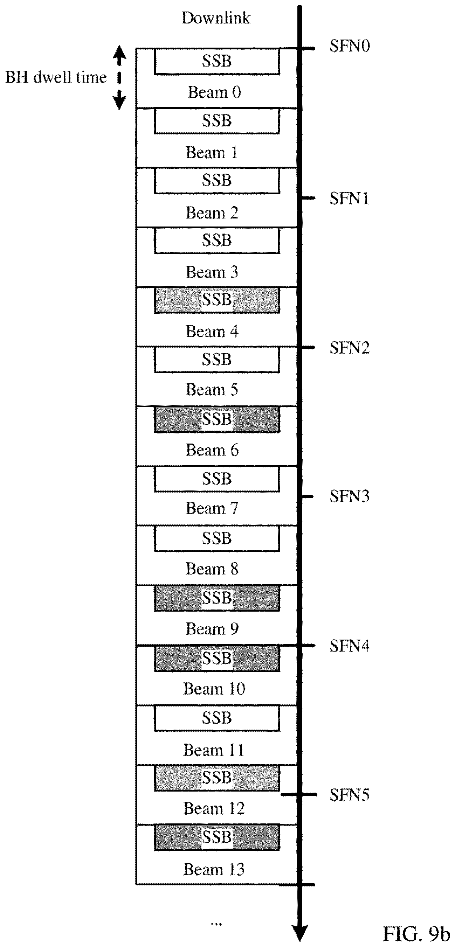

FIG. 9b is a schematic diagram in which UE determines a dwell time of a beam according to an embodiment of this application. As shown in FIG. 9b, the UE may determine, based on a time location of a detected SSB, a start time and an end time of a dwell time (for example, BH_on_duration=4 ms) of a beam of the UE, and periodically performs repetition based on a BH cycle periodicity (for example, BH_cycle=800 ms). For example, if the UE detects a broadcast message (for example, an SSB) on a beam 5 in SFN2, the UE may determine, based on a time location of the SSB, that a dwell time of the beam 5 is first four subframes (for example, one subframe occupies 1 ms) in SFN2. Optionally, the UE may further periodically receive an SSB and/or other broadcast information in an illumination range of the beam 5 according to the BH cycle periodicity such as 800 ms.

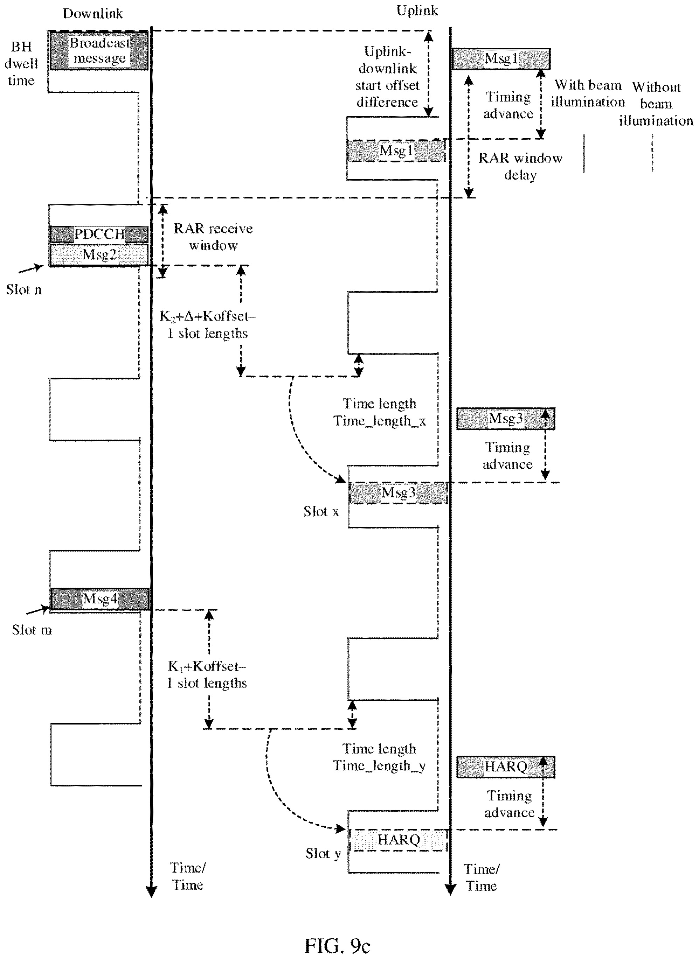

FIG. 9c is a schematic diagram of a relationship between BH information and time according to an embodiment of this application. As shown in FIG. 9c, the UE receives the broadcast message in a downlink BH dwell time based on an initial BWP. The broadcast message includes BH information. The BH information includes a downlink BH start offset, a start offset difference, a downlink BH cycle periodicity, and a downlink BH dwell time. It may be understood that for descriptions of the broadcast message or the BH information, reference may be made to step 601 shown in FIG. 6a. Details are not described herein again.

The UE obtains uplink BH information based on the BH information in the broadcast message. For example, the UE determines an uplink BH start offset based on the start offset difference and the downlink BH start offset in the BH information, to determine an available random access resource in an uplink BH dwell time. In this way, Msg1 is sent based on the available random access resource. After sending Msg1, the UE delays starting a RAR receive window based on a RAR window delay start amount (for example, with reference to the specific descriptions of step 805 in FIG. 8a). In this way, the UE can receive, in the downlink BH dwell time, a PDSCH carrying the RAR. As shown in FIG. 9c, the available random access resource determined by the UE may be Msg1 in a dashed line part shown in FIG. 9c in a current uplink BH dwell time. However, in consideration of timing advance, the base station may receive Msg1 in an agreed time. Therefore, the UE needs to send Msg1 at Msg1 in a solid line part. It may be understood that descriptions of the solid line part and the dashed line part are also applicable to Msg3 and a HARQ message described below. Details are not described again below. It may be understood that for descriptions of the RAR receive window, reference may be made to step 805 shown in FIG. 8a. Details are not described herein again.

The UE receives the PDSCH carrying the RAR in a downlink slot n. If an uplink slot $n+K_2+\Delta+K$offset is in the uplink BH dwell time, the UE sends Msg3 in the uplink slot. If an uplink slot $n+K_2+\Delta+K$offset is not in the uplink BH dwell time, the UE sends Msg3 in an uplink BH dwell time after the uplink slot $n+K_2+\Delta+K$offset. It may be understood that for specific descriptions of the uplink slot $n+K_2+\Delta+K$offset, reference may be made to step 806 shown in FIG. 8a. Details are not described herein again.

After receiving Msg3 sent by the UE, the base station sends Msg4 in a closest available downlink BH dwell time of a beam position in which the UE is located. For example, a time at which the UE receives Msg4 ends in a slot m. If an uplink slot $m+K_1+K$offset is in the uplink BH dwell time, the UE sends a HARQ message of Msg4 in the uplink slot. If an uplink slot $m+K_1+K$offset is not in the uplink BH dwell time, the UE sends a HARQ message of Msg4 in an uplink BH dwell time after the uplink slot $m+K_1+K$offset. It may be understood that for specific descriptions of the uplink slot $m+K_1+K$offset, reference may be made to step 808 shown in FIG. 8a. Details are not described herein again.

It may be understood that for specific descriptions of FIG. 9c, reference may be made to FIG. 8a and FIG. 8b. Details are not described herein again. A difference between FIG. 9c and FIG. 8b is that the UE can determine the uplink BH start time based on the uplink BH start offset in the BH information in FIG. 8b, and the UE can determine the uplink BH start offset based on the downlink BH start offset and an uplink-downlink start offset in the BH information to determine the uplink BH start time based on the uplink BH start offset in FIG. 9c.

It should be noted that for parts that are not described in detail in this embodiment of this application, reference may be made to the foregoing embodiments. Details are not described herein again. For example, the start offset difference provided in this embodiment of this application may be applied to the initial access phase and the active access phase shown in FIG. 5a. For another example, the start offset difference provided in this embodiment of this application may be included in the BH information shown in FIG. 5b. For another example, the start offset difference provided in this embodiment of this application may be included in the broadcast message in step 601 shown in FIG. 6a, and/or may be included in the fifth message in step 603 shown in FIG. 6a. For example, the fifth message may include the uplink BH dwell time, the uplink BH cycle periodicity, the start offset difference, and the uplink BH start offset (that is, by default, the downlink BH dwell time is the same as the uplink BH dwell time, and/or the uplink BH cycle periodicity is the same as the downlink BH cycle periodicity); or include the downlink BH dwell time, the downlink BH cycle periodicity, the start offset difference, and the downlink BH start offset (that is, by default, the downlink BH dwell time is the same as the uplink BH dwell time, and/or the uplink BH cycle periodicity is the same as the downlink BH cycle periodicity); or include the variation of the start offset difference, the variation of the downlink BH dwell time, the variation of the downlink BH start offset (for example, the downlink BH start offset is determined based on the variation of the downlink BH start offset, the start offset difference is determined based on the variation of the start offset difference, and the uplink BH start offset is determined based on the downlink BH start offset and the start offset difference), and the variation of the downlink BH cycle periodicity; or include the variation of the start offset difference, the variation of the uplink BH dwell time, the variation of the uplink BH start offset, and the variation of the uplink BH cycle periodicity. For descriptions of the parameters, refer to the foregoing descriptions. Details are not described herein again.

In the foregoing embodiments, the base station sends at least one of the configuration message or the fifth message to the UE, so that the UE performs BWP switching and/or BH information switching. In other words, in some embodiments of this application, the UE may perform BWP switching based on a message sent by the base station. In some other embodiments of this application, the base station may implement beam hopping by configuring a BWP switching list for the UE. For example, after the UE accesses the system or the UE establishes the RRC connection, the base station may send a sixth message to the UE. The sixth message may include one or more of: a BWP automatic switching list (represented by BWP_hopping below), a BWP automatic switching cycle quantity (represented by BWP_hopping_cycle below), and a BWP automatic switching time interval (represented by BWP_hopping_interval below). Correspondingly, the UE receives the sixth message, and performs BWP switching based on the sixth message. The sixth message in step 603 in the method shown in FIG. 6a is shown by using the BH information as an example. Optionally, the BWP automatic switching list, the BWP automatic switching cycle quantity, and the BWP automatic switching time interval that are provided in this embodiment of this application are included in the sixth message in step 603 in FIG. 6a. It may be understood that the sixth message shown in this embodiment of this application and the fifth message may be combined into an embodiment. For example, after the UE switches to the second BWP based on the fifth message, the base station sends the sixth message to the UE, so that the UE performs BWP switching based on the BWP switching list. Alternatively, the sixth message shown in this embodiment of this application is an independent embodiment. After the UE accesses the system, the base station sends the sixth message to the UE. Alternatively, the sixth message shown in this embodiment of this application and the first message to the fourth message in the random access process of the UE may be alternatively combined into an embodiment. Details are not described herein.

It may be understood that names of the BWP automatic switching list, the BWP automatic switching cycle quantity, and the BWP automatic switching time interval shown herein are merely examples. For example, the BWP automatic switching list may also be referred to as a BWP automatic switching set, a BWP switching list, a BWP switching set, or the like. This is not limited in this embodiment of this application.

The following describes in detail the BWP automatic switching list, the BWP automatic switching cycle quantity, and the BWP automatic switching time interval in this embodiment of this application.

The BWP automatic switching list indicates a BWP switching sequence. For example, the UE performs BWP switching according to the sequence in the BWP automatic switching list. The BWP automatic switching cycle quantity indicates a quantity of BWP switching cycles. The BWP automatic switching time interval indicates a time interval for BWP switching. For example, a unit of time of the BWP automatic switching time interval may be a BH cycle periodicity in BH information, for example, BH_cycle_DL, BH_cycle_UL, or BH_cycle.

For example, content of the sixth message may be shown as follows:

```
BWP_hopping ={BWP2 BWP3}
BWP_hopping_cycle=2
BWP_hopping_interval=2
```

Downlink BWP switching is used as an example (similar to uplink BWP switching). The UE performs BWP switching based on the BWP_hopping list at intervals of two BH_cycle time lengths. To be specific, the UE works on the BWP 2 for two BH_cycle time lengths (BH_cycle is BH information corresponding to the BWP 2), and then switches to the BWP 3 (using BH information corresponding to the BWP 3). The UE works on the BWP 3 for two BH_cycle time lengths. In this case, one BWP switching periodicity is completed. Because BWP_hopping_cycle=2, the UE needs to complete another BWP switching periodicity. After BWP fast switching circulates for BWP_hopping_cycle times, the UE continues to use a BWP finally used after fast switching, or switches back to a default BWP, or switches back to a BWP used before fast switching.

It may be understood that the base station (or a protocol or a standard) may agree that when BWP_hopping_cycle=0 and BWP_hopping_cycle=0 as configured by the base station for the UE, it indicates that the UE can circulate based on the BWP automatic switching list until the base station sends an updated parameter or the base station sends a command for stopping BWP automatic switching. Alternatively, it is agreed that when BWP_hopping_cycle is equal to a specific value or the base station does not send the parameter BWP_hopping_cycle, it indicates that circulation is constantly performed.

Optionally, in the foregoing BWP fast switching method, different pieces of BH information can be quickly and flexibly switched for a same BWP. To be specific, two different pieces of BH information are configured, and switching to new BH information is performed after several periodicities. For example, the sixth message may further include any one or more of: a BH information automatic switching list (represented by BH_pattern_list below), a BH information automatic switching cycle quantity (represented by BH_pattern_cycle below), or a BH automatic switching time interval (represented by BH_pattern_interval below). The BH information automatic switching list indicates a BH information switching sequence. In other words, the UE may perform BH information switching based on the BH information automatic switching list. The BH information automatic switching cycle quantity indicates a quantity of cycles of BH information switching. The BH automatic switching time interval indicates a time interval for BH information switching. For example, a unit of time of the BH information automatic switching time interval may be a BH cycle periodicity in BH information, for example, BH_cycle_DL, BH_cycle_UL, or BH_cycle. It may be understood that the BH information automatic switching list shown in this embodiment of this application may be an independent embodiment, or may be combined with the foregoing BWP automatic switching list to form an embodiment. Alternatively, the BWP automatic switching list and the BH information automatic switching list shown in this embodiment of this application may be included in different messages. This is not limited in this embodiment of this application.

For example, content of the sixth message may be shown as follows:

BH_pattem_list = {BH_pattem1 BH_pattem2},
BH_pattem_cycle=2
BH_pattem_interval=2

Herein, BH_pattem1 or BH_pattem2 in the list: BH_pattem_list is a BH configuration information parameter set that is used to describe a dwell time, a cycle periodicity, and a start offset in BH information. Therefore, automatic and fast switching of uplink BH information and/or downlink BH information can be implemented based on the BH information automatic switching list. It may be understood that identifiers 1 and 2 in BH_pattem1 and BH_pattem2 shown in this embodiment of this application indicate different pieces of BH information. Therefore, 1 and 2 should not be understood as a limitation on this embodiment of this application.

The downlink BH information is used as an example (uplink BH information switching is similar). The UE performs BH information switching based on the list: BH_pattem_list at intervals of two BH_cycle time lengths. To be specific, the UE works on BH_pattern1 for two BH_cycle time lengths (BH_cycle of BH_pattern1 is used), and then switches to BH_pattern2. The UE works on BH_pattern2 for two BH_cycle time lengths (BH_cycle of BH_pattern2 is used). In this case, one BH pattern switching cycle periodicity is completed. Because BH_pattern_cycle=2, the UE needs to complete another BH information switching periodicity. After BH information fast switching circulates for BH_pattern_cycle times, the UE continues to use BH information finally used after fast switching, or switches back to default BH information, or switches back to BH information used before fast switching.

It may be understood that the base station (or a protocol or a standard) may agree that when BH_pattern cycle=0 and BH_pattern cycle=0 as configured by the base station for the UE, it indicates that circulation is constantly performed until the base station sends an updated parameter or the base station sends a command for stopping BH information automatic switching. Alternatively, it is agreed that when BH_pattern_cycle is equal to a specific value or the base station does not send the parameter BH_pattern_cycle, it indicates that circulation is constantly performed.

In some embodiments of this application, the UE may not perform BWP switching in a process of applying for accessing the system. For example, the UE switches to a first active BWP after accessing the system. For example, in the initial access phase shown in FIG. 5a, the UE may use the initial BWP to receive the broadcast message and perform random access. For another example, in the method shown in FIG. 6a, the UE may receive the broadcast message through the initial BWP and apply for accessing the system (for example, perform random access). For another example, in the method shown in FIG. 8a, the UE may send Msg1 through the initial BWP, receive Msg2 through the initial BWP, send Msg3 through the initial BWP, and receive Msg4 through the initial BWP. This is not enumerated herein. Random access shown in this embodiment of this application includes four-step random access, two-step random access, and the like.

In some other embodiments of this application, the UE may also perform BWP switching (or beam switching) in a process of applying for accessing the system. For example, the UE may perform BWP switching and/or BH information switching in a four-step random access process.

In a possible implementation, the UE sends Msg1 by using the BH information corresponding to the first BWP, and receives Msg2 by using the BH information corresponding to the first BWP. The UE sends Msg3 and receives Msg4 by using the BH information corresponding to the second BWP. Optionally, after receiving Msg2, the UE switches from the first BWP to the second BWP. For example, the configuration message (including a broadcast message) includes information about the first BWP and information about the second BWP. For another example, Msg2 includes the information about the second BWP.

In another possible implementation, the UE sends Msg1 by using the BH information corresponding to the first BWP, receives Msg2 by using the BH information corresponding to the second BWP, sends Msg3, receives Msg4, and the like (for example, may further send a feedback message). For example, the configuration message includes the information about the first BWP and the information about the second BWP.

The UE performs BWP switching in the process of applying for accessing the system. In an example, when using the initial BWP, the UE may detect the broadcast message by using downlink BH information corresponding to a downlink initial BWP, send Msg1 by using uplink BH information corresponding to an uplink initial BWP, and receive Msg2 by using downlink BH information corresponding to a downlink initial BWP. After receiving Msg2, the UE performs BWP switching (for example, switches from the initial BWP to another BWP). Then, the UE sends Msg3 on another uplink BWP by using uplink BH information corresponding to the another uplink BWP, and receives Msg4 by using downlink BH information corresponding to another downlink BWP. It may be understood that an uplink BWP and a downlink BWP may be distinguished for the initial BWP or the another BWP shown in this embodiment of this application. It may be understood that switching from the initial BWP to the another BWP shown in this embodiment of this application may also be understood as switching from the first BWP to the second BWP. For descriptions of the initial BWP, refer to the descriptions of the first BWP in embodiments of this application. For descriptions of the another BWP, refer to the descriptions of the second BWP in embodiments of this application. Details are not described herein again.

In another example, when using the initial BWP, the UE may detect the broadcast message by using the downlink BH information corresponding to the downlink initial BWP, and send Msg1 by using the uplink BH information corresponding to the uplink initial BWP. After the UE sends Msg1, the UE performs BWP switching (for example, switches from the initial BWP to the another BWP). Then, the UE receives Msg2 on the another downlink BWP by using the downlink BH information corresponding to the another BWP, sends Msg3 by using the uplink BH information corresponding to the another uplink BWP, and receives Msg4 by using the downlink BH information corresponding to the another downlink BWP.

Optionally, the base station may indicate information about a BWP to which switching is to be performed (for example, the information about the second BWP) of the UE in Msg2. In other words, Msg2 may include the information about the BWP to which switching is to be performed. Msg3 is sent and Msg4 is received on the BWP to which switching is to be performed. After receiving Msg2, the UE may perform BWP switching based on the information about the BWP in Msg2. After the UE performs BWP switching, the UE may send Msg3 on a BWP after switching. Alternatively, the UE sends Msg3 in an uplink BH dwell time after switching, and receives, on a downlink BWP or in a downlink BH dwell time after switching, PDCCH information corresponding to Msg4 and Msg4. FIG. 10a is a schematic diagram of BWP switching in an access process according to an embodiment of this application. As shown in FIG. 10a, after receiving the broadcast message, the UE determines an available random access resource in an uplink BH dwell time, and sends Msg1 based on the available random access resource. It may be understood that for descriptions of Msg1 in a dashed line part, Msg1 in a solid line part, and timing advance shown in FIG. 10a, reference may be made to the foregoing descriptions. Details are not described herein again. After sending Msg1, the UE delays starting of a RAR receive window for a RAR window delay start amount, and receives, in the RAR receive window, a PDCCH and a PDSCH corresponding to a RAR. Then, the UE performs BWP switching, for example, switches from an initial BWP to another BWP. It may be understood that for descriptions of Msg1 and Msg2 shown in FIG. 10a, reference may be made to the foregoing descriptions. Details are not described herein again. It may be understood that for descriptions of a BWP after switching, reference may be made to the descriptions of the second BWP in this embodiment of this application.

Optionally, in addition to information about the initial BWP, the broadcast message (for example, a SIB 1) may further include information about a BWP to which the UE is to switch, so that the UE switches from the initial BWP to another BWP in an access process. For descriptions of BWP switching performed by the UE, refer to FIG. 10a. Optionally, it is agreed in a protocol that the UE sends Msg3 and receives PDCCH information corresponding to Msg4 and a Msg4 message on the another BWP. As shown in FIG. 10a, a BWP used by the UE to send Msg1 and receive Msg2 and a BWP used by the UE to send Msg3 and receive Msg4 are not a same BWP. Optionally, it is agreed in a protocol that the UE receives a PDCCH corresponding to Msg2 and Msg2 on another BWP, sends Msg3, and receive a PDCCH corresponding to Msg4 and Msg4. FIG. 10b is a schematic diagram of BWP switching in an access process according to an embodiment of this application. As shown in FIG. 10b, the UE sends Msg1 on an initial BWP, and then switches to another BWP according to an agreement in a protocol. On the another BWP, the UE receives a PDCCH corresponding to Msg2 and Msg2, sends Msg3, and receives a PDCCH corresponding to Msg4 and Msg4. It may be understood that for descriptions of FIG. 10b, reference may be made to FIG. 10a and the like.

For example, the base station may also send information about a BWP to which switching is to be performed (for example, information about a second BWP) to the UE by using a PDCCH or a PUSCH on the initial BWP. The UE sends Msg3 and receives the PDCCH corresponding to Msg4 and Msg4 on the another BWP; or on the another BWP, the UE receives the PDCCH corresponding to Msg2 and Msg2, sends Msg3, and receives the PDCCH corresponding to Msg4 and Msg4.

For example, a start time of a BH cycle periodicity in BH information corresponding to a BWP after switching may be an end time of a BH cycle periodicity in BH information corresponding to the initial BWP.

It may be understood that when BWP switching is performed in an access process, BH information corresponding to a BWP may also be switched. In other words, the UE may also perform beam switching or BH information switching in the process of applying for accessing the system.

In an example, when using the initial BWP, the UE may detect the broadcast message (for example, an SSB or RMSI) by using first BH information corresponding to the initial BWP, and send Msg1 and receive Msg2. Then, when using the initial BWP, the UE sends Msg3 and receives Msg4 by using second BH information corresponding to the initial BWP. In other words, the BH information corresponding to the initial BWP may include two pieces of BH information.

At least one parameter in the two pieces of BH information is different. In other words, the UE does not perform BWP switching in the process of applying for accessing the system, but needs to update (or switch) BH information.

In another example, when using the initial BWP, the UE may detect the broadcast message (an SSB, RMSI, or the like) by using first BH information corresponding to the initial BWP, and send Msg1. Then, when using the initial BWP, the UE receives Msg2, sends Msg3, and receives Msg4 by using the second BH information corresponding to the initial BWP.

Therefore, for example, the broadcast message (for example, a SIB 1) includes the first BH information corresponding to the initial BWP, and a RAR may include the second BH information corresponding to the initial BWP. For content of the first BH information and the second BH information, refer to FIG. 4a. Details are not described herein again. For example, the first BH information includes a BH dwell time, a BH cycle periodicity, and a BH start offset; and the second BH information may include at least one of: a variation of the BH dwell time, a variation of the BH cycle periodicity, and a variation of the BH start offset. For another example, the second BH information may include a start offset difference, and the like. This is not enumerated herein.

For example, the broadcast message includes the first BH information and the second BH information corresponding to the initial BWP, so that the UE can update the BH information in the access process. For example, it is agreed in a protocol that the UE sends Msg1 and receives Msg2 by using the first BH information, and sends Msg3 and receives Msg4 by using the second BH information. For another example, the UE sends Msg1 by using the first BH information, and receives Msg2, sends Msg3, and receives Msg4 by using the second BH information.

For example, the RAR includes the second BH information. Msg3 may be sent and Msg4 may be received by using the second BH information. For another example, the UE is instructed by using a PDCCH (a DCI instruction) on the initial BWP to use the second BH information, so that the UE uses the second BH information to send Msg3 and receive Msg4. For another example, it is agreed in a protocol that the UE uses the second BH information to receive Msg2, send Msg3, and receive Msg4. Optionally, a periodicity start time of the second BH information may be a periodicity end time of the first BH information.

In this embodiment of this application, a frequency hopping function is implemented in the access process, to support flexible access. In this way, the UE can implement faster access by using another beam without waiting for polling of a broadcast beam.

In this embodiment of this application, new dynamic scheduling or BH information periodic scheduling may be added in the BH information.

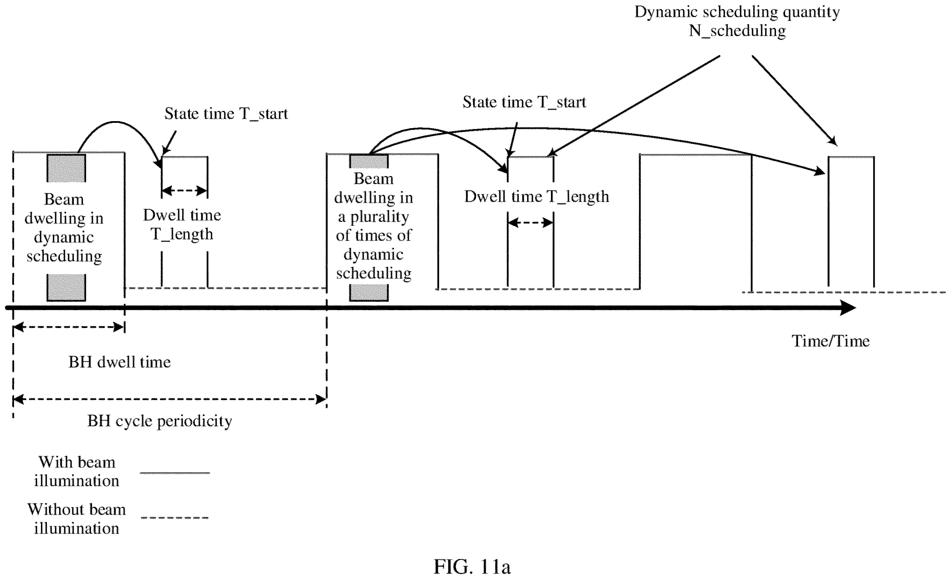

In an example, a BH dwell time in dynamic scheduling is sent to the UE in a downlink BH dwell time of original BH information. For example, the BH dwell time in dynamic scheduling includes a start time T_start and a dwell time T_length. Beam dwelling in dynamic scheduling shown in FIG. 11a may also be understood as beam dwelling in a single time of scheduling. A BH dwell time and a BH cycle periodicity shown in FIG. 11a are parameters in original BH information. A start time and a dwell time between beam dwelling in dynamic scheduling and beam dwelling in a plurality of times of dynamic scheduling correspond to beam dwelling in dynamic scheduling.

Optionally, the BH dwell time in dynamic scheduling may further include a dynamic scheduling quantity N_scheduling. Beam dwelling in the plurality of times of dynamic scheduling shown in FIG. 11a may also be understood as a plurality of times of scheduling beam dwelling. The dynamic scheduling quantity N_scheduling shown in FIG. 11a is two as an example. However, this should not be understood as a limitation on this embodiment of this application.

In another example, a BH dwell time in periodic scheduling is sent to the UE in a downlink BH dwell time of original BH information. The BH dwell moment in periodic scheduling may indicate superposition of a BH cycle periodicity of the original BH information and a BH cycle periodicity of another piece of BH information. Optionally, a BWP used in the BH cycle periodicity of the another piece of BH information may be the same as or different from a BWP used in the BH cycle periodicity of the original BH information. Optionally, the original BH information and the another piece of BH information may be configured simultaneously or separately (for example, it may be understood that two pieces of BH information are both present on a same BWP, or it may be understood that the base station configures another BWP and BH information corresponding to the another BWP for the UE) (for example, periodic scheduling or semi-persistent scheduling may be included).

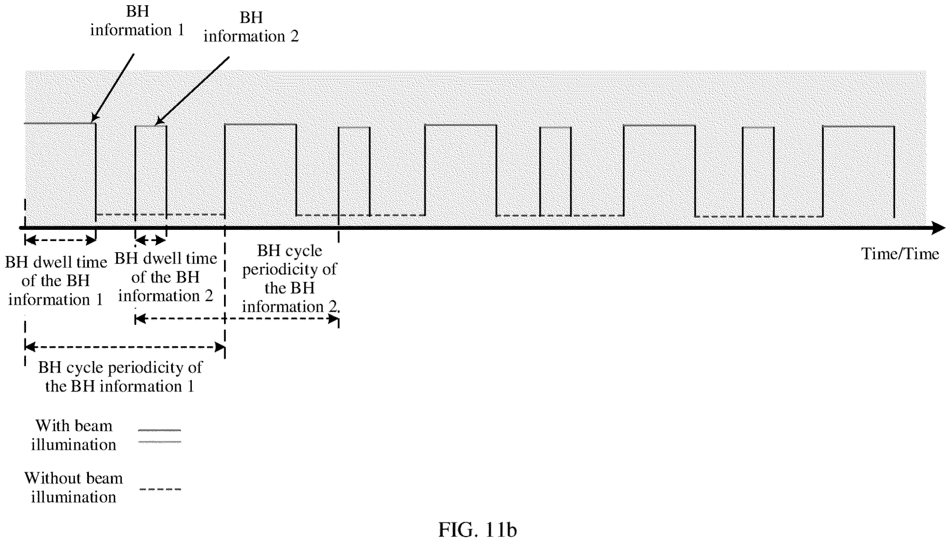

As shown in FIG. 11b, downlink communication of the UE is used as an example. The UE receives two pieces of BH information, for example, BH information 1 and BH information 2. The UE uses a downlink BH dwell time of the BH information 1 and a downlink BH dwell time of the BH information 2 in time domain in a superposition manner. For example, the UE receives a downlink signal in the downlink BH dwell time of the BH information 1 and the downlink BH dwell time of the BH information 2. Similarly, for uplink communication of the UE, the UE receives two pieces of BH information, for example, BH information 1 and BH information 2. The UE uses an uplink BH dwell time of the BH information 1 and an uplink BH dwell time of the BH information 2 in time domain in a superposition manner. For example, the UE receives an uplink signal in the uplink BH dwell time of the BH information 1 and the uplink BH dwell time of the BH information 2. According to the method provided in this embodiment of this application, a plurality of BH cycle periodicities may be superposed based on an original BH cycle periodicity.

According to the method provided in this embodiment of this application, BH information can be flexibly configured for the UE, to meet dynamic service requirements of the UE. For example, when the UE has a burst service requirement, one piece of short-term burst BH information may be superposed to meet the communication requirement of the UE.

It may be understood that, in the foregoing embodiments, for an implementation that is not described in detail in one embodiment, reference may be made to another embodiment.

The following describes a communication apparatus provided in embodiments of this application.

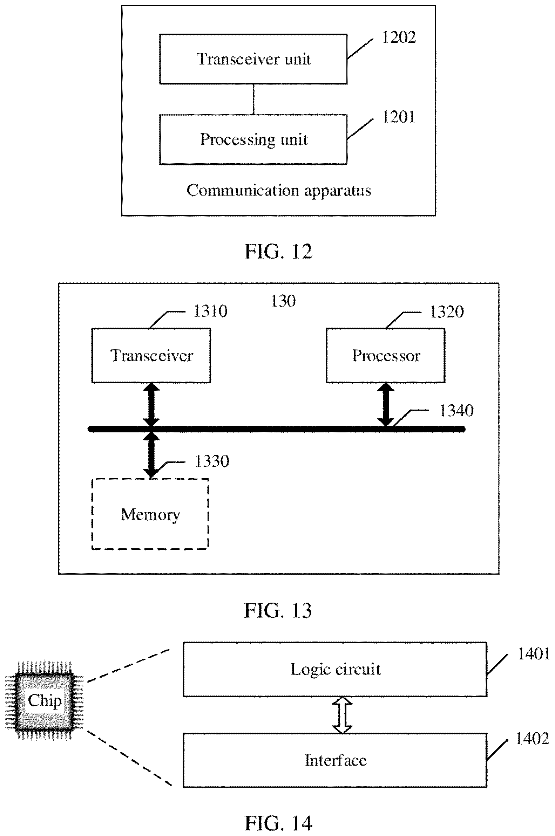

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that division into modules in this application is an example and is merely logical function division. In actual implementation, there may be another division manner. The following describes the communication apparatus in embodiments of this application in detail with reference to FIG. 12 and FIG. 14.

FIG. 12 is a schematic diagram of a structure of a communication apparatus according to an embodiment of this application. As shown in FIG. 12, the communication apparatus includes a processing unit 1201 and a transceiver unit 1202.

In some embodiments of this application, the communication apparatus may be the first communication apparatus shown above, a chip in the first communication apparatus, or the like. In other words, the communication apparatus may be configured to perform steps, functions, or the like performed by the first communication apparatus in the foregoing method embodiments.

For example, the transceiver unit 1202 is configured to obtain a configuration message (which may also be understood as being configured to receive the configuration message).

The processing unit 1201 is configured to perform communication based on BH information corresponding to a first BWP.

For example, the processing unit 1201 is specifically configured to perform at least one of the following: send, through the transceiver unit 1202, a first message to a second communication apparatus based on an uplink BH dwell time corresponding to the first BWP; and receive, through the transceiver unit 1202, a second message from the second communication apparatus based on a downlink BH dwell time corresponding to the first BWP.

For example, the processing unit 1201 is specifically configured to send, through the transceiver unit 1202, a third message to the second communication apparatus based on an uplink BH dwell time corresponding to the first BWP.

For example, the processing unit 1201 is specifically configured to: receive, through the transceiver unit 1202, a fourth message from the second communication apparatus based on the downlink BH dwell time corresponding to the first BWP, and send a feedback message of the fourth message to the second communication apparatus based on the uplink BH dwell time corresponding to the first BWP.

For example, the transceiver unit 1202 is further configured to receive a fifth message from the second communication apparatus.

The processing unit 1201 is further configured to switch from the first BWP to a second BWP.

The transceiver unit 1202 is further configured to perform communication based on BH information corresponding to the second BWP.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein again. For example, the processing unit and the transceiver unit may be further configured to perform the method shown in at least one of FIG. 4a, FIG. 4b, FIG. 6a, FIG. 6b, FIG. 8a, FIG. 8b, FIG. 9c, FIG. 10a, FIG. 10b, FIG. 11a, or FIG. 11b.

FIG. 12 is further used. In some other embodiments of this application, the communication apparatus may be the second communication apparatus shown above, a chip in the second communication apparatus, or the like. In other words, the communication apparatus may be configured to perform steps, functions, or the like performed by the second communication apparatus in the foregoing method embodiments.

For example, the transceiver unit 1202 is configured to send a configuration message, and the processing unit 1201 is configured to perform communication based on BH information corresponding to a first BWP.

For example, the processing unit 1201 is specifically configured to perform at least one of the following: receive, through the transceiver unit 1202, a first message from a first communication apparatus based on an uplink BH dwell time corresponding to the first BWP; and send, through the transceiver unit 1202, a second message to the first communication apparatus based on a downlink BH dwell time corresponding to the first BWP.

For example, the processing unit 1201 is specifically configured to receive, through the transceiver unit 1202, a third message from the first communication apparatus based on the uplink BH dwell time corresponding to the first BWP.

For example, the processing unit 1201 is specifically configured to: send, through the transceiver unit 1202, a fourth message to the first communication apparatus based on the downlink BH dwell time corresponding to the first BWP, and receive a feedback message from the first communication apparatus based on the uplink BH dwell time corresponding to the first BWP.

For example, the transceiver unit 1202 is further configured to send a fifth message to the first communication apparatus, where the fifth message includes BH information corresponding to a second BWP; and the processing unit 1201 is further configured to communicate with the first communication apparatus based on the BH information corresponding to the second BWP.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein again. For example, the processing unit and the transceiver unit may be further configured to perform the method shown in at least one of FIG. 4a, FIG. 4b, FIG. 6a, FIG. 6b, FIG. 8a, FIG. 8b, FIG. 9c, FIG. 10a, FIG. 10b, FIG. 11a, or FIG. 11b.

In this embodiment of this application, for descriptions of the configuration message, the first message, the second message, the third message, the fourth message, the fifth message, the BH information, the first BWP, the second BWP, and the like, refer to the descriptions in the foregoing method embodiments. Details are not described herein again.

The foregoing describes the first communication apparatus and the second communication apparatus in embodiments of this application. The following describes possible product forms of the first communication apparatus and the second communication apparatus. It should be understood that any form of product having functions of the first communication apparatus in FIG. 12 and any form of product having functions of the second communication apparatus in FIG. 12 both fall within the protection scope of embodiments of this application. It should be further understood that the following description is merely an example, and the product forms of the first communication apparatus and the second communication apparatus in embodiments of this application are not limited thereto.

In a possible implementation, in the communication apparatus shown in FIG. 12, the processing unit 1201 may be one or more processors, and the transceiver unit 1202 may be a transceiver or the transceiver unit 1202 may include a sending unit and a receiving unit. The sending unit may be a transmitter, and the receiving unit may be a receiver. The sending unit and the receiving unit are integrated into one device, for example, a transceiver. In this embodiment of this application, the processor and the transceiver may be coupled, or the like. A connection manner between the processor and the transceiver is not limited in this embodiment of this application.

As shown in FIG. 13, the communication apparatus 130 includes one or more processors 1320 and a transceiver 1310.

For example, when the communication apparatus is configured to perform the steps, the methods, or the functions performed by the first communication apparatus, the transceiver 1310 is configured to receive a configuration message, and the processor 1320 is configured to perform communication based on BH information corresponding to a first BWP.

It may be understood that for specific descriptions of the transceiver 1310 and the processor 1320, reference may be made to the foregoing method embodiments, or reference may be made to the foregoing descriptions of the processing unit 1201 and the transceiver unit 1202 in FIG. 12. Details are not described herein again.

For example, when the communication apparatus is configured to perform the steps, the methods, or the functions performed by the second communication apparatus, the transceiver 1310 is configured to send a configuration message, and the processor 1320 is configured to perform communication based on BH information corresponding to a first BWP.

In this embodiment of this application, for descriptions of the configuration message, a first message, a second message, a third message, a fourth message, a fifth message, the BH information, the first BWP, a second BWP, and the like, refer to the descriptions in the foregoing method embodiments. Details are not described herein again.

It may be understood that for specific descriptions of the processor and the transceiver, reference may be made to the descriptions of the processing unit and the transceiver unit shown in FIG. 12. Details are not described herein again.

In each implementation of the communication apparatus shown in FIG. 13, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 130 may further include one or more memories 1330, configured to store program instructions and/or data. The memory 1330 is coupled to the processor 1320. The coupling in this embodiment of this application may be an indirect coupling or a communication connection between apparatuses, units, or modules in an electrical form, a mechanical form, or another form, and is used for information exchange between the apparatuses, the units, or the modules. The processor 1320 may collaboratively operate with the memory 1330. The processor 1320 may execute program instructions stored in the memory 1330. Optionally, at least one of the one or more memories may be included in the processor.

A specific connection medium between the transceiver 1310, the processor 1320, and the memory 1330 is not limited in this embodiment of this application. In this embodiment of this application, the memory 1330, the processor 1320, and the transceiver 1310 are connected to each other through a bus 1340 in FIG. 13. The bus is represented by using a bold line in FIG. 13. A connection manner between other components is merely an example for description, and imposes no limitation. The bus may be categorized as an address bus, a data bus, a control bus, or the like. For ease of representation, only one bold line is used in FIG. 13 to represent the bus. However, it does not indicate that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like; and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this is not limited thereto. The memory in this embodiment of this application may be alternatively a circuit or any other apparatus that can implement a storage function, and is configured to store program instructions and/or data.

For example, the processor 1320 is mainly configured to: process a communication protocol and communication data, control the entire communication apparatus, execute a software program, and process data of the software program. The memory 1330 is mainly configured to store the software program and data. The transceiver 1310 may include a control circuit and an antenna. The control circuit is mainly configured to: perform conversion between a baseband signal and a radio frequency signal, and process a radio frequency signal. The antenna is mainly configured to receive and send a radio frequency signal in a form of an electromagnetic wave. An input/output apparatus, such as a touchscreen, a display, or a keyboard, is mainly configured to: receive data input by a user, and output data to the user.

After the communication apparatus is powered on, the processor 1320 may read the software program in the memory 1330, interpret and execute instructions of the software program, and process data of the software program. When data needs to be sent wirelessly, the processor 1320 performs baseband processing on the to-be-sent data, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1320. The processor 1320 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

It may be understood that the communication apparatus shown in this embodiment of this application may further have more components and the like than those in FIG. 13. This is not limited in this embodiment of this application. The methods performed by the processor and the transceiver are merely examples. For specific steps performed by the processor and the transceiver, refer to the methods described above.

In another possible implementation, in the communication apparatus shown in FIG. 12, the processing unit 1201 may be one or more logic circuits, and the transceiver unit 1202 may be an input/output interface that is also referred to as a communication interface, an interface circuit, an interface, or the like. Alternatively, the transceiver unit 1202 may be a sending unit and a receiving unit. The sending unit may be an output interface, and the receiving unit may be an input interface. The sending unit and the receiving unit are integrated into one unit, for example, an input/output interface. As shown in FIG. 14, a communication apparatus shown in FIG. 14 includes a logic circuit 1401 and an interface 1402. In other words, the processing unit 1201 may be implemented by using the logic circuit 1401, and the transceiver unit 1202 may be implemented by using the interface 1402. The logic circuit 1401 may be a chip, a processing circuit, an integrated circuit, a system-on-chip (system on chip, SoC) chip, or the like. The interface 1402 may be a communication interface, an input/output interface, a pin, or the like. For example, an example in which the foregoing communication apparatus is a chip is used in FIG. 14. The chip includes the logic circuit 1401 and the interface 1402.

In this embodiment of this application, the logic circuit and the interface may be further coupled to each other. A specific connection manner of the logic circuit and the interface is not limited in this embodiment of this application.

For example, when the communication apparatus is configured to perform the methods, the functions, or the steps performed by the first communication apparatus, the interface 1402 is configured to input a configuration message, where the configuration message includes beam hopping BH information corresponding to a first BWP; and the logic circuit 1401 is configured to perform communication based on the BH information corresponding to the first BWP.

For example, the logic circuit 1401 is specifically configured to perform at least one of the following: output, through the interface 1402, a first message based on an uplink BH dwell time corresponding to the first BWP; and input, through the interface 1402, a second message based on a downlink BH dwell time corresponding to the first BWP.

For example, the logic circuit 1401 is specifically configured to output, through the interface 1402, a third message based on the uplink BH dwell time corresponding to the first BWP.

For example, the logic circuit 1401 is specifically configured to: input, through the interface 1402, a fourth message based on the downlink BH dwell time corresponding to the first BWP, and output a feedback message of the fourth message based on the uplink BH dwell time corresponding to the first BWP.

For example, the interface 1402 is further configured to input a fifth message, and the logic circuit 1401 is further configured to switch from the first BWP to a second BWP. The interface 1402 is further configured to communicate with a second communication apparatus based on BH information corresponding to the second BWP.

For example, when the communication apparatus is configured to perform the methods, the functions, or the steps performed by the second communication apparatus, the interface 1402 is configured to input a configuration message, where the configuration message includes beam hopping BH information corresponding to a first BWP; and the logic circuit 1401 is configured to perform communication based on the BH information corresponding to the first BWP.

For example, the logic circuit 1401 is specifically configured to perform at least one of the following: input, through the interface 1402, a first message based on an uplink BH dwell time corresponding to the first BWP; and output, through the interface 1402, a second message based on a downlink BH dwell time corresponding to the first BWP.

For example, the logic circuit 1401 is specifically configured to input, through the interface 1402, a third message based on the uplink BH dwell time corresponding to the first BWP.

For example, the logic circuit 1401 is specifically configured to: output, through the interface 1402, a fourth message based on the downlink BH dwell time corresponding to the first BWP, and input a feedback message of the fourth message based on the uplink BH dwell time corresponding to the first BWP.

For example, the interface 1402 is further configured to output a fifth message, and the logic circuit 1401 is further configured to perform communication based on BH information corresponding to a second BWP.

It may be understood that the communication apparatus shown in this embodiment of this application may implement the method provided in embodiments of this application in a form of hardware or in a form of software. This is not limited in this embodiment of this application.

In this embodiment of this application, for descriptions of the configuration message, the first message, the second message, the third message, the fourth message, the fifth message, the BH information, the first BWP, the second BWP, and the like, refer to the descriptions in the foregoing method embodiments. Details are not described herein again.

For specific implementations of embodiments shown in FIG. 14, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code runs on a computer, the computer is enabled to perform operations and/or processing performed by the first communication apparatus in the method provided in this application.

This application further provides a computer-readable storage medium. The computer-readable storage medium stores computer code. When the computer code runs on a computer, the computer is enabled to perform operations and/or processing performed by the second communication apparatus in the method provided in this application.

This application further provides a computer program product. The computer program product includes computer code or a computer program. When the computer code or the computer program runs on a computer, operations and/or processing performed by the first communication apparatus in the method provided in this application are/is performed.

This application further provides a computer program product. The computer program product includes computer code or a computer program. When the computer code or the computer program runs on a computer, operations and/or processing performed by the second communication apparatus in the method provided in this application are/is performed.

It should be understood from several embodiments provided in this application that the disclosed system, apparatus, and method may be implemented in another manner. For example, the described apparatus embodiments are merely examples. For example, division into the units is merely logical function division. In actual implementation, another division manner may be used. For example, a plurality of units or components may be combined or integrated into another system, or some features may be ignored or may not be performed. In addition, the shown or discussed mutual couplings, direct couplings, or communication connections may be indirect couplings or communication connections through some interfaces, apparatuses, or units, or may be electrical connections, mechanical connections, or connections in other forms.

The units described as separate parts may or may not be physically separate, and parts displayed as units may or may not be physical units, and may be at one location, or may be distributed on a plurality of network elements. Some or all of the units may be selected according to actual requirements to achieve the technical effects of the solutions provided in embodiments in this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or parts contributing to the conventional technologies, or all or some of the technical solutions may be embodied in a form of a software product. The computer software product is stored in a readable storage medium, and includes several instructions for instructing a computer device (which may be a personal computer, a server, a network device, or the like) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, wherein the method comprises:

   obtaining, by a first communication apparatus, a configuration message, wherein the configuration message comprises beam hopping BH information corresponding to a first bandwidth part BWP; and
   performing, by the first communication apparatus, communication based on the BH information corresponding to the first BWP.

2. The method according to claim 1, wherein the BH information comprises at least one of: a BH dwell time, a BH start offset, a BH cycle periodicity, or a start offset difference.

3. The method according to claim 1 or 2, wherein the BH information comprises at least one of: uplink BH information or downlink BH information.

4. The method according to any one of claims 1 to 3, wherein the BH information comprises at least one of: an uplink BH dwell time or a downlink BH dwell time; and
   the performing, by the first communication apparatus, communication based on the BH information corresponding to the first BWP comprises at least one of the following:

   sending, by the first communication apparatus, a first message to the second communication apparatus based on the uplink BH dwell time corresponding to the first BWP; and
   receiving, by the first communication apparatus, a second message from the second communication apparatus based on the downlink BH dwell time corresponding to the first BWP.

5. The method according to claim 4, wherein the method further comprises:
   sending, by the first communication apparatus, a third message to the second communication apparatus based on the uplink BH dwell time corresponding to the first BWP, wherein an end time of the second message is in a first time unit; and if a second time unit is in the uplink BH dwell time, the second time unit is a sending time unit of the third message; or if the second time unit is not in the uplink BH dwell time, a sending time unit of the third message is in a third time unit in an uplink BH dwell time after the second time unit, wherein the second time unit is $n+K_{delay1}+\Delta$, n represents an index of the first time unit, $K_{delay1}$ is an uplink scheduling delay, and $\Delta$ is an adjustment amount.

6. The method according to claim 4 or 5, wherein the method further comprises:
receiving, by the first communication apparatus, a fourth message from the second communication apparatus based on the downlink BH dwell time corresponding to the first BWP, and sending a feedback message of the fourth message to the second communication apparatus based on the uplink BH dwell time corresponding to the first BWP, wherein an end time of the fourth message is in a fourth time unit; and if a fifth time unit is in the uplink BH dwell time, the fifth time unit is a sending time of the feedback message; or if the fifth time unit is not in the uplink BH dwell time, a sending time unit of the feedback message is in a sixth time unit in an uplink BH dwell time after the fifth unit, wherein the fifth time unit is $m+K_{delay2}$, m represents an index of the fourth time unit, and $K_{delay2}$ is an uplink scheduling delay.

7. The method according to claim 5 or 6, wherein the third time unit is determined based on the uplink BH dwell time corresponding to the first BWP and an uplink BH cycle periodicity corresponding to the first BWP; or
the sixth time unit is determined based on the uplink BH dwell time corresponding to the first BWP and an uplink BH cycle periodicity corresponding to the first BWP.

8. The method according to any one of claims 1 to 7, wherein the method further comprises:

when the first communication apparatus establishes a radio resource control RRC connection, receiving a fifth message from the second communication apparatus, wherein the fifth message comprises BH information corresponding to a second BWP; and
switching, by the first communication apparatus, from the first BWP to the second BWP, and performing communication based on the BH information corresponding to the second BWP.

9. A satellite communication method, wherein the method comprises:

sending, by a second communication apparatus, a configuration message, wherein the configuration message comprises beam hopping BH information corresponding to a first bandwidth part BWP; and
performing, by the second communication apparatus, communication based on the BH information corresponding to the first BWP.

10. The method according to claim 9, wherein the BH information comprises at least one of: a BH dwell time, a BH start offset, a BH cycle periodicity, or a start offset difference.

11. The method according to claim 9 or 10, wherein the BH information comprises at least one of: uplink BH information or downlink BH information.

12. The method according to any one of claims 9 to 11, wherein the BH information comprises at least one of: an uplink BH dwell time or a downlink BH dwell time; and
the performing, by the second communication apparatus, communication based on the BH information corresponding to the first BWP comprises at least one of the following:

receiving, by the second communication apparatus, a first message from the first communication apparatus based on the uplink BH dwell time corresponding to the first BWP; and
sending, by the second communication apparatus, a second message to the first communication apparatus based on the downlink BH dwell time corresponding to the first BWP.

13. The method according to claim 12, wherein the method further comprises:
receiving, by the second communication apparatus, a third message from the first communication apparatus based on the uplink BH dwell time corresponding to the first BWP, wherein an end time of the second message is in a first time unit; and if a second time unit is in the uplink BH dwell time, the second time unit is a sending time unit of the third message; or if the second time unit is not in the uplink BH dwell time, a sending time unit of the third message is in a third time unit in an uplink BH dwell time after the second time unit, wherein the second time unit is $n+K_{delay1}+\Delta$,

n represents an index of the first time unit, $K_{delay1}$ is an uplink scheduling delay, and $\Delta$ is an adjustment amount.

14. The method according to claim 12 or 13, wherein the method further comprises:
sending, by the second communication apparatus, a fourth message to the first communication apparatus based on the downlink BH dwell time corresponding to the first BWP, and receiving a feedback message from the first communication apparatus based on the uplink BH dwell time corresponding to the first BWP, wherein an end time of the fourth message is in a fourth time unit; and if a fifth time unit is in the uplink BH dwell time, the fifth time unit is a sending time of the feedback message; or if the fifth time unit is not in the uplink BH dwell time, a sending time unit of the feedback message is in a sixth time unit in an uplink BH dwell time after the fifth time unit, wherein the fifth time unit is $m+K_{delay2}$, m represents an index of the fourth time unit, and $K_{delay2}$ is an uplink scheduling delay.

15. The method according to claim 13 or 14, wherein the third time unit is determined based on the uplink BH dwell time corresponding to the first BWP and an uplink BH cycle periodicity corresponding to the first BWP; or
the sixth time unit is determined based on the uplink BH dwell time corresponding to the first BWP and an uplink BH cycle periodicity corresponding to the first BWP.

16. The method according to any one of claims 9 to 15, wherein the method further comprises:

    when the first communication apparatus establishes a radio resource control RRC connection, sending a fifth message to the first communication apparatus, wherein the fifth message comprises BH information corresponding to a second BWP; and
    performing, by the second communication apparatus, communication based on the BH information corresponding to the second BWP.

17. A communication apparatus, wherein the apparatus comprises:

    a transceiver unit, configured to obtain a configuration message, wherein the configuration message comprises beam hopping BH information corresponding to a first bandwidth part BWP; and
    a processing unit, configured to perform communication based on the BH information corresponding to the first BWP.

18. The apparatus according to claim 17, wherein the BH information comprises at least one of: a BH dwell time, a BH start offset, a BH cycle periodicity, or a start offset difference.

19. The apparatus according to claim 17 or 18, wherein the BH information comprises at least one of: uplink BH information or downlink BH information.

20. The apparatus according to any one of claims 17 to 19, wherein the BH information comprises at least one of: an uplink BH dwell time or a downlink BH dwell time; and

    the processing unit is specifically configured to: send, through the transceiver unit, a first message to the second communication apparatus based on the uplink BH dwell time corresponding to the first BWP; and
    receive, through the transceiver unit, a second message from the second communication apparatus based on the downlink BH dwell time corresponding to the first BWP.

21. The apparatus according to claim 20, wherein
the processing unit is specifically configured to: send, through the transceiver unit, a third message to the second communication apparatus based on the uplink BH dwell time corresponding to the first BWP, wherein an end time of the second message is in a first time unit; and if a second time unit is in the uplink BH dwell time, the second time unit is a sending time unit of the third message; or if the second time unit is not in the uplink BH dwell time, a sending time unit of the third message is in a third time unit in an uplink BH dwell time after the second time unit, wherein the second time unit is $n+K_{delay1}+\Delta$, n represents an index of the first time unit, $K_{delay1}$ is an uplink scheduling delay, and $\Delta$ is an adjustment amount.

22. The apparatus according to claim 20 or 21, wherein
the processing unit is specifically configured to: receive, through the transceiver unit, a fourth message from the second communication apparatus based on the downlink BH dwell time corresponding to the first BWP, and send a feedback message of the fourth message to the second communication apparatus based on the uplink BH dwell time corresponding to the first BWP, wherein an end time of the fourth message is in a fourth time unit; and if a fifth time unit is in the uplink BH dwell time, the fifth time unit is a sending time of the feedback message; or if the fifth time unit is not in the uplink BH dwell time, a sending time unit of the feedback message is in a sixth time unit in an uplink BH dwell time after the fifth time unit, wherein the fifth time unit is $m+K_{delay2}$, m represents an index of the fourth time unit, and $K_{delay2}$ is an uplink scheduling delay.

23. The apparatus according to claim 21 or 22, wherein the third time unit is determined based on the uplink BH dwell time corresponding to the first BWP and an uplink BH cycle periodicity corresponding to the first BWP; or
the sixth time unit is determined based on the uplink BH dwell time corresponding to the first BWP and an uplink BH cycle periodicity corresponding to the first BWP.

24. The apparatus according to any one of claims 17 to 23, wherein

the transceiver unit is further configured to receive a fifth message from the second communication apparatus, wherein the fifth message comprises BH information corresponding to a second BWP;
the processing unit is further configured to switch from the first BWP to the second BWP; and
the transceiver unit is further configured to perform communication based on the BH information corresponding to the second BWP.

25. A satellite communication apparatus, wherein the apparatus comprises:

a transceiver unit, configured to send a configuration message, wherein the configuration message comprises beam hopping BH information corresponding to a first bandwidth part BWP; and
a processing unit, configured to perform communication based on the BH information corresponding to the first BWP.

26. The apparatus according to claim 25, wherein the BH information comprises at least one of: a BH dwell time, a BH start offset, a BH cycle periodicity, or a start offset difference.

27. The apparatus according to claim 25 or 26, wherein the BH information comprises at least one of: uplink BH information or downlink BH information.

28. The apparatus according to any one of claims 25 to 27, wherein the BH information comprises at least one of an uplink BH dwell time or a downlink BH dwell time; and

the processing unit is specifically configured to: receive, through the transceiver unit, a first message from the first communication apparatus based on the uplink BH dwell time corresponding to the first BWP; and
send, through the transceiver unit, a second message to the first communication apparatus based on the downlink BH dwell time corresponding to the first BWP.

29. The apparatus according to claim 28, wherein
the processing unit is specifically configured to: receive, through the transceiver unit, a third message from the first communication apparatus based on the uplink BH dwell time corresponding to the first BWP, wherein an end time of the second message is in a first time unit; and if a second time unit is in the uplink BH dwell time, the second time unit is a sending time unit of the third message; or if the second time unit is not in the uplink BH dwell time, a sending time unit of the third message is in a third time unit in an uplink BH dwell time after the second time unit, wherein the second time unit is $n+K_{delay1}+\Delta$, n represents an index of the first time unit, $K_{delay1}$ is an uplink scheduling delay, and $\Delta$ is an adjustment amount.

30. The apparatus according to claim 28 or 29, wherein
the processing unit is specifically configured to: send, through the transceiver unit, a fourth message to the first communication apparatus based on the downlink BH dwell time corresponding to the first BWP, and receive a feedback message from the first communication apparatus based on the uplink BH dwell time corresponding to the first BWP, wherein an end time of the fourth message is in a fourth time unit; and if a fifth time unit is in the uplink BH dwell time, the fifth time unit is a sending time of the feedback message; or if the fifth time unit is not in the uplink BH dwell time, a sending time unit of the feedback message is in a sixth time unit in an uplink BH dwell time after the fifth time unit, wherein the fifth time unit is $m+K_{delay2}$, m represents an index of the fourth time unit, and $K_{delay2}$ is an uplink scheduling delay.

31. The apparatus according to claim 29 or 30, wherein the third time unit is determined based on the uplink BH dwell time corresponding to the first BWP and an uplink BH cycle periodicity corresponding to the first BWP; or the sixth time unit is determined based on the uplink BH dwell time corresponding to the first BWP and an uplink BH cycle periodicity corresponding to the first BWP.

32. The apparatus according to any one of claims 25 to 31, wherein

the transceiver unit is further configured to send a fifth message to the first communication apparatus, wherein the fifth message comprises BH information corresponding to a second BWP; and
the processing unit is further configured to perform communication based on the BH information corresponding to the second BWP.

33. A communication apparatus, comprising a processor, wherein

the processor is coupled to a memory;
the memory is configured to store instructions; and
the processor is configured to execute the instructions, to perform the method according to any one of claims 1 to 8; or
the processor is configured to execute the instructions, to perform the method according to any one of claims 9 to 16.

34. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 8 is performed, or the method according to any one of claims 9 to 16 is performed.

35. A computer-readable storage medium, wherein the computer-readable storage medium is configured to store a computer program; and when the computer program is executed, the method according to any one of claims 1 to 8 is performed; or when the computer program is executed, the method according to any one of claims 9 to 16 is performed.

36. A computer program product, wherein the computer program product comprises a computer program; and when the computer program is executed, the method according to any one of claims 1 to 8 is performed; or when the computer program is executed, the method according to any one of claims 9 to 16 is performed.

37. A computer program, wherein when the computer program is executed, the method according to any one of claims 1 to 8 is performed, or the method according to any one of claims 9 to 16 is performed.

38. A communication system, comprising a first communication apparatus and a second communication apparatus, wherein the first communication apparatus is configured to perform the method according to any one of claims 1 to 8, and the second communication apparatus is configured to perform the method according to any one of claims 9 to 16.

FIG. 1

Diameter: 100 km
to 300 km

Terminal device
(aircraft)

Height: 6 km
to 12 km

Base station        Base station        Base station

FIG. 2

FIG. 3

First communication apparatus

Second communication apparatus

Configuration message, where the configuration message includes BH information corresponding to a first BWP — 401

The first communication apparatus performs communication based on the BH information corresponding to the first BWP — 402

Fifth message, where the fifth message includes BH information corresponding to a second BWP — 403

The first communication apparatus switches from the first BWP to the second BWP, and the first communication apparatus performs communication based on the BH information corresponding to the second BWP — 404

FIG. 4a

First communication apparatus

Second communication apparatus

Send a first message to the second communication apparatus based on an uplink BH dwell time corresponding to a first BWP — 411

Send a second message to the first communication apparatus based on a downlink BH dwell time corresponding to the first BWP — 412

Send a third message to the second communication apparatus based on the uplink BH dwell time corresponding to the first BWP — 413

Send a fourth message to the first communication apparatus based on the downlink BH dwell time corresponding to the first BWP — 414

Send a feedback message of the fourth message to the second communication apparatus based on the uplink BH dwell time corresponding to the first BWP — 415

FIG. 4b

FIG. 5a

FIG. 5b

UE | Base station

Broadcast message / 601

Apply for accessing a system based on the broadcast message / 602

Fifth message, including BH information corresponding to a second BWP / 603

FIG. 6a

UE prepares to apply for accessing a system

Whether to use a BH mode? — No → The UE applies for accessing the system

Yes ↓

Default BH information or BH information configured by a base station

Perform BH information switching

Whether to use the BH mode? — No → Not use the BH mode

Yes ↓

Default BH information or BH information configured by a base station

FIG. 6b

Beam dwell time
length: 2 ms

| | Beam 0 | Frame number (SFN) 0 |
|---|---|---|
| | Beam 1 | |
| | Beam 2 | |
| | Beam 3 | |
| | Beam 4 | Frame number (SFN) 1 |
| | Beam 5 | |
| | Beam 6 | |
| | Beam 7 | |
| | Beam 8 | |
| Broadcast message | Beam 9 | Frame number (SFN) 2 |

Frame number (SFN) 3

Frame number (SFN) 4

FIG. 7a

| Beam 0 |
| Beam 1 |
| Beam 2 |
| Beam 3 |
| Beam 4 |
| Beam 5 |
| Beam 6 |
| Beam 7 |
| Beam 8 |
| Beam 9 |

Frame number (SFN) 0

Frame number (SFN) 1

Frame number (SFN) 2

Frame number (SFN) 3

Frame number (SFN) 4

Slot (Slot) 0

Slot (Slot) 1

Slot (Slot) 2

Slot (Slot) 3

...

(Subcarrier spacing (SCS)= 120 kHz)

Slot (Slot) 79

Symbol (symbol)

| 0 |
| 1 |
| 2 |
| 3 |
| 4 |
| 5 |
| 6 |
| 7 |
| 8 |
| 9 |
| 10 |
| 11 |
| 12 |
| 13 |

Broadcast message

FIG. 7b

FIG. 7c

Time

SFN10
SFN9
SFN8
SFN7
SFN6
SFN5
SFN4
SFN3
SFN2
SFN1
SFN0

BH dwell time 10 ms

BH cycle periodicity 40 ms

BH dwell time 10 ms

BH cycle periodicity 40 ms

BH dwell time 10 ms

```
┌──────────────┐                          ┌──────────────┐
│      UE      │                          │ Base station │
└──────┬───────┘                          └──────┬───────┘
```

┌─────────────────────────────────┐
│ Receive a broadcast message, and select │   ╱ 801
│ a random access resource in an uplink │
│ BH dwell time to initiate random access │
└─────────────────────────────────┘

Send a preamble based on the        802
random access resource               ╱

┌─────────────────────────┐        ┌──────────────────────────────┐ 803
│ Delay starting an RAR receive │ 805 │ Determine, based on an RO location │ ╱
│ window based on an RAR   │  ╱   │ and the preamble, a beam position in │
│ window delay start amount │      │ which the UE is located │
└─────────────────────────┘        └──────────────────────────────┘

┌──────────────────────────────┐ 804
│ Select a closest uplink BH dwell time │ ╱
│ from an available downlink BH dwell │
│ time of the beam position determined │
│ by the base station, to send an RAR │
└──────────────────────────────┘

┌────────────────────────────────────────┐
│ A time at which a PDSCH carrying the RAR is │
│ received ends in a slot n; and if an uplink slot │
│ $n+K_2+\Delta+Koffset$ is in the uplink BH dwell time, the │  ╱ 806
│ UE sends Msg3 in the uplink slot; or if an uplink │
│ slot $n+K_2+\Delta+Koffset$ is not in the uplink BH dwell │
│ time, the UE sends Msg3 in an uplink BH dwell │
│ time after the uplink slot $n+K_2+\Delta+Koffset$ │
└────────────────────────────────────────┘

┌──────────────────────────────┐ 807
│ After Msg3 sent by the UE is received, send │ ╱
│ a contention resolution message in a closest │
│ available downlink BH dwell time of the │
│ beam position in which the UE is located │
└──────────────────────────────┘

┌────────────────────────────────────────┐
│ A time at which Msg4 is received ends in a slot m; │
│ and if an uplink slot $m+K_1+Koffset$ is in the uplink │
│ BH dwell time, a HARQ message of Msg4 is sent in │  ╱ 808
│ the uplink slot; or if an uplink slot $m+K_1+Koffset$ is │
│ not in the uplink BH dwell time, a HARQ message │
│ of Msg4 is sent in an uplink BH dwell time after the │
│ uplink slot $m+K_1+Koffset$ │
└────────────────────────────────────────┘

FIG. 8a

FIG. 8b

FIG. 9a

Downlink

BH dwell time

| | | SFN0 |
| --- | --- | --- |
| SSB | | |
| Beam 0 | | |
| SSB | | |
| Beam 1 | | |
| SSB | | SFN1 |
| Beam 2 | | |
| SSB | | |
| Beam 3 | | |
| SSB | | |
| Beam 4 | | SFN2 |
| SSB | | |
| Beam 5 | | |
| SSB | | |
| Beam 6 | | |
| SSB | | SFN3 |
| Beam 7 | | |
| SSB | | |
| Beam 8 | | |
| SSB | | |
| Beam 9 | | |
| SSB | | SFN4 |
| Beam 10 | | |
| SSB | | |
| Beam 11 | | |
| SSB | | SFN5 |
| Beam 12 | | |
| SSB | | |
| Beam 13 | | |

...

FIG. 9b

FIG. 9c

FIG. 10a

EP 4 439 995 A1

FIG. 10b

EP 4 439 995 A1

Dynamic scheduling quantity
N_scheduling

State time T_start

State time T_start

Beam
dwelling in
dynamic
scheduling

Dwell time
T_length

Beam
dwelling in
a plurality
of times of
dynamic
scheduling

Dwell time T_length

BH dwell time

Time/Time

BH cycle periodicity

With beam
illumination

Without beam
illumination

FIG. 11a

FIG. 11b

Transceiver unit 1202

Processing unit 1201

Communication apparatus

FIG. 12

130

Transceiver 1310

Processor 1320

1340

1330

Memory

FIG. 13

Chip

Logic circuit 1401

Interface 1402

FIG. 14

<div align="center">

**INTERNATIONAL SEARCH REPORT**

</div>

| International application No. |
|---|
| **PCT/CN2022/135098** |

**A. CLASSIFICATION OF SUBJECT MATTER**

H04B7/06(2006.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CJFD, CNTXT, ENTXT, ENTXTC, WPABS: 保持时长, 保持时间, 波束, 波束成型, 波束成形, 波束赋型, 波束赋形, 持续时长, 持续时段, 持续时间, 交换, 偏移, 时分复用, 跳, 跳波束, 跳跃, 跳跃波束, 跳跃周期, 卫星, 选择, 周期, 周期波束, 驻留时长, 驻留时段, 驻留时间, 转换, BEAM, BEAMFORMING, BH, BWP, TIME DURATION, DWELL, HOPPING, TIME DIVISION MULTIPLEXING, LENGTH OF RESIDENCE

**C. DOCUMENTS CONSIDERED TO BE RELEVANT**

| Category* | Citation of document, with indication, where appropriate, of the relevant passages | Relevant to claim No. |
|---|---|---|
| X | CN 111835409 A (NANJING UNIVERSITY OF POSTS AND TELECOMMUNICATIONS; NANJING WEIXING COMMUNICATION TECHNOLOGY CO., LTD.) 27 October 2020 (2020-10-27) description, paragraphs 28-72 | 1-4, 8-12, 16-20, 24-28, 32-38 |
| X | US 2020313760 A1 (AIRBUS DEFENCE & SPACE LTD.) 01 October 2020 (2020-10-01) description, paragraphs 34-53 | 1-4, 8-12, 16-20, 24-28, 32-38 |
| A | CN 113258977 A (HUAWEI TECHNOLOGIES CO., LTD.) 13 August 2021 (2021-08-13) entire description | 1-38 |
| A | CN 113709880 A (ARMY ENGINEERING UNIVERSITY OF PLA) 26 November 2021 (2021-11-26) entire description | 1-38 |
| A | US 2017288769 A1 (VIASAT INC.) 05 October 2017 (2017-10-05) entire description | 1-38 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 February 2023** | **10 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| | International application No. |
|---|---|
| | **PCT/CN2022/135098** |

**C. DOCUMENTS CONSIDERED TO BE RELEVANT**

| Category* | Citation of document, with indication, where appropriate, of the relevant passages | Relevant to claim No. |
|---|---|---|
| A | US 2018006370 A1 (SPACE SYSTEMS/LORAL, LLC.) 04 January 2018 (2018-01-04) entire description | 1-38 |
| X | 张晨; 张更新; 王显煜 (ZHANG, Chen; ZHANG, Gengxin; WANG, Xianyu). "基于跳波束的新一代高通量卫星通信系统设计 (Design of Next Generation High Throughput Satellite Communication System based on Beam-Hopping)" 通信学报 *(Journal on Communications)*, Vol. 41, No. 07, 31 July 2020 (2020-07-31), sections 4.1, 5.2 and 6.2 | 1-4, 8-12, 16-20, 24-28, 32-38 |

Form PCT/ISA/210 (second sheet) (July 2022)

**INTERNATIONAL SEARCH REPORT**
Information on patent family members

International application No.

**PCT/CN2022/135098**

| Patent document cited in search report | | | Publication date (day/month/year) | Patent family member(s) | Publication date (day/month/year) |
|---|---|---|---|---|---|
| CN | 111835409 | A | 27 October 2020 | None | |
| US | 2020313760 | A1 | 01 October 2020 | None | |
| CN | 113258977 | A | 13 August 2021 | None | |
| CN | 113709880 | A | 26 November 2021 | None | |
| US | 2017288769 | A1 | 05 October 2017 | None | |
| US | 2018006370 | A1 | 04 January 2018 | None | |

Form PCT/ISA/210 (patent family annex) (July 2022)

**EP 4 439 995 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111567786